(19) Europäisches Patentamt
European Patent Office
Office européen des brevets

(11) EP 0 784 641 B1

(12) **EUROPEAN PATENT SPECIFICATION**

(45) Date of publication and mention of the grant of the patent:
**02.01.2002 Bulletin 2002/01**

(21) Application number: **95937356.4**

(22) Date of filing: **03.10.1995**

(51) Int Cl.[7]: **C08G 18/42**, C08G 18/66, C08G 18/12, C08G 18/08, C08G 18/61, C08G 18/62, C08G 18/50, C08G 18/40, C09D 175/04
// (C09D175/04, 133:00)

(86) International application number:
**PCT/US95/12812**

(87) International publication number:
**WO 96/10595 (11.04.1996 Gazette 1996/16)**

(54) **REACTIVE TWO-PART POLYURETHANE COMPOSITIONS AND OPTIONALLY SELF-HEALABLE AND SCRATCH-RESISTANT COATINGS PREPARED THEREFROM**

REAKTIVE, ZWEITEILIGE POLYURETHANZUSAMMENSETZUNGEN, SOWIE DARAUS HERGESTELLTE GEGEBENENFALLS SELBSTHEILENDE UND KRATZFESTE BESCHICHTUNGEN

COMPOSITIONS REACTIVES DE POLYURETHANNE EN DEUX PARTIES ET EVENTUELLEMENT REVETEMENTS PRESENTANT UNE AUTOREGENERATION DE LA FISSURE ET UNE RESISTANCE AU RAYAGE PREPARES A PARTIR DE CES COMPOSITIONS

(84) Designated Contracting States:
**DE ES FR GB IT NL SE**

(30) Priority: **04.10.1994 US 317853**

(43) Date of publication of application:
**23.07.1997 Bulletin 1997/30**

(73) Proprietor: **MINNESOTA MINING AND MANUFACTURING COMPANY**
**St. Paul, Minnesota 55133-3427 (US)**

(72) Inventor: **HO, Chia-tie**
**Woodbury, MN 55125 (US)**

(74) Representative: **VOSSIUS & PARTNER**
**Siebertstrasse 4**
**81675 München (DE)**

(56) References cited:

| | |
|---|---|
| **EP-A- 0 358 979** | **EP-A- 0 458 742** |
| **WO-A-86/02655** | **DE-A- 3 903 804** |
| **DE-A- 4 226 243** | **DE-A- 4 226 270** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 784 641 B1

## Description

The present invention relates to water-based and non-water based two-part reactive polyurethane compositions. The invention also relates to particular compositions that upon cure exhibit high damping character, excellent scratch-resistance, excellent mar-resistance, and self-healing characteristics. The invention also relates to a novel polyurethane prepolymer useful therein. The invention also relates to the cured coatings prepared from the novel compositions.

Solvent-based two-part reactive polyurethane (PUR) compositions have been known for their excellent performance in industry for many years. However, the increasing demand on industry to reduce solvent emissions has limited the use of these solvent-based PUR compositions significantly. Furthermore. these compositions essentially have no distinct self-healing characteristics at room temperature (no self-healing in 3-7 days at 25°C). There are no known water-based 2-part or 1-part polyurethane compositions. One of the alternatives that is being widely used to reduce volatile organic compounds (VOC) is a one-part water-based slightly crosslinked polyurethane-urea dispersion. This type of water-based polyurethane-urea dispersion can be further crosslinked by using a polyaziridine, a melamine, an epoxy, a metal complex (zinc or zirconium), or a multi-functional carbodiimide. The additional crosslinking, accomplished via carboxyl functional groups, is low. Coatings made from this type of dispersion, thus, typically demonstrate a lack of the stability. As a result, the outdoor durability and weatherability as well as solvent-, water-, and chemical-resistance of this insufficiently crosslinked water-based 1-part polyurethane-urea is inferior to the solvent-based 2-part reactive PUR systems. Moreover, the known large urea content has a great tendency to cause the resultant coating to yellow.

Investigators have attempted to overcome the short comings of conventional water-based polyurethane-urea dispersions in several ways (i.e., by increasing crosslinking and decreasing urea content). So far, the attempts have not been completely successful.

The following are methods of making 1-part water-based polyurethane-urea compositions, none of which are self-healing.

A first method is to prepare highly crosslinked (and thereby potentially thermally stable) NCO-terminated polyurethane prepolymers in a limited amount of organic solvent and then chain-extend the prepolymers with a diamine while dispersing into water. The disadvantage of this first method is that the solution viscosity of this type of dispersion increases very rapidly during the dispersing step and most of the time a poor dispersion (along with a tendency to form large micelles) results and gelation of the dispersion can occur.

A second method to develop a thermally stable water-based system involves the use of a poly-functional amine chain extender while dispersing an NCO-terminated polyurethane prepolymer into water. Again, the problems encountered are the same as those encountered in the first method.

A third method of obtaining thermally stable water-based polymer systems is described in EP-A-469389. This third method demonstrates the co-reaction of isocyanate functional materials with hydroxyl functional materials and water. The reaction product, though it demonstrates an increasing thermal stability, is, as indicated above, a polyurethane-urea system. Polyurethane-urea systems have a number of disadvantages, including a tendency to yellow over time.

Thus, although water-based polyurethane-ureas exist, there are no known water-based polyurethanes. Polyurethane-ureas are inferior to polyurethanes due to their poorer thermal stability, outdoor durability, and weatherability as well as their tendency to yellow.

A need thus exists for a water-based polyurethane composition. A need also exists for non-aqueous-based polyurethane compositions which can provide improved properties compared to known materials. The above-mentioned problems have been solved by the subject-matter of Claim 1. Further embodiments are disclosed in Claims 6, 8, 9 and 11. We have discovered a novel water-based reactive 2-part polyurethane composition with low volatile organic compound (VOC) content [i.e., typically less than 10% by weight VOC based upon the total weight of the 2-part system (Part A plus Part B)]. The polyurethane prepared therefrom has a high crosslink density and good thermal stability. The water-based reactive 2-part PUR system upon combination and cure provides a PUR having mechanical and thermal properties similar to those of a solvent-based reactive two-part PUR system. The present invention contains water and preferably less than 10% coalescing organic solvent based upon the total weight of the 2-part system, whereas conventional solvent-based PURs contain 35% to 75% organic solvent.

One aspect of the present invention provides an aqueous dispersion of a multi-hydroxyl functional urethane prepolymer and/or various water soluble and/or water emulsifiable and/or water dispersible hydroxyl containing material (s), which is "Part A" of the water-based reactive 2-part polyurethane system of the invention.

Part A

For the aqueous-based compositions of the invention, Part A is an aqueous composition (typically a dispersion) comprising

(a) optionally a urethane prepolymer, wherein said prepolymer has:

(i) a sufficient number of carboxylic acid functional groups such that the acid number of the prepolymer ranges from 10 to 100;
(ii) optionally a segment(s) selected from polyalkyl siloxane diol segment(s), fluorinated-polyether diol segment (s), fluorinated-polyester diol segment(s), and combinations thereof;
(iii) an average hydroxyl functionality of the prepolymer of 1.85 to 2.7;
(iv) a hydroxyl equivalent-weight of the prepolymer in the range of 500 to 5000;

(b) optionally a first acrylic polymer having at least one hydroxyl functional group and optionally 1 or more carboxyl functional groups such that said first acrylic polymer has an acid number in the range of 0 to 150;
(c) optionally a second acrylic polymer free of hydroxyl functionality and optionally having 1 or more carboxyl functional groups, wherein said second acrylic polymer has an acid number in the range of 0 to 150;
(d) optionally a first compound selected from polyalkylsiloxane diols, fluorinated-polyether diols, fluorinated polyester diols, and mixtures thereof, said first compound having a hydroxyl equivalent weight in the range of 200 to 2000;
(e) optionally a second compound selected from diols and polyols wherein said second compound optionally has one or more pendant carboxyl functional groups;
(f) water;
(g) optionally a surfactant; and
(h) optionally an organic coalescing solvent in an amount of up to 10% by weight based upon the total weight of Part A;

wherein at least one of (a) or (d) is present, provided that when (d) is absent then (a) must contain segment(s) (ii); wherein (a) to (e) are water soluble and/or water emulsifiable and/or water-dispersible;
and, wherein not greater than 35 weight percent total of segment(s) of element (a)(ii) plus compound(s) of element (d) are present based upon the total solids content of Part A.

Part B

For the aqueous-based compositions of the invention, Part B is a water-soluble and/or water emulsifiable and/or water-dispersible composition which comprises:

(1) a crosslinker selected from polyisocyanates, blocked polyisocyanates, and mixtures thereof; and
(2) optionally a coalescing solvent in an amount of up to 25% by weight based upon the total weight of Part B;

wherein the NCO:OH ratio of Part B to Part A ranges from 1:1 to 1.15:1.

Part A and Part B for the non-aqueous-based compositions of the invention are described below. For both the aqueous-based and non-aqueous-based compositions of the invention ,Part A is curable in the presence of blocked polyisocyanate crosslinker by application of heat or the presence of polyisocyanate crosslinker under staged curing conditions to obtain PURs with high crosslink density which is usually required to yield cured systems that exhibit thermal stability.

For the aqueous-based systems of the invention,Part A preferably comprises a combination of components selected from:

(a), (e), (f), (g), (h);
(a), (b), (c), (f), (g), (h); and
(a), (b), (f), (g), (h), under the above-mentioned provision.

Furthermore a particular reactive 2-part crosslinkable polyurethane system is provided which exhibits high damping, excellent mar-resistance, excellent scratch-resistance, and excellent self-healability upon cure which can be prepared from non-aqueous-based 2-part systems of the invention and certain aqueous-based compositions of the invention. The thermosetting coatings of the invention would not be expected to have self-healing properties because in general they are stiff and highly crosslinked materials. It is theorized that the high damping PUR of the invention prepared from this particular 2-part system of the invention can store the energy that may be applied to the PUR surface and use the stored energy to reconfigure or to overcome the rotational or vibrational strain barriers of the twisted and/or distorted polymer backbones and/or side-chains so as to result in a thermodynamically stable configuration or microstructure. This phenomenon is referred to as "self-healability" (which is measured according to Test "E" in the Examples). According to the test results discussed infra, the larger the damping factor of the PUR, the faster and easier the scratched surface can self-heal. However, the test results also indicate that other factors, such as the PUR's elastomeric properties (storage modulus), the ease of chain slippage (storage modulus), the glass transition temperature range, test temperature, and the degree of crosslink density, may also play an important role in the self-healing process and provide a so-called synergistic effect.

For the aqueous-based composition of the invention to demonstrate self-healability and for the self-healable non-aqueous-based composition of the invention, Part A must comprise 2 to 35 weight percent total of prepolymer segment(s) of element (a)(ii) plus water soluble and/or water emulsifiable and/or water dispersible first compound(s) of element (d) based upon the solids content of Part A in order for the cured PUR to possess excellent scratch- resistance and self-healability. (Part A may comprise just (a)(ii), just (d), or both (a) and (d) as long as the total weight falls within the indicated range). If Part A comprises less than 2 weight percent total of segment(s) of element (a)(ii) plus compounds of element (d) based upon the total solids content of Part A, good self-healability and scratch-resistance will not be obtained. Part A preferably comprises 2 to 20 weight percent total of (a)(ii) and (d) for the best self-healability, and outdoor durability. If Part A comprises greater than 35 weight percent total of (a)(ii) and (d), the resulting PUR may not be transparent, may have poor outdoor durability, and may have high porosity.

For non-aqueous-based compositions of the invention, Part A is a non-aqueous composition comprising:

(a) optionally a urethane prepolymer, wherein said prepolymer has:

(i) optionally carboxylic acid functional groups such that the acid number of the prepolymer ranges from 0 to 100;
(ii) optionally a segment(s) selected from polyalkyl siloxane diol segment(s), fluorinated-polyether diol segment (s), fluorinated-polyester diol segment(s), and combinations thereof;
(iii) an average hydroxyl functionality of the prepolymer of 1.85 to 2.7;
(iv) a hydroxyl equivalent-weight of the prepolymer in the range of 500 to 5000;

(b) optionally a first acrylic polymer having at least
(c) optionally a second acrylic polymer free of hydroxyl functionality and optionally having 1 or more carboxyl functional groups, wherein said second acrylic polymer has an acid number in the range of 0 to 150;
(d) optionally a first compound selected from polyalkylsiloxane diols, fluorinated-polyether diols, fluorinated polyester diols, and mixtures thereof said first compound having a hydroxyl equivalent weight in the range of 200 to 2000;
(e) optionally a second compound selected from diols and polyols wherein said second compound optionally has one or more pendant carboxyl functional groups;
(f) optionally a nonionic surfactant; and
(g) an organic solvent; and wherein at least one of the following elements is present: element (a) having a segment (ii); element (d);

wherein (a) to (e) are organic solvent soluble and/or organic solvent dispersible; and
wherein 2 to 35 weight percent total of segment(s) of element (a) (ii) plus compound(s) of element (d) are present based upon the total solids content of Part A; and Part B is a non-aqueous organic solvent soluble and/or organic solvent dispersible composition which comprises:

(1) a crosslinker selected from polyisocyanates, blocked polyisocyanates and mixtures thereof; and
(2) optionally an organic solvent.

The NCO:OH ratio of Part B to Part A ranges from 0.95:1 to 1.07:1.

For the non-aqueous-based systems of the invention, Part A preferably comprises a combination of components selected from: (b), (d), (e), (f), (g); (a), (b), (e), (f), (g); and (a), (b), (d), (e), (f), (g), with the above provision.

The present invention also provides a novel urethane prepolymer useful in the 2-part reactive water-based PUR system. A preferred version of the prepolymer surprisingly can be used to provide a PUR having excellent scratch-resistance and self- healability.

The novel urethane prepolymer has

(a) a sufficient number of carboxylic acid functional groups such that the acid number of the prepolymer ranges from 10 to 100;

(b) a segment(s) selected from polyalkyl siloxane diol segment(s), fluorinated-polyether diol segment(s), fluorinated-polyester diol segment(s), and combinations thereof;
(c) an average hydroxyl functionality of 1.85 to 2.7; and
(d) a hydroxyl equivalent weight in the range of 500 to 5000.

Typically, the prepolymer comprises 0.1 to 35 weight percent of the segment of element (b), most preferably 2 to 20 weight percent, based upon the total weight of the prepolymer, in order to provide a prepolymer which can yield a PUR with good scratch-resistance and self-healability.
The invention also relates to several methods of preparing the cured polyurethane of the invention from aqueous-based compositions of the invention. The first method relates to the use of an unblocked polyisocyanate crosslinker. The second and third methods relate to the use of blocked polyisocyanate crosslinkers.
A first method comprises the steps of:

(I) combining Part A and Part B to form a mixture, wherein the crosslinker of Part B is selected from polyisocyanates (unblocked) and mixtures thereof;
(II) coating the mixture on a substrate;
(III) exposing the coated substrate to a temperature high enough to evaporate at least 90% by weight of the water present in the mixture but low enough so as not to initiate reaction between water and isocyanate groups present on the polyisocyanate;
(IV) curing the coating by a step selected from:

(1) exposing the coated substrate to a temperature high enough to cure the coating until the coating is cured but not so high as to degrade the substrate;
(2) exposing the coated substrate to a temperature sufficient to partially cure the coating to a tack-free state without dcgrading the substrate, followed by exposure to a lower temperature at which it is still capable of being cured until the coating is cured, wherein Part A and Part B are defined as in claim 1 and the NCO:OH ratio for this method is 1:1 to about 1.15:1.

A second method comprises the steps of:

(I) combining Part A and Part B as defined in claim 1 to form a mixture, wherein the crosslinking agent in Part B is selected from blocked polyisocyanates and mixtures thereof;
(II) coating the mixture on a substrate;
(III) exposing the coated substrate to a temperature sufficient to deblock the blocked polyisocyanate without degrading the substrate; and
(IV) exposing the coated substrate to a temperature sufficient to cause curing of the coating without degrading the substrate until the coating is cured.

The NCO:OH ratio for this method is 1:1 to 1.15:1, preferably 1:1 to 1.1:1.
A third method comprises the steps of:

(I) combining Part A and Part B as defined in claim 1 to form a mixture, wherein the crosslinking agent is selected from blocked polyisocyanates and mixtures thereof;
(II) coating the mixture on a substrate;
(III) exposing the coated substrate to a temperature sufficient to evaporate at least about 90% of the water present in the mixture but too low to deblock the blocked isocyanate crosslinker; and
(IV) exposing the coated substrate to a temperature sufficient to deblock the blocked polyisocyanate crosslinker and cure the coating, without degrading the substrate, until the coating is cured.

The NCO:OH ratio for this method is 1:1 to 1.15:1, preferably 1:1 to 1.1:1.
The present invention also provides the curable composition which is Part A.
The term "water-based" as used herein refers to a composition that is "water soluble and/or water emulsifiable and/or water dispersible".
The term "organic solvent-based" as used herein refers to a composition that is "organic solvent soluble and/or organic solvent dispersible".
The term "self healing" as used herein is defined in Test E.
FIG. I illustrates the Fourier Transform Infrared (FTIR) absorption band or spectrum of the Comparative Examples 15, 16, 20 and 21.

FIG. 2 illustrates the absence of the FTIR absorption shoulder of H-bonded urea linkage in Examples 11-13 of the present invention.
FIG. 3 illustrates the Differential Scanning Calorimetry (DSC) thermograms of Comparative Examples 4, 5, 20 and 21.
FIG. 4 illustrates the DSC thermograms of Examples 11-13 of the present invention.
FIG. 5-12 illustrate the thermomechanical properties of the Comparative Examples 20, 4, 5, 15, 16, 17, 18, and 19, respectively.
FIG. 13 illustrates the storage modulus of Examples 11-13 of the present invention and Comparative Examples 4, 5, 15, 16, 20 and 21 as a function of temperature measured by using a Dynamic Mechanical Thermal Analyzer.
FIG. 14 illustrates the Tan (δ) of Examples 11-13 of the present invention and Comparative Examples 4. 5, 15, 16, 20 and 21 as a function of temperature measured by using a Dynamic Mechanical Thermal Analyzer.
FIG. 15 illustrates the loss modulus of Examples 11-13 of the present invention and Comparative Examples 4, 5, 15, 16, 20 and 21 as a function of temperature measured by using a Dynamic Mechanical Thermal Analyzer.
FIG. 16-17 illustrates the thermomechanical properties of Examples 11-13 and 1-3, respectively of the present invention.

Part A.

The components of Part A may be combined in any order.
Typically.for an aqueous-based system the components are charged into a vessel in the following order: polyol (s) (typically in the form of an aqueous dispersion) and/or polyurethane prepolymer (typically in the form of an aqueous dispersion), optional surfactant, optional coalescing solvent optional catalyst, and water. (However, water may not be added at this point if it has been previously added as part of any of the aforementioned dispersions.)
Typically for a non-aqueous-based system the components are charged into a vessel in the following order - polyol(s) (typically in the form of an organic solvent solution) and/or polyurethane prepolymer (typically in the form of an organic solvent solution), optional surfactant, optional catalyst, and optional organic solvent. (However, optional organic solvent may not be added at this point if it has been previously added as part of any of the aforementioned dispersions.)

A.I

Urethane Prepolymer

Part A typically comprises 0 to 60 weight percent of urethane prepolymer, preferably 0 to 45 weight percent, most preferably 0 to 35 weight percent based upon the total weight of Part A.
The urethane prepolymer discussed supra useful in aqueous-based systems has an acid number of 10 to 100, preferably 10 to 50, most preferably 10 to 35, for more improved water resistivity. If the acid number is less than about 10, the prepolymer may disperse poorly in water. If the acid number is greater than 100 the prepolymer disperses easily in water but the resultant cured polyurethane formed from Parts A and B may also demonstrate poor water and/or moisture resistance.
The urethane prepolymer discussed supra useful in non-aqueous-based systems has an acid number of 0 to 100, preferably less than 50, most preferably less than 35, for more improved water resistivity. If the acid number is greater than 100 the resultant cured polyurethane formed from Parts A and B may also demonstrate poor water and/or moisture resistance.
For the prepolymers useful in both the aqueous-based systems and the non-aqueous-based systems the segment selected from polyalkyl siloxane diol segment(s), fluorinated-polyether diol segment(s), fluorinated-polyester diol segment(s), and combinations thereof is optional.
However, the segment is included in the novel prepolymer of the invention. Typically, each segment has an equivalent weight ranging from 200 to 2000. If the hydroxyl functionality is 2 or less (the prepolymer is linear), the segment(s) would be incorporated into the polymer chain backbone, internally and/or at a terminal position(s). If the hydroxyl functionality is greater than 2 (the prepolymer is branched or crosslinked), the segment(s) may be incorporated into the polymer backbone chain as in the linear case and/or grafted onto the polymer chain backbone, which grafted segment(s) may crosslink with other portions of the prepolymer. A prepolymer containing a certain amount of the segment provides a resultant cured polyurethane which "self-heals". Typically, the prepolymer comprises 0 to 35 weight percent of the segment (typically 0.1 to 35 weight percent, if included); preferably 2 to 20 weight percent, based upon the total weight of the prepolymer. If the prepolymer contains greater than 35 percent of the segment, the resultant cured PUR may be hazy due to incompabitibility between the low surface tension siloxane or fluorinated segments and other polymer segments or urethane linkages in the cured PUR and may have poor outdoor durability due to high

porosity caused by the siloxane. If the prepolymer contains less than 2 weight percent of the segment, the resultant cured PUR may not have sufficient scratch-resistance and self-healability (most likely due to a lack of polymer chain slippage) unless alkyl siloxane diols/and/or fluorinated diols/ are also included in Part A.

The urethane prepolymer has an average hydroxyl functionality of 1.85 to 2.7, preferably 2 to 2.5. If the hydroxyl functionality is less than 1.85 the resulting cured PUR prepared from the prepolymer may have poor thermal stability and/or poor outdoor durability. If the hydroxyl functionality is greater than 2.7, the prepolymer may disperse poorly in water. Depending upon the hydroxyl functionality, the prepolymer may be linear, branched, or crosslinked. If the hydroxyl functionality is 2 or less, the prepolymer will be linear. If the hydroxyl functionality is greater than 2, the prepolymer will be branched or crosslinked.

The prepolymer has a hydroxyl equivalent weight in the range of 500 to 5000, preferably 750 to 4000, most preferably 1000 to 3500. If the hydroxyl equivalent weight of the prepolymer is too high, the resulting cured PUR may be soft and it may have inferior thermal stability and/or outdoor durability. If the hydroxyl equivalent weight of the prepolymer is too low, the cured PUR formed therefrom may require a longer cure time or tack-free time, and the resulting cured PUR may be too stiff, brittle, or rigid.

The urethane prepolymer useful in Part A of the composition of the aqueous-based composition of the invention typically comprises the reaction product of:

(a) a diisocyanate;
(b) a carboxyl-functional diol having a hydroxyl equivalent weight in the range of up to 2000 and a sufficient number of carboxyl groups such that the diol has an acid number of less than 420;
(c) optionally a first compound selected from polyalkyl siloxane diols, fluorinated-polyether diols, fluorinated-polyester diols, and mixtures thereof, the first compound having a hydroxyl equivalent weight in the range of 200 to 2000;
(d) optionally a polymeric diol; and
(e) optionally a chain extender selected from diol chain extenders, triol chain extenders, and mixtures thereof; wherein 0 to 15 weight percent of triol chain extender is present based upon the total weight of the prepolymer; and

wherein the NCO:OH ratio of components from which the prepolymer is made ranges from 1:1.3 to 1:1.9, preferably 1:1.4 to 1:1.7.

The urethane prepolymer useful in Part A of the composition of the non-aqueous-based composition of the invention typically comprises the reaction product of:

(a) a diisocyanate;
(b) optionally a carboxyl-functional diol having a hydroxyl equivalent weight in the range of up to 2000 and a sufficient number of carboxyl groups such that the diol has an acid number in the range of 0.1 to 420;
(c) optionally a first compound selected from polyalkyl siloxane diols, fluorinated-polyether diols, fluorinated-polyester diols, and mixtures thereof, the first compound having a hydroxyl equivalent weight in the range of 200 to 2000;
(d) a polymeric dial: and
(e) optionally a chain extender selected from diol chain extenders, triol chain extenders, and mixtures thereof; wherein 0 to 15 weight percent of triol chain extender is present based upon the total weight of the prepolymer; and

wherein the NCO:OH ratio of components from which the prepolymer is made ranges from 1:1.3 to 1:1.9, preferably 1:1.4 to 1:1.7.

A.I.i.

Diisocyanates

The prepolymer is typically formed from 15 to 55 weight percent diisocyanate, preferably 15 to 45 weight percent, and most preferably 15 to 35 weight percent, based upon the total weight of the prepolymer.

Examples of diisocyanates useful in forming the urethane prepolymer include but are not limited to those selected from aliphatic diisocyanates, aromatic diisocyanates, and mixtures thereof. Aliphatic diisocyanates are preferred to avoid yellowing of the resultant cured polyurethane prepared from the prepolymer.

Examples of useful specific diisocyanates include but are not limited to those selected from 1,4-tetramethylene diisocyanate; 1,6-hexamethylene diisocyanate; 1,3-cyclohexane diisocyanate; 1,4-cyclohexane diisocyanate; 1,3-xylene diisocyanate; 1,4-xylene diisocyanate; tetramethylxylylene diisocyanate; isophorone diisocyanate; 1,12-dodecane diisocyanate; 2,4-diclyohexylmethane diisocyanate; 4,4'-trimethylhexane-1,6,-diisocyanate; 2-methylpentamethylene

diisocyanate; cyclobutane-1,3-diisocyanate; 2,4-diphenylmethane diisocyanate; 4,4'-diphenylmethane diisocyanste; 2,4-toluene diisocyanate: 2,6-toluene diisocyanate; 1,3-phenylene diisocyanate; 1,4-phenylene diisocyanale; napthalene-1,5-diisocyanate; diphenyl methane-2,4'-diisocyanate; and mixtures thereof.

A.I.ii.

Carboxyl-Functional Diol

The prepolymer is typically formed from 0.1 to 65 weight percent carboxyl-functional diol, preferably 0.1 to 55 weight percent, and most preferably 0.1 to 45 weight percent, based upon the total weight of the prepolymer.

The carboxyl-functional diol typically has a hydroxyl equivalent weight of up to 2000 (more typically 60 to 2000) and typically a sufficient number of carboxyl groups such that the diol has an acid number in the range of 20 to 420. If the hydroxyl equivalent weight is greater than 2000, a greater amount of chain extender would be required to provide a prepolymer which can be used to prepare a cured PUR with good thermal stability.

If the carboxyl-functional diol has a low acid number a greater amount of the diol should be used in preparing the prepolymer so that the prepolymer formed therefrom has the required carboxyl-functionality. If too little carboxyl-functional diol is included or if the acid number of the diol is less than 20, the prepolymer may have poor water dispersibility unless a large amount of carboxyl-functional diol and/or alternate carboxyl group source is added. If the acid number of the diol is greater than 420 and/or if too much carboxyl-functional diol is included, the resultant cured polyurethane may have poor water-resistance.

A.I.iii.

Alkyl Siloxane Diols and Fluorinated Diols

Compounds which may optionally be used in preparing the prepolymer useful in Part A of the invention and which are required to form the novel polymers of the invention include those selected from polyalkyl siloxane diols, such as ethylene oxide-terminated polydimethyl siloxane, propylene oxide-terminated polydimethyl siloxane, such as

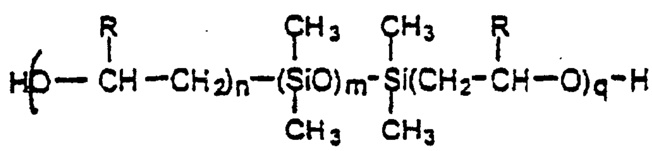

wherein R is independently selected from the group consisting of -H and -$CH_3$ and n=1 or greater, q = 1 or greater, m = 2-25, etc.; fluorinated polyether diols such as

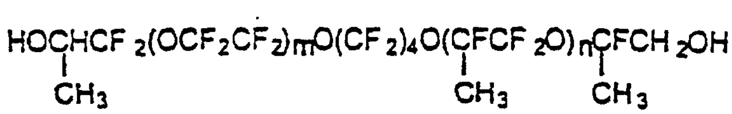

wherein m and n are each equal to 3, and the nominal molecular weight is about 1300, $HOCH_2CF_2O(CF_2CF_2O)_m(CF_2O)_nCH_2OH$, wherein the ratio of m/n is about 0.8 and the nominal molecular weight is about 2000, etc.; and fluorinated polyester diols.

The prepolymer is typically formed from 0 to 35 weight percent of the aforementioned compounds, typically 0.1 to 35 weight percent if included, preferably 2 to 20% weight percent, based upon the total weight of the prepolymer. If too much is included, the resultant cured PUR prepared from the prepolymer may be hazy due to incompatibility between the low surface tension siloxane or fluorinated segments and other polymer segments or urethane linkages in the cured PUR. Also the cured PUR may show poor outdoor durability due to high porosity caused by siloxane. If too little is included, the resultant cured PUR may not be self-healing unless additional compound is added to Pan A.

A.I.iv

Polymeric Diols and Diol/Triol Chain Extenders

The polyurethane prepolymer may optionally have incorporated therein a polymeric diol and/or triol chain extender and/or diol chain extender. To achieve desired properties, the following should be considered. If the equivalent weight of the polymeric diol is large (4000 or greater, for example), chain extender may be required. If the equivalent weight of the polymeric diol is small (400 or less, for example), no chain extender may be necessary.

If Part A comprises too much polymeric diol, the cured PUR prepared therefrom may be too soft. If Part A comprises too much chain extender, the cured PUR prepared therefrom may be too rigid for a particular application.

A.I.iv.a.

Polymeric Diols

The polymeric diols may be members of any of the chemical classes of polymeric diols used or proposed to be used in polyurethane formulations. In particular, they may be polyesters, polyesteramides, polyethers, polythioethers, polycarbonates, polyacetals or polyolefins. The equivalent weight of the polymeric diols ranges from 400 to 4000.

Polyester diols which may be used include but are not limited to those selected from hydroxyl-terminated reaction products of dihydric alcohols such as ethylene glycol, propylene glycol. diethylene glycol, neopentyl glycol, 1,4-butanediol, furan dimethanol, cyclohexane dimethanol or polyether diols, or mixtures thereof, with dicarboxylic acids or their ester-forming derivatives, for example succinic, glutaric and adipic acids or their methyl esters, phthalic anhydride or dimethyl terephthalate. Polyesters obtained by the polymerization of lactones, for example caprolactone, in conjunction with a diol may also be used. Polyesteramides may be obtained by the inclusion of aminoalcohols such as ethanolamine in polyesterification mixtures.

Polyether diols which may be used include but are not limited to products obtained by the polymerization of a cyclic oxide, for example ethylene oxide, propylene oxide or tetrahydrofuran or by the addition of one or more such oxides to difunctional initiators, for example water, ethylene glycol, propylene glycol, diethylene glycol, cyclohexane dimethanol, or Bisphenol A. Examples of specific useful polyethers include but are not limited to those selected from polyoxypropylene diols, poly(oxyethylene-oxypropylene) diols obtained by the simultaneous or sequential addition of ethylene and propylene oxides to appropriate initiators and polytetramethylene ether glycols obtained by the polymerization of tetrahydrofuran.

Polycarbonate diols which may be used include but are not limited to products obtained by reacting dials such as 1,3-propanediol, 1,4-butaxiediol, 1,6-hexanediol. diethylene glycol or tetraethylene glycol with diaryl carbonates, for example diphenyl carbonate, or with phosgene.

Polyacetal diols which may be used include but are not limited to those prepared by reacting glycol or hexanediol with formaldehyde. Suitable polyacetals may also be prepared by polymerizing cyclic acetals.

Suitable polyolefin diols include but are not limited to hydroxy-terminated butadiene homopolymers and copolymers.

The prepolymer is typically formed from 0 to 70 weight percent of a polymeric diol, preferably 0 to 55 weight percent, more preferably 0 to 45 weight percent, based upon the total weight of the prepolymer. The equivalent weight of the polymeric diol typically ranges from 400 to 4000 based on solid polymeric diol. If the equivalent weight is too high and/or too much polymeric diol is used, the resulting cured PUR may be too soft and have poor thermal stability.

If the equivalent weight of the polymeric diol is too low and/or too little polymeric diol is used, depending upon the other components used the resulting PUR may be too hard.

A.I.iv.b.

Diol and Triol Chain Extenders

A chain extender is optional in forming the prepolymer. Examples of suitable diol chain extenders useful herein include but are not limited to those selected from 1,2-cyclohexanediol; 1,2-propanediol; 1,3-propanediol; 1,4-butanediol; 1,6-hexanediol; 1,8-octanediol; 2,2,4-trimethyl-1,3-pentanediol; 2-ethyl-1,3-hexanediol; 1,2-hexanediol; 1,2-octanediol; 1,2-decanediol; and 2,2,4-trimethyl-1,3 pentanediol. Examples of suitable triol chain extenders include but are not limited to those selected from glycerine, trimethylol propane, trimethylol propane tripropoxylate, and trimethylolpropane triethoxylate. Other triols such as caprolactone-modified trimethylol propane supplied by Union Carbide Corporation under the tradenames of Tone™-301, -303 and -305 are also useful. The prepolymer is typically formed

from 0 to 15 weight percent of a triol chain extender, preferably 0 to 10 weight percent. If the prepolymer contains more than 15 weight percent triol chain extender, the PUR prepolymer may be difficult to disperse in water or in organic solvent.

The prepolymer is typically formed from 0 to 50 weight percent (more typically 0.1 to 50 weight percent, if used) of a diol chain extender, preferably 0 to 40 weight percent, most preferably 0 to 30 weight percent based upon the total weight of the prepolymer. If too much diol chain extender is present the cured PUR may be too hard. (i.e. the storage modulus would be too high. Storage modulus is discussed in infra.)

A.I.v.

Prepolymer Reaction

The prepolymer may be formed by combining the components, including an organic solvent to control the viscosity, in any order, in a reaction vessel with agitation. The reaction is typically conducted at a temperature of about 75 to about 105°C under inert conditions (such as a nitrogen blanket in the presence of a catalyst). Examples of suitable catalysts include diburyltin dilaurate, stannous octoate, dimethyltin dichloride, organotin carboxylate or mixtures thereof, Typically, 0 to 2000 ppm (more typically 1 to 2000 ppm), preferably 0 to 1000 ppm, most preferably 0 to 500 ppm, based upon the total weight of the reaction mixture (solvent plus other components) is used.

A.II.

Water/Solvent

For aqueous-based compositions,Part A comprises an amount of water, typically deionized water, to control viscosity. The water may be added to Part A by itself or in combination with another compound such as in the form of an acrylic polymer emulsion or a prepolymer dispersion. Viscosity requirements for Part A and more particularly for the combination of Part A and Part B, are dictated by the coating application, such as screen, spray, roll coating or brush coating. For example, spray and screen coating methods require a low viscosity.

For aqueous-based compositions, typically Part A comprises sufficient water such that the percent solids range for Part A is from 15 to 75%. If Part A contains too little water, the composition formed upon combination of Part A and Part B may be too thick for coating purposes. Typically sufficient deionized water should be present such that Part A has a Brookfield viscosity of 10 to 2000 cps, preferably 10 to 1000 cps.

For aqueous-based compositions, typically, the solids content of the combination of Parts A and B ranges from 15 to 65, preferably 15 to 50. Preferably the Brookfield viscosity of the combination of Parts A and B ranges from 10 to 2000 cps, more preferably 10 to 1000 cps.

In the non-aqueous-based compositions Part A comprises organic solvent typically such that the percent solids range for Part A is from 15 to 85%. If Part A contains no or insufficient organic solvent, the composition formed upon combination of Part A and Part B may be too thick for coating purposes. Typically Sufficient organic solvent should be present such that Part A has a Brookfield viscosity of 10 to 2000 cps, preferably 10 to 1000 cps.

Typically, the solids content of the combination of Parts A and B for a non-aqueous-based composition ranges from 15 to 85 percent, preferably 30 to 85 percent. Preferably the Brookfield viscosity of the combination of Parts A and B ranges from 10 to 2000 cps, preferably 10 to 1000 cps.

A.III

Surfactant

Part A may optionally further comprise a surfactant. Part A may comprise a sufficient amount of surfactant, if needed, such that a uniform coating or film results. Part A typically comprises 0 to 10 percent by weight of a surfactant based upon the total weight of Part A, (more typically 0.1 to 10 weight percent if included) preferably 0.1 to 5 percent by weight, most preferably 0.1 to 3 percent by weight, so as to obtain a final cured PUR with good water and/or moisture resistivity and good outdoor durability and weatherability. If too much surfactant is included, the resultant cured PUR may have poor moisture resistivity which may also result in poor outdoor durability. If too little surfactant is included, the mixture of Part A and Part B will not demonstrate sufficient surface wetting upon coating. The composition formed upon combination of Part A plus Part B typically comprises less than 10 weight percent surfactant based upon the total weight of Part A plus Part B, typically 0 to 8 weight percent (more typically 0.1 to 8 weight percent, if included). Surfactant serves to lower the surface tension and improve the coating coatability. The surface tension required depends upon the substrate to be coated.

Useful surfactants for aqueous-based compositions include but are not limited to those selected from anionic, nonionic, and cationic surfactants.

Useful anionic surfactants for aqueous-based compositions include but are not limited to those selected from alkylbenzenesulfonic acid Salts, sodium laurylbenzenesulfonate, sodium lauryinaphthalene sulfonate, sodium dioctyl sulfosuccinate, dioctyl phosphate salt, sodium oleate, sodium salt of semi-hard beef tallow, potassium oleate, potassium castor oil, sodium laurylalcohol sulfate, sodium polyacrylate, naphthalenesulfonic acid-formaldehyde condensate, sodium salt of polyoxyethylene octyl sulfate, sodium salt of polyoxyethylene octylphenyl sulfate, alkylnaphthalenesulfonic acid salts, dialkylsulfosuccinic acid salts, alkyl phosphate salts, fatty acid salts, higher alcohol sulfate salts, naphthalenesulfonic acid-formaldehyde condensates, polyoxyethylene sulfate salts, potassium fluoroalkyl carboxylate, ammonium perfluoroalkyl sulfonate or sodium fluoroalkyl sulfonate.

Examples of preferred anionic surfactants for aqueous-based compositions include those selected from potassium fluoroalkyl carboxylate, ammonium perfluoroalkyl sulfonate, and sodium fluoroalkyl sulfonate supplied by 3M under the tradenames of Fluorad™ FC-129, FC-99, and FC-100, respectively.

Useful nonionic surfactants for aqueous-based compositions include but are not limited to those selected from polyoxyethylene alkyl ethers, polyoxyethylene alkyl-phenyl ethers, polyoxyethylene acyl esters, sorbitan fatty acid esters, polyoxyethylene alkylamines, polyoxyethylene alkylamides, polyoxyethylene lauryl ether, polyoxyethylene cetyl ether, polyoxyethylene stearyl ether, polyoxyethylene oleyl ether, polyoxyethylene octylphenyl ether, polyoxyethylene nonylphenyl ether, polyethylene glycol laurate, polyethylene glycol stearate, polyethylene glycol distearate, polyethylene glycol oleate, oxyethylene-oxypropylene block copolymer, sorbitan laurate, sorbitan stearate, sorbitan distearate, sorbitan oleate, sorbitan sesquioleate, sorbitan trioleate, polyoxyethylene sorbitan laurate, polyoxyethylene sorbitan stearate, polyoxyethylene sorbitan oleate, polyoxyethylene laurylamine, polyoxyethylene laurylamide, laurylamine acetate, hard beef tallow propylenediamine dioleale, ethoxylated tetramethyldecynediol, fluoroaliphatic polymeric ester or polyether-polysiloxane copolymer.

Examples of preferred nonionic surfactants for aqueous-based compositions include but are not limited to those selected from ethoxylated tetramethyldecynediol available under the tradename Surfynol™ 440, 420, 465, and 485 from Air Products and Chemicals, fluorinated polymeric surfactants such as fluoroaliphatic polymeric ester available under the tradename Fluorad™ FC-430 from 3M, and polyether-polysiloxane copolymer available under the tradename of Foamex™ -800, -805, and -810 supplied by Tego Chemie Service USA.

Useful cationic surfactants for aqueous-based compositions include but are not limited to those selected from alkylamine salts, polyoxyethylene alkylamine salts, alkylamine acetates or fluoroalkyl quaternary ammonium iodide.

Examples of preferred cationic surfactants for aqueous-based compositions include but are not limited to those selected from fluoroalkyl quaternary ammonium iodide available under the tradename Fluorad™ FC-135 available from The 3M Company.

For non-aqueous-based compositions useful surfactants include nonionic surfactants. All nonionic surfactants are organic solvent soluble and/or organic solvent dispersible and thus useful in the nonaqueous-based compositions of the invention. Useful nonionic surfactants include but are not limited to those selected from cellulose derivatives such as: cellulose acetate, cellulose acetate butyrate, cellulose acetate propionate, cellulose acetate butyrate butanedioate which are available under the trade names of CAB-398-3, CAB-381-0.1, CAB-381-0.5, CAB-531.1, CAB-482-0.5, etc. supplied by Eastman Chemical. Examples of silicone nonionic surfactants are polyester modified polysiloxane polymers such as: BYK®-320 and 310 from BYK Chemie, polyether modified polysiloxanes such as: BYK®-306, 307, 321, 325, 331, and 344 from BYK Chemie or Tego® Glide 100, A-115, B-1484, Tego Flow 425 from Tego Chemie Service USA. Fluorinated materials such as : fluoroaliphatic polymeric esters (under the trade name of Fluorad® FC-430 and FC-431 from Minnesota Mining and Manufacturing Company) and amine perfluoroalkyl sulfonate (available under the trade name of Fluorad® FC-99), etc. are also useful nonionic surfactants. Other useful nonionic surfactants include those selected from silicone free acrylic polymers such as : Tego® Flow ZFS-460 from Tego Chemie Service USA, COROC®A-2201-M, A-620-A2, A-72-A260 and XA-4131-A2, and Modaflow® resin or Multiflow® resin from Monsanto.

A.IV.

Coalescing Solvents

For aqueous-based systems, Part A may optionally further comprise a coalescing solvent (typically an organic solvent) according to the present invention. The coalescing solvent preferably should not have any functional groups that would cause it to be reactive with the polyisocyanate crosslinker of Part B. Examples of such isocyanate reactive groups include amino groups, hydroxyl groups or carboxyl groups. One skilled in the art would be able to identify and distinguish functional groups that are reactive with isocyanate groups and those that are not.

Typically, a coalescing solvent would be used which has an evaporation rate of less than 0.5 (with n-butyl

acetate = 1). If the evaporation rate is above 0.5, the following problems may occur: the coalescing solvent may evaporate with the water during the curing steps after mixing Part A with Part B resulting in a poor film or coating (i.e. poorly textured and/or lacking clarity).

Examples of suitable coalescing solvents include but are not limited to those selected from N-methyl pyrrolidone, di-ethylene glycol butyl ether acetate, dimethyl formamide, diethylene glycol ethyl-ether acetate, ethylene glycol butyl ether acetate, Texanol™ 2,2,4-trimethyl-1,3-pentanediol mono(2-methyl propanoate) available from Eastman Chemical, ethylene glycol diacetate, and other similar solvents containing no isocyanate reactive groups. For aqueous-based systems, Part A should contain sufficient coalescing solvent, if necessary, such that good film forming characteristics of the composition formed from Parts A and B can be obtained. For aqueous-based systems, Part A comprises 0 to 10 weight percent coalescing solvent based upon the total weight of Part A, most preferably 0 to 6 percent. For environmental reasons, it is desired to use the smallest amount of coalescing solvents possible and still obtain smooth, consistent and transparent films or coatings.

A.V.

Acrylic Polymer

Part A of the two-part composition of the invention can optionally further comprise an acrylic polymer. The acrylic polymer can be added by itself or in a number of forms such as part of an aqueous emulsion or aqueous dispersion, for an aqueous-based composition or as part of an organic solvent premix for a non-aqueous-based composition. The acrylic polymers may or may not contain hydroxyl functionality. Acrylic polymers having hydroxyl functionality typically have a hydroxyl equivalent weight of 200 to 8000, preferably 200 to 5000. Acrylic polymers having no reactive hydroxyl groups form a blend with the resultant cured PUR, whereas acrylic polymers having reactive hydroxyl groups actually become reacted into the resultant cured PUR. The acrylic polymer may be added to improve gloss retention of the resultant cured PUR and decrease the time required for the coating to be tack-free.

Examples of useful acrylic polymers include but are not limited to those selected from homopolymers, copolymers, terpolymers, tetrapolymers, etc. of the following monomers: methylmethacrylate, n-butyl methacrylate, cyclohexyl methacrylate, isobutyl acrylate, methylacrylate, n-butyl acrylate, styrene, acrylic acid, methacrylic acid, hydroxyethylmethacrylate, hydroxypropyl-methacrylate, allyl alcohol propoxylate, hydroxyethylacrylate, 2-hydroxypropyl acrylate, 4-hydroxybutyl acrylate or mixtures thereof. Fluorinated acrylic monomers are also useful in making acrylic polymers useful in the present invention. Examples include 2,2,2-trifluoroethyl methacrylate; 2,2,2-trifluoroethyl acrylate or 2,2,3,3-tetrafluoropropyl acrylate.

Typically 0 to 65 percent by weight (more typically 0.1 to 65 percent by weight, if included) of hydroxyl functional acrylic polymer is included in Part A based upon the total weight of Part A, preferably 0 to 45 percent by weight, most preferably 0 to 30 percent by weight. Typically 0 to 45 percent by weight of hydroxyl free acrylic polymer is included in Part A based upon the total weight of Part A, preferably 0 to 35 percent by weight, most preferably 0 to 25 percent by weight. If too much acrylic polymer is included the resultant cured PUR may be hazy due to incompatibility of the PUR and the acrylic polymer, or the cured PUR may be too rigid or brittle.

A.VI.

First Compound

Water soluble and/or water emulsifiable and/or water dispersible First Compound

For aqueous-based compositions Part A typically comprises 0 to 35 percent by weight of the first compound, (more typically about 0.1 to about 35 percent, if included) preferably 2 to 20 percent by weight based upon the total weight of Part A.

The optional first compound useful in Part A is the same as those alkyl siloxane diols and fluorinated diols listed in Section A.I.iii.

Organic solvent soluble and/or organic solvent dispersible First Compound

For non-aqueous-based compositions, Part A typically comprises 0 to 35 percent by weight of the first compound, (more typically 0.1 to 35 percent, if included) preferably 2 to 20 percent by weight based upon the total weight of Part A. The optional first compound useful in Part A is the same as those alkyl siloxane diols and fluorinated diols listed in Section A.I.iii.

A.VII.

Second Compound

Water soluble and/or water emulsifiable and/or water-dispersible Second Compound

For the aqueous based compositions of the invention, second compounds selected from diols and polyols where the compound is optionally substituted with one or more carboxyl groups, may be included in Part A.

A specific example of a second compound is a water-soluble and/or water emulsifiable and/or water-dispersible polymeric diol. If too much polymeric diol is present the resulting cured PUR may be too soft and/or may have inferior outdoor durability and/or may have poor thermal stability.

Another example of a second compound is typically a water-soluble and/or water emulsifiable and/or water dispersible diol chain extender. If too much diol chain extender is included, the PUR may need longer cure time or tack-free time and higher cure temperature, and the resulting cured PUR may be too hard.

Another example of a second compound is a water-soluble and/or water emulsifiable and/or water dispersible polyol chain extender (having 3 or more hydroxyl groups). If too much polyol chain extender is present the resulting cured PUR may be too hard and not show distinct self healing due to high storage modulus.

Part A of the 2-part composition of the invention can optionally further comprise a melamine polyol as a water soluble and/or water emulsifiable and/or water dispersible second compound. Examples of useful melamine polyols include but are not limited to those selected from 1,3,5 triazine -2,4,6-triamine polymer with formaldehyde, methylated; 1,3,5-triazine-2,4,6-triamine polymer with formaldehyde, butylated and methylated; and urethane-modified melamine resins with hydroxyl functionalities (available from Cytec Industry under the tradenames of CYLINK™ HPC-100, BC-90, and HPC-75).

Part A typically comprises, 0 to 45 percent by weight of the second compound (more typically 0.1 to 45 percent if used) based on the total weight of Part A, preferably 0 to 35 weight percent, and most preferably 0 to 25 weight percent in order to provide a cured PUR having a Tg between -20°C to 50°C, Tan(δ) peaks height located at glass transition region larger than 0.9 and storage modulus at room temperature between $1.0 x 10^8$ - $9.9 x 10^8$ Pascals.

Organic Solvent Soluble and/or Organic Solvent dispersible Second Compound

For the non-aqueous-based compositions of the invention organic solvent-soluble and/or organic solvent dispersible compounds selected from diols and polyols where the compound is optionally substituted with one or more carboxyl groups, may be included in Part A.

A specific example of a second compound is an organic solvent-soluble and/or dispersible polymeric diol. If too much polymeric diol is present the resulting cured PUR may be too soft and/or may have inferior outdoor durability and/or may have poor thermal stability.

Another example of a second compound is typically an organic solvent-soluble and/or dispersible diol chain extender. If too much diol chain extender is included, the PUR may need longer cure time or tack-free time and higher cure temperature, and the resulting cured PUR may be too hard.

Another example of a second compound is an organic solvent-soluble and/or dispersible polyol chain extender (having 3 or more hydroxyl groups). If too much polyol chain extender is present the resulting cured PUR may be too hard and not show distinct self healing due to high storage modulus.

Part A of the 2-part composition of the invention can optionally further comprise a melamine polyol as a water soluble and/or water emulsifiable and/or water dispersible second compound. Examples of useful melamine polyols include but are not limited to those selected from 1,3,5 triazine-2,4,6-triamine polymer with formaldehyde, methylated; 1,3,5-triazine-2,4,6-triamine polymer with formaldehyde, butylated and methylated; and urethane-modified melamine resins with hydroxyl functionalities (available from Cytec Industry under the tradename of CYLINK™ HPC-100). For a non-aqueous-based composition, Part A typically comprises, 0 to 45 percent by weight of an organic solvent-soluble and/or dispersible second compound (more typically 0.1 to 45 percent if used) based on the total weight of Part A, preferably 0 to 35 weight percent, and most preferably 0 to 25 weight percent in order to provide a cured PUR having a Tg between -20°C to 50°C, Tan(δ) peaks height located at glass transition region larger than 0.9 and storage modulus at room temperature between $1.0 x 10^8$ - $9.9 x 10^8$ Pascals.

A.VIII.

Additives

Part A may optionally further comprise an additive including but not limited to those selected from flow control

agents, bubble control agents, free radical scavengers, ultraviolet light absorbers, fungicides, dyes, pigments, aluminum flakes, reaction inhibitors, pot life extenders, biocides or mixtures thereof.

Part A may optionally further comprise a catalyst. The function of the catalyst would be to catalyze the reaction of isocyanate groups present on the crosslinker contained in Part B and the hydroxyl groups present on components contained in Part A. Examples of catalysts include but are not limited to those selected from dibutyl tin dilaurate, stannous octoate, dimethyl tin dichloride, dibutyltin diacetate, organotin carboxylate, dibutyltin-di-2-ethylhexoate, dioctyltin carboxylate, organobismuth carboxylate, organomercurial carboxylate or mixtures thereof. It is theorized that catalyst enhancers such as tertiary amines may be added to the systems. For aqueous-based systems, one would have to be careful not to use too much catalyst so as not to encourage the isocyanate/water reaction. Typically, 0 to 0.1 percent by weight of a catalyst would be used based upon the total weight of Part A for aqueous-based systems. Typically 0 to 0.5 percent by weight of a catalyst would be used for non-aqueous-based compositions, based upon the total weight of Part A.

Part B

B.I.

Crosslinkers

Crosslinkers for Aqueous-based Systems

"Water-soluble and/or - dispersible and/or - emulsifiable polyisocyanate(s)" are prepared by chemically incorporating one or more hydrophilic groups and/or segments into the backbone of a polyisocyanate which can allow the polyisocyanate to be water soluble and/or - dispersible and/or - emulsifiable. Useful hydrophilic groups include sulfonate groups, tertiary amine groups, carboxylic acid functional groups, etc. Useful hydrophilic segments inlcude ethylene oxide segments or derivatives thereof.

The following patents teach methods of making water soluble and/or - dispersible and/or - emulsifiable polyisocyanates that would be useful according to the present invention: US-A-4,472,550; EP-A-516 277; US-A-5,075,370; EP-A-469 389; CA-A-2 082 785; CA-A-2 088 805; US-A-5,252,696.

Water-soluble and/or - dispersible and/or - emulsifiable polyisocyanates that are also useful in the present invention are water dispersible polymeric hexamethylene diisocyanates. Examples of suitable water-soluble and/or - dispersible and/or - emulsifiable polyisocyanate crosslinkers include but are not limited to those selected from Bahydrol™ XP-7007 aliphatic polyisocycanate (NCO Eq. Wt. = 250) and Bahydrol™ XP-7043 aliphatic polyisocyanate (NCO Eq Wt. = 220), both available from Miles, Inc.

Blocked polyisocyanates are prepared by the addition of a blocking agent to polyisocyantes thus forming an adduct with a comparatively weak bond. The weak bond breaks apart upon heating causing free polyisocyanate and blocking agent to re-generate. The free polyisocyanate can react with hydroxyl, amine or carboxyl groups from other compounds to form a thermally stable bonding. The commonly used blocking agents are oximes, caprolactam, and phenols. "Water-soluble and/or - dispersible and/or - emulsifiable blocked polyisocyanates" are prepared by chemically incorporating one or more hydrophilic groups and/or segments into the backbone of a blocked polyisocyanate so as to allow the blocked polyisocyanates to be water-soluble and/or dispersible and/or emulsifiable. The useful hydrophilic groups are carboxylic acid functional groups, tertiary amine groups, sulfonate groups, etc. The useful hydrophilic segments are ethylene oxide segments or ethylene oxide derivatives.

The following patents teach methods of making water-soluble and/or dispersible and/or emulsifiable blocked polyisocyanates that would be useful according to the present invention: US-A-4,522,851; US-A-4,895,921; US-A-4,098,933; and US-A-5,034,435.

An example of a specific water-soluble and/or dispersible and/or emulsifiable blocked-polyisocyanate that is also useful in the present invention is blocked 1,6-hexamethylene diisocyanate adduct supplied by Miles Inc. under the tradename of Bayhydrol™-116

Part B typically comprises 75 to 100 percent by weight crosslinker based upon the total weight of Part B.

Crosslinkers for Non-Aqueous-based Compositions

Any organic solvent soluble and/or organic solvent dispersible polyisocyante or blocked polyisocyantate can be used in the non-aqueous-based compositions of the invention. An example of unblocked polyisocyanate thereof is Desmodur™ N-3308, 3390, N-100, N-73, N-4370 available from Bayer, Luxate™ HT-2000, HB-9000, HB-3000 available from Onlin Chemical and Vestanate™ T-1890L, T-1890M, T-1890E available from HULS America. Inc. Examples of blocked polyisocyanate are Desmodur™ BL-3175A and BL-4165 available from Bayer, and Vestanat™ B-1370, VB-909IC and UB-1256IC available from HULS America, Inc.

Part B for solvent-based systems typically comprises 30 to 100 percent by weight crosslinker based upon the total weight of Part B.

B.II

Solvent

Solvents for Aqueous-based Systems

For aqueous-based systems, Part B may optionally comprise a solvent for reasons of viscosity control or as a dispersing aid. Part B typically comprises 0 to 25 percent by weight of a solvent based on the total weight of Part B, preferably 0 to 15 percent by weight, more preferably 0 to 10 percent by weight, and most preferably 0 to 6 percent by weight in order to keep the amount of solvent in the combination of Part A and Part B as low as possible or nonexistent.

Examples of suitable solvents include but are not limited to those coalescing solvents listed in Section A.IV. Preferred solvents include those selected from dimethyl-formamide, N-methyl pyrrolidone, diethylene glycol ethylether acetate, 2,2,4-trimemyl-1,3-pentanediol mono (2-methyl propanoate), and long chain ester solvents under the tradenames of Exxate™ -600, -700, -800 and -900 available from Exxon Chemicals.

If Part B contains too little solvent Part B may disperse poorly into Part A particularly if Part B contains a less hydrophilic polyisocyanate, whereas if Part B contains a more hydrophilic polyisocyanate less solvent is needed.

Solvents for Non-aqueous-based Systems

For non-aqueous-based systems, Part B may optionally comprise a solvent for reasons of viscosity control or as a dispersing aid. Part B typically comprises 0 to 70 percent by weight of a solvent based on the total weight of Part B, preferably 0 to 50 percent by weight, more preferably 0 to 30 percent by weight, and most preferably 0 to 25 percent by weight in order to keep the amount of solvent in the combination of Part A and Part B as low as possible or nonexistent.

Examples of useful solvents for non-aqueous-based compositions include but are not limited to those selected from the group consisting of acetone, methyl ethyl ketone, methyl propylketone, methyl n=amylketone, methyl isoamylketone, methyl isobutyl ketone, diisobutyl ketone, cyclohexanone, etc., and esters such as ethyl acetate, propyl acetate, butyl acetate, amyl acetate, methyl amylacetate, propylene glycol butyl ether acetate, di(ethylene glycol)butyl ether acetate, ethylene glycol diacetate, ethylene glycol ethyl ether acetate, diethylene glycol ethyl ether acetate, etc., and mixtures thereof. Other useful solvents include but are not limited to those selected from the group consisting of toluene, xylene, N-methyl pyrrolidone, dimethyl formamide, 1,1,1-trichloroethane, aromatic 100, aromatic 150, aromatic 200 and mineral spirits and mixtures thereof.

C.

Parts A and B Combined

C.I.

Amounts of Part A and Part B

For aqueous-based compositions, the NCO:OH ratio of the combination of Parts B and A ranges from 1:1 to 1.15:1 so that the resultant cured polymer is a polyurethane which based on FTIR curves has no observable urea peaks and which has good thermal stability and outdoor durability. Preferably, the NCO:OH ratio is 1:1 to 1.1:1. If too much Part B is added, the resultant polymer will be a polyurethane-urea which has a great tendency to yellow. If too little Part B is added, the resultant polymer may have low molecular weight and/or poor thermal stability and/or poor outdoor durability.

For non-aqueous-based compositions, the NCO:OH ratio of the combination of Parts B and A ranges from 0.95:1 to 1.07:1 so that the resultant cured polymer is a polyurethane which based on FTIR curves has no observable urea peaks and which has good thermal stability and outdoor durability. Preferably, the NCO:OH ratio is 1:1 to 1.05:1. If too much Part B is added, the resultant polymer will be a polyurethane-urea which has a great tendency to yellow. If too little Part B is added, the resultant polymer may have low molecular weight and/or poor thermal stability and/or poor outdoor durability.

C.II.

Properties of the Polyurethane Systems of the Invention

C.II.i.

Crosslink Density

The final cured PUR of the invention typically has a crosslink density of 10% to 80%, preferably 15% to 70%, and most preferably 15% to 60%. If the crosslink density is greater than 80%, the resultant PUR may be too hard or rigid. If the crosslink density is less than 15%, the resultant polymer may be too soft and may have poor thermal stability.

The crosslink density of the final cured polyurethane is calculated according to the following formula:

$$\text{Crosslink Density} = \frac{\text{weight of materials with functionalities of} \geq 3 \text{ from which the polyurethane is formed}}{\text{weight of the final cured polyurethane}} \times 100$$

For example, trimethylol propane (TMP), polyisocyanates, multihydroxyl acrylic polymers. and oligomers such as Joncryl™-800B, 802, 540,510, SCX-802, and 587 have hydroxyl functionalities of 3 or greater. Their weights would be included in the numerator in the above formula when calculating the crosslink density.

C.II.ii.

Storage Modulus

The final cured aqueous-based PUR of the present invention and, it is theorized, the non-aqueous-based PUR of the present invention typically has a storage modulus of $8.0 \times 10^7$ Pascals to $5.0 \times 10^9$ Pascals at room temperature (25°C), preferably $1.0 \times 10^8$ Pascals to $9.9 \times 10^8$ Pascals as measured by a dynamic mechanical thermal analyzer based on 20-50 microns thickness of film and 1.0 Hz frequency. If the storage modulus is greater than $9.9 \times 10^8$ Pascals at room temperature, the PUR is a glassy material which may be scratched easily. Moreover, the PUR may not exhibit distinct self-healing characteristics at room temperature due to its limited degree of freedom of the frozen polymer chains at glassy state. If the storage modulus is less than $1.0 \times 10^8$ Pascals at room temperature, the final cured PUR may have poor thermal stability and poor outdoor durability.

The final cured aqueous-based PUR of the present invention and, it is theorized, the nonaqueous-based PUR of the present invention typically has a storage modulus of $1.0 \times 10^6$ Pascals to $6.0 \times 10^7$ Pascals at 70°C as well as in the rubbery plateau region. If the storage modulus at 70°C is greater than $6.0 \times 10^7$ Pascals, the resultant cured PUR of the present invention may not have distinct self-healing characteristics at 70°C. It may require higher temperatures (such as 100°C to 125°C) to demonstrate self-healing. If the storage modulus is lower than $1.0 \times 10^6$ pascal at 70°C, the final cured PUR may have poor thermal stability and/or poor outdoor durability.

C.II.iii.

Glass Transition Temperature

The cured aqueous-based PUR of the invention and, it is theorized, the nonaqueous-based PUR of the present invention typically has a glass transition temperature (Tg) of -20°C to 100°C as measured by a Dynamic Mechanical Thermal Analyzer based on 25-50 microns of film thickness and 1.0 Hz of frequency, preferably -20°C to 80°C, and most preferably -20°C to 50°C. If the Tg is greater than 100°C, the resultant PUR may not have distinct self-healing characteristics at room temperature or higher temperatures (such as 100°C to 125°C) due to its highly limited degree of freedom of polymer chains resulting from a high crosslink density. If the Tg is greater than 80°C, the resultant PUR may not have distinct self-healing characteristics at room temperature. However, it may have self-healing characteristics at higher temperatures (such as 100°C to 125°C). If the Tg is greater than 50°C, the resultant PUR will show distinct self-healing characteristics at room temperature. However, it may require a longer time (such as 10 days, 15 days, or even 30 days) to demonstrate this property. If the Tg is less than -20°C, the resultant PUR may be too soft and/or it may have poor thermal stability and/or poor outdoor durability.

C.II.iv.

Damping Factor

The final cured aqueous-based PUR of the present invention and it is theorized the nonaqueous-based PUR of the present invention typically has a damping factor (i.e. the size of the Tan (δ) peak) located at glass transition region of greater than about 0.4 as measured by a Dynamic Mechanical Thermal Analyzer based on 25-50 microns of film thickness and 1 Hz of frequency, preferably greater than 0.7, most preferably greater than 0.9. The upper limit of the damping factor is typically not greater than 1.4. If the size of the Tan (δ) peak located at the glass transition region is less than 0.4, the cured PUR may not show self-healing characteristics at room temperature or higher temperatures (such as 100°C to 125°C) due to its relatively low damping characteristics. If the size of the Tan (δ) peak is less than 0.7, the resulting PUR may show a little self-healing characteristics at room temperature, and it may not show 100% recovery due to low damping characteristics. If the size of the Tan (δ) peak is between 0.7 and 0.9, the resultant PUR may show distinct self-healing characteristics to reach 100% recovery at room temperature. However, these self-healing characteristics may take a week to several weeks. If the size of the Tan (δ) peak is greater than 0.9, the resultant PUR may show relatively fast and distinct self-healing characteristics at room temperature (i.e. from a few hours to a week).

C.II.v.

Self-Healability

The self-healing materials of the present invention contain siloxane and/or fluorinated material segments. Due to the large differences in surface tensions and incompatibility between siloxane segments and polyurethane segments, these two different types of polymer chain segments tend to expel each other and provide so called "chain slippage" of polymer chains. The self-healing materials of the invention typically self-heal in about 3 days or less, more typically 2 minutes to 12 hours at room temperature and 1 to 5 seconds at higher temperatures, as discussed *infra.*

The final cured self-healing PUR of the invention typically comprises alkyl siloxane segment(s) and/or fluorinated polyester segment(s) and/or fluorinated polyether segment(s). These segments are contributed by the prepolymer and/or compounds of A.I.iii. The self-healing PUR typically comprises 0% to 35%, preferably 2% to 20% of the aforementioned segments based on the total weight of cured PUR. If the cured PUR comprises less than 2% of the aforementioned segments the PUR may not show distinct self-healing characteristics due to a very low degree of polymer chain slippage. If the alkyl siloxane and/or fluorinated polyether and/or fluorinated polyester segment content is greater than 35%, the resultant cured PUR may become hazy due to incompatibility between the polyurethane backbones and alkyl siloxane segment and/or fluorinated polyether and/or fluorinated polyester segments. In addition, the resultant PUR may show relatively inferior outdoor durability due to its porosity resulting from alkyl siloxane segments and/or fluorinated segments. If the alkyl siloxane and/or fluorinated polyether and/or polyester segment content is greater than 20%, the resultant PUR may still appear slightly hazy. However, the porosity problems that result in inferior outdoor durability may be lessened.

C.III.

Uses

C.III.i

General Uses for the Dispersion or the Composition of the Invention

The dispersions or compositions of the invention formed by combining Part A and Part B may be advantageously employed as a coating composition. As a coating composition, it may be applied to and cured on a wide variety of substrates including those selected from wood, metals, glass, cloth, leather, paper, paint concrete, plastics, foam, and any other substrate onto which protective coatings may be applied, by any conventional method including brushing, dipping, flow coating, spraying or screen printing. The coating compositions may further comprise other conventional ingredients including organic solvents, pigments. dyes, emulsifiers (in the case of aqueous-based compositions), defoamers surfactants, thickeners, fire retardants, heat stabilizers, leveling agents, anti-cratering agents, fillers, ultraviolet light absorbers, fungicides, biocides or antioxidants, which ingredients may be introduced at any stage of the production process.

The composition of the invention may also be used as an adhesive for open cell foams made from polystyrenes

or polyurethanes, or other porous materials such as, leather, wood or paper, or as seal coatings for construction materials such as concrete or bricks.

The system of the invention may be used on porous or nonporous materials. However, the system must be used in a manner that allows any water and/or solvents to evaporate from the system and curing to occur.

Nonporous materials (such metals or glass) are typically coated on a surface which is exposed to air to allow curing to occur.

Porous materials (such as wood, paper or concrete.) may be coated on a surface which is exposed to air or alternatively they may be coated between two porous layers of material or 1 porous layer and 1 nonponous layer which allows evaporation to occur through the porous material and curing to take place. Examples thereof include adhering pieces of wood together, sealing cracks in driveways, etc.

C.III.ii

Specific Uses for the Self-Healing Scratch-Resistant Material of the Invention

The present invention can be used as a clear coat or film where good scratch-resistance, self-healability, and good outdoor durability are required.

Examples thereof include all of the general uses indicated above and particularly as clear coat/top coats (such as for vehicles or appliances.), and as a wood or leather finishes due to its outstanding scratch resistance and self-healing nature.

These high damping PUR clear coats may also be used as energy-absorbing (including sound energy) clear coats or paints (upon being pigmented) in the construction industry.

The coating of the invention which is capable of self-healing can self-heal over a range of temperatures. Self-healing does not typically occur until the scratched coating is exposed to a high enough temperature, i.e. above 10°C, preferably 20°C to 70°C. If the temperature is 10°C or less, self-healing may not be observed. However, a scratched coating that is present in such a low temperature environment can still be self-healed by exposing it to a higher temperature. A high temperature can be used to cause the self-healing as long as it is not so high as to degrade the substrate, cause yellowing of the coating, reduce the gloss of the coating or cause any other disadvantageous effect.

The higher the temperature the quicker the self-healing occurs. The rate of self-healing of the self-healable coatings of the invention depends upon the temperature, the depth of the scratch, and the composition of the coating. Self-healing may take place from 1 to 5 seconds at high temperatures (such as 100°C). Room temperature healing typically takes about several minutes to several hours (typically 2 minutes to 12 hours).

C.IV.

Coating and Curing of the Composition of the Invention

Curing of Aqueous-based Systems

The water-based reactive 2-part PUR systems of the invention containing unblocked polyisocyanate crosslinker are dried, typically in an air-circulated first oven zone at 55°C to 75°C, preferably 65°C to 75°C, to evaporate most of the water in the system to minimize the side reaction between water and the isocyanate groups contributed by the polyisocyanate crosslinker of Part B before the curing reaction begins. It is preferred that the polyisocyanate crosslinker be aliphatic rather than aromatic since aliphatics are less reactive and thus can be heated to a higher temperature without reacting, thus it is easier to evaporate the water and prevent side reactions.

After most of the water has been evaporated (typically 90 to 100%), preferably 95 to 100%, most preferably 100%, in the first oven zone, the system is then exposed to a higher temperature than that of the first temperature zone sufficient to initiate chain-extension and/or crosslinking reactions. This typically occurs in a second oven zone having a temperature of at least above 75°C to 225°C to initiate the curing reactions, preferably 90 to 225°C. The upper temperature limit in this second oven zone is dependent on the substrates to which the material of the invention is applied (i.e., polyvinyl chloride (PVC) films, about 150°C; steel, about 225°C). However, once the reactions have been initiated they will go to completion even if the material is stored at ambient temperature.

To save energy, the step in the second oven zone might range from 75°C to 225°C, preferably 90°C to 225°C until the coating is partially cured and tack-free. The tack-free coating is then cured at a lower temperature, typically 10 to 75°C, preferably 15 to about 35°C. However, the higher the temperature the quicker the curing reaction.

There are at least two different methods for curing the composition of the invention when the crosslinker is a blocked polyisocyanate.

One method involves combining Parts A and B to form a mixture, coating the mixture on a substrate, evaporating at least 90% of the water present at a temperature which will not deblock the blocked polyisocyanate crosslinker (typically 50 to 80°C, preferably 70 to 80°C). This is followed by exposure of the coating to a temperature sufficient to deblock the blocked polyisocyanates without degrading the substrate and exposure to a temperature sufficient to cure the coating. These deblocking and curing steps typically occur at 80°C to 225°C, preferably 90°C to 225°C. This method is advantageous in that a pure polyurethane can be obtained due to the separate water evaporation step prior to deblocking.

An alternate method involves combining Parts A and B to form a mixture, coating the mixture on a substrate, exposing the coated substrate to a temperature sufficient to deblock the blocked polyisocyanate crosslinker, followed by exposure to a temperature sufficient to cure the coating. The temperature range for deblocking and curing is typically 90°C to 225°C, preferably 100°C to 225°C. An advantage of this method is its speed. Water evaporation occurs during the deblocking stage, however, and due to this combination of steps, the product may not be as pure as when a separate evaporation step followed by a deblocking step is used.

<u>Curing of Non-Aqueous-based Systems</u>

The non-aqueous-based reactive 2-part PUR systems of the invention containing unblocked polyisocyanate crosslinker are dried, typically in air-circulated ovens. The oven temperature used to cure the coating composition is typically above 25 degrees C, preferably above 50 degrees C, more preferably above 60 degrees C, and most preferably above 70 degrees C. The upper temperature limit of the oven zone is dependent on the substrates to which the material of the invention is applied (i.e., polyvinyl chloride (PVC) films, about 150°C; steel, about 225°C). However, once the reactions have been initiated they will go to completion even if the material is stored at ambient temperature.

To save energy, the curing step in the oven zone might range from 75°C to 225°C, preferably 90°C to 225°C until the coating is partially cured and tack-free. The tack-free coating is then cured at a lower temperature, typically 10 to 75°C, preferably 15 to 35°C. However, the higher the temperature the quicker the curing reaction.

Curing of the non-aqueous-based composition when Part B comprises a blocked polyisocyanate involves combining Parts A and B to form a mixture, coating the mixture on a substrate, exposing the coated substrate to a temperature sufficient to deblock the blocked polyisocyanate crosslinker, followed by exposure to a temperature sufficient to cure the coating. The temperature range for deblocking and curing is typically 90°C to 225°C, preferably 100°C to 225°C.

The fourier transform infrared (FTIR), thermomechanical properties, differential scanning calorimetry (DSC) properties, and dynamic mechanical properties as well as scratch-resistance and self-healing of the commercially supplied one-part water-based polyurethane-ureas, conventional solvent-based reactive 2-part FURS, and the water-based reactive 2-part PURs of the invention were studied. From the test results one can conclude that the thermal and dynamic mechanical properties as well as chemical structure of the present invention are similar to those of conventional solvent-based reactive 2-part PURs. Thermomechanical analysis (TMA) and dynamic mechanical thermal analysis (DMTA) curves show that a distinct softening temperature is observed in both non-crosslinked and crosslinked conventional one-part water-based polyurethane-ureas (i.e., Bayhydrol™-121, Bayhydrol™-121+Neorez™ CX-100, Bayhydrol™-110 and Bayhydrol™-110+Neorez™ CX-100), whereas the present invention and the conventional solvent-based 2-part reactive PURs show no evidence of softening, which is presented in Tables 11 and 12 and shown in FIGS. 5-17. The results obtained from TMA and DMTA also demonstrate that the conventional one-part water-based polyurethane-ureas have relatively low crosslink density in comparison to the conventional solvent-based reactive 2-part PURs and the compositions of the present invention.

As indicated previously "Part A" refers to an aqueous dispersion of multi-hydroxyl containing polyurethane prepolymer and/or an aqueous dispersion of a mixture of different types of polyols which are curable by "Part B" which comprises a polyisocyanate crosslinker. The following examples detail the syntheses of water-based multi-hydroxyl functional urethane prepolymers and the preparation of Parts A and B. The curing formulations of water-based reactive 2-part PURs of the invention as well as the commercially supplied one-part water-based polyurethane-ureas and conventional solvent-based 2-part reactive PURs and their properties are compared. Hoffman Scratch and mar resistance as well as self-healing characteristics are evaluated herein.

In addition the scratch-resistance and self-healing of the conventional solvent-based reactive 2-part PURs, and the non-aqueous-based compositions of the invention were studied.

As indicated previously "Part A" can refer to a non-aqueous-based composition of multi-hydroxyl containing polyurethane prepolymer and/or a non-aqueous-based composition of a mixture of different types of polyols which are curable by "Part B" which comprises a polyisocyanate crosslinker. The following examples detail the preparation of non-aqueous-based Parts A and B. The curing formulations of non-aqueous-based reactive 2-part PURs of the invention as well as the conventional solvent-based 2-part reactive PURs and their properties are compared. Hoffinan Scratch and mar resistance as well as self-healing characteristics are evaluated herein.

Examples

The following examples further illustrate but do not limit the present invention. Unless otherwise indicated all parts, percentages, ratios, etc., in these examples and the rest of the specification are by weight.

A number of materials used in the examples are listed in Table 1.

TABLE I

| Materials | Description | Supplier |
|---|---|---|
| Polyol I | Carboxylic Acid-Modified Polyester Diol (-OH Eq. Wt. = 72.9) under the tradename of Lexorez™ 1405-65 | Inolex Chem. |
| Polyol II | Carboxylic Acid-Modified Polyester Diol (-OH Eq. Wt. = 125.8) under the tradename of Lexorez™ 1405-120 | Inolex Chem. |
| Polyol III | Carboxylic Acid-Modified Poly(neopentyl/hexamethylene adipate) Glycol Diol (-OH Eq. Wt. = 164.8) under the trade number of DP-56-160 | Witco Chem. |
| Polyol IV | Carbinol-terminated Polydimethyl Siloxane (-OH Eq. Wt. = 98.0) under the trade number of PS-556 | Huls American Inc. |
| Polyol V | Urethane Diol (-OH Eq. Wt. = 160.0) under the trade name of K-Flex™ UD-320-100 | King Industries |
| Polyol VI | Perfluoropolyether Diol (-OH Eq. Wt. = 99.3) under the trade-name of Fluorad™ FC-2022 | 3M |
| Polyol VII | Poly(1,6-hexanediolneopentyl glycol adipate) (-OH Eq. Wt. = 467.5) under the tradename of Lexorez™ 1400-120 | Inolex Chem. |
| BEPD | 2-Butyl-2-Ethyl-1,3-Propanediol | Eastman Chem. |
| CHDM | 1,4-Cyclohexanedimethanol | Eastman Chem. |
| Joncryl™-540 | Acrylic Polymer Emulsion (-OH Eq. Wt. = 42, Acid# = 49) | S.C. Johnson & Son |
| Joncryl™-800B | Acrylic Oligomer (-OH Eq. Wt. = 40, Acid# =14) | S.C. Johnson & Son |
| Joncryl™-SCX 802 | Acrylic Oligomer (-OH Eq. Wt. = 85, Acid# =13) | S.C. Johnson & Son |
| Tone™-305 | Caprolactone-Modified Trimethylol propane | Union Carbide |
| TMP | Trimethylol Propane | Various Suppliers |
| TEA | Triethyl Amine | Various Suppliers |
| Fluorad™ FC-430 | Fluoroaliphatic polymeric esters | 3M |
| Desmodur™-W | Bis(4-isocyanato-cyclohexyl) Methane | Miles, Inc. |
| Desmodur™ N-3300 | Polyisocyanate | Miles, Inc. |
| COTIN™-200 | Dibutyltin Dilaurate | Cosan Chem. |
| Formrez™ UL-30 | Dimethyltin Dichloride | Witco |
| Exxate™-600 | Long Chain Ester Solvent | Exxon Chem. |
| Ektasolve™DB-Acetate | Diethylene Glycol Butyl Ether Acetate | Eastman Chem. |
| Bayhydrol™-121 | Polyurethane-urea Water Dispersion | Miles, Inc. |
| Bayhydrol™-110 | Polyurethane-urea Water Dispersion | Miles, Inc. |
| Neorez™ XR-9679 | Polyurethane-urea Water Dispersion | Zeneca Resins |
| Neorez™ XR-9699 | Polyurethane-urea Water Dispersion | Zeneca Resins |
| Neorez™ CX-100 | Polyaziridine | Zeneca Resins |
| Neocryl™ A-601 | Acrylic Polymer Emulsion | Zeneca Resins |

TABLE I (continued)

| Materials | Description | Supplier |
|---|---|---|
| Bayhydrol™ XP-7007 | Aliphatic Polyisocyanate EqWt (NCO)=250 | Miles, Inc. |
| Bayhydrol™ XP-7043 | Aliphatic Polyisocyanate EqWt. (NCO)=220 | Miles, Inc. |
| MEK | Methyl Ethyl Ketone | Various Suppliers |
| Texanol™ | 2,2,4-trimethyl-1,3-pentanediol mono(2-methyl propanoate) | Eastman Chemical |
| Uvinul™ N-539 | UV light absorber | BASF |
| Tinuvin™-123 | Hindered amine | Ciba-Geigy |
| BYK™-025 | De-Foamer | Byk Chemie |
| Triton™ GR-7M | Surfactant | Union Carbide |
| Tinuvin™-1130 | Ultraviolet light absorber | Ciba-Geigy |
| PM-Acetate | Propylene glycol methyl ether acetate | Various suppliers |
| Release liner | 70 microns polyethylenterephthalate coated with an acrylic polymer release agent | |

## Preparation and Curing of PUR Dispersions

### Example 1

### Preparation of PUR Dispersion

Into a 1 liter resin kettle (equipped with a mechanical agitator, thermometer, nitrogen inlet, oil bath, dropping funnel and condenser) the ingredients (a-e and g) listed in Table 2, Example 1 were charged. The mixture was stirred and heated at 65°C for 15 minutes under a nitrogen blanket until the mixture became homogeneous. During the next 20 minutes bis(cyclohexyl) methane diisocyanate (Desmodur-W) was added incrementally until the total added to the kettle was 28.16 grams. The reaction mixture was allowed to exotherm to approximately 85°C. The reaction was allowed to run to completion [no residual isocyanate was detected by Fourier Transform Infrared Spectroscopy (FTIR)]. The solution temperature was lowered to 70°C and 4.61 grams of triethyl amine was added into the solution. The solution was stirred for another 10 minutes. 166.8 grams of the resulting hydroxyl-terminated urethane prepolymer solution was slowly dispersed into 195 grams of deionized water under high shear to generate a stable dispersion. Methyl ethyl ketone (MEK) was then stripped off.

### Curing of Water-Based Reactive 2-Part PUR Dispersion

To 79.4 grams of the above prepared PUR Dispersion were added 8.10 grams of DB-acetate, 0.22 gram of FC-430, and 12.28 grams of deionized water (see Table 3, Example 1). Part B was prepared by mixing 8.7 grams of polyisocyanate crosslinker Bayhydrol™ XP-7007 and 2.8 grams of Exxate™-600 (see Table 3, Example 1). Part B was then added to Part A which was stirred vigorously for 3 minutes. The mixture was coated 150 microns wet on a polyester release liner to obtain 50 microns dry thickness. The coating was dried 1.5 minutes at 74°C, 1.5 minutes at 93°C, and 3 minutes at 135°C. The coating was further cured overnight at 66°C.

### Examples 2 and 3

### Preparation of PUR Dispersions

Two hydroxyl-terminated urethane prepolymer dispersions were prepared in a similar manner to Example 1 except the materials and amounts listed in Table 2, Examples 2 and 3, were used.

### Curing of Water-Based Reactive 2-Part PUR Dispersions

The curing formulations of Examples 2 and 3 were prepared in a similar manner to Example 1 except the amounts listed in Table 3 were used. The coating thickness as well as the curing time and temperatures were the same

as described in Example 1.

Comparative Examples 4 and 5

Curing of Commercially Supplied One Part Water-Based Polyurethane-urea Bayhydrol™-110 and 121

The curing formulations found in Table 4, of the commercially supplied water-based polyurethane-ureas (Bayhydrol™-110 and 121) were prepared. The coating solutions were each thoroughly mixed for 10 minutes and then coated 125 microns wet on a polyester release liner to obtain 37.5 microns dry thickness. The polyurethane-urea coatings were dried 2 minutes at 93°C, 2 minutes at 121°C, and 2 minutes at 135°C.

Example 6

Preparation of Polyol Dispersion

Into a liter 3-neck flask equipped with a mechanical agitator, thermometer, and oil bath, the materials a, d and i listed in Table 5, Example 6, were charged. The mixture was stirred and heated at 70°C until the solution mixture became homogeneous. Next, 10.35 grams of triethyl amine were added into the solution which was stirred for another 10 minutes. Afterwards, the solution mixture was slowly dispersed into 240 grams of deionized water under high shear stirring to generate a stable dispersion. MEK was then stripped off.

Curing of Polyol Dispersion of Example 6

To 75.00 grams of the Polyol Dispersion of Example 6 were added the materials listed in Table 6 to make the Part A solution. Part B was prepared by mixing 9.00 grams of polyisocyanate crosslinker (Bayhydrol™ XP-7043) and 1.00 gram of Exxate™-600 shown in Table 6. Part B was added to Part A, and the mixture was stirred vigorously for 3 minutes. The mixture was coated 100 microns wet on a polyester release liner to obtain 25 microns dry thickness. The coating was dried 1.5 minutes at 74°C, 2.5 minutes at 121°C, and 2 minutes at 135°C. The coating was further cured at 66°C overnight.

Example 7

Preparation of Polyol Dispersion

The Polyol Dispersion of Example 7 was prepared in the same manner as Example 6 except that the amounts and types of polyols listed in Example 7, Table 5 were used.

Curing of Polyol Dispersion

The curing formulation of the Polyol Dispersion of Example 7 was prepared in a similar way to Example 6 except the amounts listed in Example 7, Table 6 were used. The coating thickness and curing temperatures and times were the same as described in Example 6.

Examples 8 and 9

Preparation of PUR Dispersions

The PUR Dispersions of Examples 8 and 9 were prepared in a similar manner as Example 1 except the amounts and materials listed for Examples 8 and 9 in Table 5 were used.

Curing of PUR Dispersions of Examples 8 and 9

The curing formulations of the PUR Dispersions of Examples 8 and 9 were prepared in a similar manner to Example I except the materials and amounts listed in Table 6 were used. The coating thickness and curing conditions used were the same as described in Example 6. The clear coats were further cured at 66°C overnight

Example 10

Preparation of PUR Dispersion

The PUR Dispersion prepared for this Example is exactly the same as shown in Example 8.

Curing of PUR Dispersion

The PUR Dispersion was cured in a similar manner as Example 1 except the materials and amounts used are listed in Example 10, Table 6. The coating thickness and curing conditions were the same as described in Example 1.

Examples 11, 12 and 13

Preparation of PUR Dispersions

The PUR Dispersions of Examples 11, 12 and 13 were synthesized in a similar manner as Example 1 except the materials and amounts used are listed in Examples 11, 12 and 13 in Table 7.

Curing of PUR Dispersions

The curing formulations of the PUR Dispersions were prepared in a similar manner to Example 1 except the materials and amounts listed in Table 8 were used. The curing reactions for these examples did not involve a catalyst. The coating thickness and curing time and temperatures used were the same as described in Example 1.

Example 14

Preparation of PUR Dispersion

The PUR Dispersion prepared in this Example is the same as prepared in Example 11.

Curing of PUR Dispersion

The PUR Dispersion was cured in a similar manner as Examples 11-13 except the amounts and materials used are listed in Example 14, Table 8. Severe blisters were observed in the coating. The blistering was caused by $CO_2$ yield during the side reaction of water and isocyanate promoted by a catalyst (i.e., Formrez™ UL-30).

Comparative Examples 15-19

Coating of Commercially Supplied One-Part Water-Based Polyurethane-Ureas.

The curing and coating formulations of Comparative Examples 15-19, Table 4 for the commercially supplied water-based polyurethane-ureas (Bayhydrol™-110 and 121 Neorez™ XR-9679, Neorez™ XR-9699, Neocryl™ A-601) were prepared in a similar manner to Comparative Examples 4 and 5 in Table 4. The coating thickness and drying conditions used were the same as described in Comparative Examples 4 and 5.

Comparative Example 20

An Example of Conventional Solvent-Based Reactive Two-Part PUR

| Part A: | Grams |
|---|---|
| Lexorez™-1400-120 | 16.81 |
| Joncryl™ SCX-802 | 33.61 |
| Methyl Ethyl Ketone | 14.37 |
| Tone™-305 | 8.40 |

(continued)

| Part A: | Grams |
|---|---|
| Propylene Glycol Methyl Ether Acetate | 12.60 |
| Butyl Acetate | 6.64 |
| Dibutyltin Dilaurate (1% in Propylene Glycol Methyl Ether Acetate) | 1.68 |
| Fluorad™ FC-430 (20% in Propylene Glycol Methyl Ether Acetate) | 3.38 |
| Diisobutyl Ketone | 2.51 |
| Total | 100.00 |
| **Part B:** | **Grams** |
| Desmodur™ N-3300 | 28.40 |

Part A and B were thoroughly mixed for 3 minutes and the solution was coated 100 microns wet thickness on a polyester release carrier web to obtain 50 microns dry thickness. The coating was then cured 2 minutes at 80°C and 4 minutes at 135°C. The PUR was further cured at 95°C for another 6 hours.

Comparative Example 21:

Miles' Water-Based Reactive Two-Part Polyurethane-Urea

The curing formulation of Miles' water-based reactive 2-part polyurethane-urea suggested by Miles technical brochure (by using an excessive amount of isocyanate) is shown below. The NCO/OH ratio in the curing reaction of Part B and Part A was kept at 2/1.

| Part A: | Grams |
|---|---|
| Bayhydrol™ XP-7043 | 61.09 |
| Fluorad™ FC-430 (5% in Water) | 0.80 |
| De-Ionized Water | 20.10 |
| **Part B:** | **Grams** |
| Bayhydrol™ XP-7007 | 14.07 |
| Exxate™-600 | 3.94 |

Part A and B were thoroughly mixed for 5 minutes and the solution was coated 100 microns wet thickness on a polyester release carrier web to obtain 50 microns dry thickness. The coating was then cured at ambient temperature for a week.

Test Methods:

The following Tests A-E were used herein.

Test A: FTIR-ATR:

A Nicolet 510 FTIR Spectrometer attached with an Attenuated Total Reflectance apparatus and KRS-5 crystal (Thallium Bromoiodide) on 45° angle was used to perform the study of the surface structure of the polyurethanes of the invention, the solvent-based polyurethanes of the Comparative Examples and the polyurethane-ureas of the Comparative Examples.

FTIR-ATR can clearly differentiate between the chemical structures of polyurethane and polyurethane-urea. The absorption bands of hydrogen-bonded carbonyl group (C=O) and free carbonyl group (C=O) in aliphatic urethane linkage appear at 1688 $cm^{-1}$ and 1720 $cm^{-1}$, respectively. In a urea linkage, the absorption of the hydrogen-bonded carbonyl group (C=O) appears in between 1640 and 1660 $cm^{-1}$, whereas the free carbonyl group (C=O) appears at 1695 $cm^{-1}$ (see Macromolecules 1980. Vol. 13, p. 117-121).

The absorption band of the free carbonyl group of the urea linkage tends to overlap with the absorption band of the hydrogen-bonded carbonyl group in the urethane linkage in the IR spectrum. These two different carbonyl absorption bands appear at 1695 $cm^{-1}$ and 1688 $cm^{-1}$ respectively. Hence, it is difficult to differentiate these two peaks.

On the other hand, the absorption band of the hydrogen-bonded carbonyl in the urea linkage can be clearly observed between 1640 $cm^{-1}$ and 1660 $cm^{-1}$ which appears as a distinct shoulder. This shoulder has been widely used to distinguish between polyurethane and polyurethane-urea (See Macromolecules, 1980, Vol. 13, p. 117-121).

Miles' one-part conventional water-based polyurethane-ureas in Comparative Examples 15 and 16 (Bayhydrol™-110 and 121) and water-based reactive two-part polyurethane-urea in Comparative Example 21 show distinct shoulder between 1640 $cm^{-1}$ and 1660 $cm^{-1}$ in IR spectrum. The shoulder is attributed to the absorption of the hydrogen-bonded carbonyl (C=O) in the urea linkage. Due to the existence of this shoulder in the IR spectrum, Comparative Examples 15, 16 and 21 are classified as polyurethane-urea (See Figure 1). In contrast to the Comparative Examples, the Examples of the present invention 11-13 (See Figure 2) do not show any evidence of urea linkage in the above region. A very smooth peak is seen between 1600 $cm^{-1}$ and 1800 $cm^{-1}$ in the IR spectrum of Examples 11-13. The peak which appears in this range is assigned to the hydrogen-bonded carbonyl and free carbonyl absorption bands in the urethane linkage. The IR absorption band between 1600 $cm^{-1}$ and 1800 $cm^{-1}$ in the present invention (Examples 11-13) is very similar to that in Comparative Example 20 (a conventional solvent-based reactive two-part polyurethane) (See Figure 1) where no evidence of urea absorption shoulder is seen in the range between 1640 $cm^{-1}$ and 1660 $cm^{-1}$. The results are summarized in Table 9.

The FTIR-ATR results demonstrate that the coatings of the present invention (Examples 11-13) are chemically similar to the coatings of conventional solvent-based reactive two-part polyurethanes (Comparative Example 20). All are polyurethanes rather than polyurethane-ureas. Accordingly, the present invention is chemically different from the conventional one-part water-based polyurethane-ureas and Miles' water-based reactive two-part polyurethane-urea (Comparative Examples 15, 16 and 21).

Test B: Differential Scanning Calorimetry (DSC)

Examples 11-13, and Comparative Examples 4, 5, 20 and 21 were measured by means of TA Instruments DSC-910 (differential scanning calorimeter) from -100°C to 150°C with a temperature ramp of 20°C/min-Sample size was kept in the range of 3.00-7.00 milligrams. The DSC thermograms of Examples 11-13, were similar to that of Comparative Example 20 (solvent-based reactive 2-part PUR). The glass transition temperature of Comparative Example 20 is close to those of Examples 11-13 of the present invention. No endothermic crystalline melting peaks were observed in Examples 11-13 as well as Comparative Example 20, which implies that Examples 11-13 and Comparative Example 20 have similar amorphous hard and soft segment microstructures as well as similar chemical structures. The thermogram of Comparative Example 21 shows similar curve to Examples 11-13 and Comparative Example 20, but its glass transition temperature is much higher i.e., 70.3°C versus 12°C to 30°C. Comparative Example 21 does not show an endothermic crystalline melting peak either. In contrast to the present invention, Comparative Examples 4 and 5 show distinct endothermic crystalline melting peaks at 71.2 and 69.4°C, respectively. Both Comparative Examples 4 and 5 show no evidence of glass transition, which implies that they have a crystalline and/or glassy microstructure. DSC data are summarized in Table 10 and the DSC Curves are shown in Figures 3 and 4.

Test C: Thermomechanical Analysis (TMA)

Thermomechanical properties of Examples 1-3, 11-13, and Comparative Examples 4, 5 and 15-20 were tested by a TA Instruments TMA-943 with a 5-gram-weight load on top of the vertically positioned probe. Sample thickness was maintained in the range of 25-50 microns. The thermal transitions of samples were monitored from -100°C to 275°C with a temperature ramp of 10°C/min. The TMA curves of Examples 1-3,11-13 and Comparative Examples 4,5 and 15-20 shown in Figures 5-12 and 16-17 and the data presented in Table 11 illustrate that the water-based reactive 2-part PURs (Examples 1-3 and 11-13 of the present invention) and Comparative Example 20 (a conventional solvent-based reactive 2-part PUR) have no softening temperatures even though the materials of Examples 1 and 2 are very soft and rubbery, whereas the commercially supplied water-based one-part polyurethane-ureas of Comparative Examples 4,5 and 15-19 show distinct softening temperatures.

The TMA results show that Examples 1-3 and 11-13 of the present invention exhibit similar thermal stability to Comparative Example 20 (a conventional solvent-based reactive 2-part PUR). Examples 1-3 and 11-13, and Comparative Example 20 show far superior thermal stability than conventional one-part water-based polyurethane-ureas (Comparative Examples 4,5 and 15-19).

Test D: Dynamic Mechanical Thermal Analysis (DMTA)

Dynamic mechanical properties of Examples 11-13 and Comparative Examples 4,5,15,16,20 and 21 were measured by a Rheometrics Solid Analyzer (RSA-II) using a rectangular tension mode with 1 rad/sec dynamic frequency. The sample dimension was kept at 0.09 x 5.0 x 22.5 $mm^3$ and the temperature was monitored from -75°C to

200°C with a ramp of 2°C/min.

The purpose of this test was to evaluate the temperature location and size of the damping factor [i.e., Tan (δ) peak] at the glass transition region of the polymer materials as well as their modulus and thermal stability. It has been found that the size and temperature location of the Tan (δ) peak at glass transition region are very important characteristics that control the scratch resistance and self-healing ability of a polymer material. It has been found that a polymer with a high damping factor and with its glass transition region located in ambient temperature can effectively store the energy that may be applied to the polymer surface and use the stored energy to reconfigure or to overcome the rotational or vibrational strain barriers of the deformed configuration or the twisted and/or distorted polymer backbones and/or side-chains, e.g., scratched surface, so as to result in a thermodynamically stabilized configuration or microstructure. This process is also referred to as "self-healing" or "self-repairing". It has been found that self-healing characteristics can occur in ambient temperature if the glass transition region and/or Tan (δ) peak is located at ambient temperature. Accordingly, the larger the damping factor of the polymer, the faster or easier the scratched surface can self-heal. Therefore, it is theorized that the most preferred location of the Tan (δ) peak at glass transition region is in the ambient temperature range and the most preferred size of Tan (δ) is greater than 0.9. However, other factors, such as elastomeric properties of the polymer material (i.e., storage modulus) at test temperature, the degree of crosslink density and the ease of polymer chain slippage, may also play an important role in the self-healing process and provide a so-called synergistic effect.

The DMTA curves of Comparative Examples 4, 5, 15 and 16 (i.e., conventional one-part water-based polyurethane-ureas) show distinct softening points at 150°C, whereas no glass transition region at ambient temperature or rubbery plateau region is observed in the DMTA thermograms. Furthermore, they do not show damping characteristics in the ambient temperature region, either. In addition, their storage moduli (which are correspondent to the stiffness of the material) are in between $10^9$ Pa and $10^8$ Pa in the temperature range of 25°C to 70°C which is classified as glassy to plastic material regions. In glassy regions and plastic regions, polymer chains are frozen and have much less degree of freedom to rotate or move than that in a rubbery state. Therefore, no self-healing characteristics are expected to be seen for the materials of Comparative Examples 4, 5, 15, and 16 at ambient temperature due to their high storage moduli in between 25°C and 70°C and no glass transition region at ambient temperature.

Examples 11-13 and Comparative Examples 20 and 21 exhibit excellent thermal stability and distinct rubbery plateau regions. Examples 11-13 of the present invention were found to have substantially higher damping characteristics (i.e., larger Tan (δ) peak heights) than the Comparative Examples 20 and 21. The Tan (δ) peaks in the glass transition region for Examples 11-13 are located in between 20°C and 60°C while the Tan (δ) peaks for Comparative Examples 20 and 21 are located in between 30°C and 60°C and 80°C and 110°C, respectively. The heights of the Tan (δ) peaks for Examples 11-13 are 1.29, 1.15, and 1.14, respectively, whereas the heights for Comparative Examples 20 and 21 are 0.77 and 0.55, respectively. In addition, the storage moduli, which are correspondent to the stiffness of the polymer material, for Examples 11-13 of the present invention and Comparative Example 20 are in the range of $10^8$ Pa and $10^6$ Pa in between 25°C and 70°C which are classified as plastic to rubbery regions, whereas the storage modulus of Comparative Example 21 is in the range of $10^9$ Pa and $10^8$ Pa in between 25°C and 70°C which are classified as glassy to plastic regions. Accordingly, Examples 11-13 (i.e., water-based reactive two-part polyurethanes of the present invention) and Comparative Example 20 (i.e., solvent-based reactive two-part polyurethane) were found to have self-healing characteristics at ambient temperature. Furthermore, Examples 11-13 were found to show more efficient and faster self-healing characteristics at ambient temperature than Comparative Example 20, which it is theorized was due to their higher damping characteristics [i.e., larger size of the Tan (δ) peak] at ambient temperature and greater tendency of polymer chain slippage during the self-healing process resulting from the introduction of polysiloxane segments into the polymer backbones.

In contrast to the present invention, the Comparative Example 21 is similar to Comparative Examples 4,5,15 and 16 whose polymer chains remain frozen in a glassy state and have a much lower degree of freedom to move or rotate than in a rubbery state. Hence, no self-healing characteristics were observed in Comparative Example 21 (i.e., Miles' water-based reactive two-part polyurethane-urea) due to its high storage modulus and lack of damping characteristics at ambient temperature.

The storage moduli of Examples 11-13 and Comparative Examples 4, 5, 15, 16, 20 and 21 at 0°C are approximately at $10^9$ Pa (see Table 12) which reflects that all the samples are at glassy region where the polymer chains are well-frozen at 0°C and the mobility of the polymer chains is limited. Accordingly, no self-healing characteristics are expected to be observed in Examples 11-13 and Comparative Examples 4, 5, 15, 16, 20 and 21 at 0°C. The data and thermograms obtained from DMTA are illustrated in Table 12 and Figures 13-15. The scratch-resistance and self-healing characteristics are discussed further in Test E.

Test E: Scratch and Mar Resistance and Self-Healability at Different Temperatures

Scratch and mar resistance were measured by a Balanced-Beam Scrape Tester described in ASTM-2197-86.

The Hoffman stylus is held at 45 degrees from the vertical, the top sloping in the direction of test sample travel, and it is held in place by a falcrum elevated at 22 degrees. Weights (50-gram-weight to 700-gram-weight) were placed on the weight support, the beam was lowered until the loop rested on top of the test specimen, following which the sliding platform was slowly pushed across the specimen. The scratch tests were performed individually at 0°C, 25°C and 70°C. The specimens that were scratched or marred were put in 0°C, 25°C and 70°C, respectively to observe their self-healing characteristics. By "self-healing" it is meant that the deformed or marred surfaces can return to their original appearance.

The factors that control the self-healing process that it was theorized in Test D are: (1) Tan (δ) peak size, (2) temperature location of glass transition, (3) storage modulus, (4) the ease of polymer chain slippage, and (5) temperature. The purpose of this test is to determine which Example coatings exhibit scratch and mar resistance and self-healing characteristics at the test temperature.

The scratch and mar resistance and self-healability of Examples 9, 11-13 and Comparative Examples 4, 5 and 15-21 were tested individually at 0°C, 25°C and 70°C. All the coating examples were applied to a pigmented thermoplastic film with adhesive attached to the opposite side. The thermoplastic films were mounted via the adhesive to the painted steel panels and conditioned at 0°C, 25°C and 70°C for 15 minutes separately. The scratch and mar resistance were tested from 50-gram-weight load up to 700-gram-weight load. The scratched samples tested at 0°C, 25°C and 70°C were put in 0°C, 25°C, 70°C and 120°C ovens and their self-healing characteristics were evaluated. The results of scratch and mar resistance and self-healability are presented in Table 13.

Examples 11-13 (i.e., the siloxane-containing cured PURs of the present invention) showed superior scratch and mar resistance as well as self-healing characteristics when compared to all other tested Examples.

Examples 12-13 exhibited excellent scratch and mar resistance from 50-gram-weight load up to 700-gram-weight load and their scratches and mars resulted from high weight load self-healed in 10 minutes at room temperature. Example 11 self-healed in 1 hour at room temperature when the weight load was less than 300 grams, otherwise it self-healed in 6 hours. By putting the scratched or marred Examples 11-13 of the present invention in 70°C or 120°C ovens, they self-healed in a few seconds. Other means of heating will also speed the healing process. In contrast to the present invention, Comparative Examples 4, 5, 15-19 and 21 showed very poor scratch resistance and no self-healing characteristics.

Example 9 (non-siloxane containing cured PUR of the present invention) exhibited similar scratch and mar resistance as well as self-healing characteristics as that of Comparative Example 20 (i.e.. conventional solvent-based reactive two-part PUR). Example 9 self-healed in 14 days at room temperature when scratched by the weight load greater than 200 grams while the solvent-based 2-part Comparative Example 20 self-healed in 10 days at room temperature when scratched by the weight load greater than 100 grams. Both samples self-healed in 35 minutes when placed in a 70°C oven or 10 minutes when placed in a 120°C oven. This performance is due to Example 9 and Comparative Example 20 having similar physical properties (e.g.. storage modulus, glass transition region, Tan (δ) peak size, etc.) which results in similar scratch and mar resistance as well as self-healability. There are no siloxane segments that are chemically incorporated into the polymer backbones to promote the scratch resistance and self-healing characteristics. Therefore, the scratch and mar resistance and self-healabiliry of Example 9 and Comparative Example 20 are inferior to Examples 11-13.

All the samples (Examples 9, 11-13 and Comparative Examples 4, 5 and 15-21) tested showed poor scratch and mar resistance at 0°C and no distinct self-healing was observed at 0°C. However, when these scratched samples were put in room temperature, 70°C and 120°C individually, Examples 9, 11-13 and Comparative Example 20 showed distinct self-healing characteristics. Again, Examples 12 and 13 self-healed in 10 minutes at room temperature and in a few seconds at 70°C or 120°C. Example 11 self-healed in 6-7 hours at room temperature and a few seconds in both a 70°C oven and a 120°C oven. Example 9 and Comparative Example 20 self-healed in 10-14 days at room temperature and 15 minutes to an hour at 70°C and 120°C. In contrast to the present invention, the Comparative Examples 4,5,15-19 and 21 did not exhibit distinct self-healing characteristics at room temperature, 70°C and 120°C (they were scratched permanently).

When the scratch resistance was tested at 70°C, no scratches were seen in Examples 9, 11-13 and Comparative Example 20. However, Comparative Examples 4, 5, 15-19 and 21 showed poor scratch resistance. They showed distinct scratches when the weight load was 50 grams and exhibited no self-healing characteristics.

Table 2

| Preparation of Hydroxyl-Terminated Polyurethane Prepolymer Dispersions of the Invention | | | | |
|---|---|---|---|---|
| | Materials* | Ex.1 | Ex.2 | Ex.3 |
| a | Polyol I | 65.41 | 65.41 | 53.84 |

*a-i in grams

Table 2 (continued)

| Preparation of Hydroxyl-Terminated Polyurethane Prepolymer Dispersions of the Invention | | | | |
|---|---|---|---|---|
| | Materials* | Ex.1 | Ex.2 | Ex.3 |
| b | Polyol II | 24.53 | 4.46 | - |
| c | CHDM | 11.72 | 14.91 | 11.56 |
| d | TMP | 2.23 | 2.23 | 1.92 |
| e | COTIN™-200 | 0.03 | 0.03 | 0.03 |
| f | Desmodur™-W | 28.16 | 28.16 | 28.95 |
| g | MEK | 35.00 | 35.00 | 30.00 |
| h | TEA | 4.61 | 4.61 | 4.03 |
| i | De-Ionized Water | 195.00 | 175.00 | 175.00 |
| j | % Solid | 40.50 | 40.20 | 35.2% |

*a-i in grams

Table 3

| Curing Formulations of Water-Based Reactive Two-Part PURs of the Invention* | | | |
|---|---|---|---|
| Materials | Ex. 1 | Ex. 2 | Ex. 3 |
| Part A: | | | |
| Amount of Dispersion | 79.40 | 78.20 | 83.80 |
| Ektasolve™ DB-Acetate | 8.10 | 8.20 | 8.00 |
| Fluorad™ FC-430 | 0.22 | 0.22 | 0.22 |
| De-Ionized Water | 12.28 | 13.38 | 7.98 |
| Part B: | | | |
| Bayhydrol™ XP-7007 | 8.70 | 9.20 | 9.20 |
| Exxate™ -600 | 2.80 | 3.00 | 3.00 |

*in grams

Table 4

| Curing Formulations of Commercially Supplied Water-Based Polyurethane-Urea* | | | | | | | |
|---|---|---|---|---|---|---|---|
| | Comp. Ex. 4 | Comp. Ex. 5 | Comp. Ex. 15 | Comp. Ex. 16 | Comp. Ex. 17 | Comp. Ex. 18 | Comp. Ex. 19 |
| Neorez™ XR-9679 | 0.00 | 0.00 | 0.00 | 0.00 | 0.00 | 80.14 | 66.60 |
| Neorez™ XR-9699 | 0.00 | 0.00 | 0.00 | 0.00 | 87.50 | 0.00 | 0.00 |
| Bayhydrol™-121 | 88.50 | 0.00 | 89.03 | 0.00 | 0.00 | 0.00 | 0.00 |
| Bayhydrol™-110 | 0.00 | 88.50 | 0.00 | 89.03 | 0.00 | 0.00 | 0.00 |
| Neocryl™ A-601 | 0.00 | 0.00 | 0.00 | 0.00 | 0.00 | 0.00 | 19.25 |

* in grams

Table 4 (continued)

| Curing Formulations of Commercially Supplied Water-Based Polyurethane-Urea* | | | | | | | |
|---|---|---|---|---|---|---|---|
| | Comp. Ex. 4 | Comp. Ex. 5 | Comp. Ex. 15 | Comp. Ex. 16 | Comp. Ex. 17 | Comp. Ex. 18 | Comp. Ex. 19 |
| Butyl Carbinol | 8.85 | 8.85 | 8.99 | 8.99 | 9.62 | 8.35 | 9.07 |
| Uvinul™ N-539 | 1.06 | 1.06 | 1.08 | 1.08 | 1.05 | 0.85 | 0.93 |
| Tinuvin™-123 | 0.35 | 0.35 | 0.36 | 0.36 | 0.35 | 0.28 | 0.31 |
| Triton™ GR-7M | 0.27 | 0.27 | 0.27 | 0.27 | 0.26 | 0.30 | 0.29 |
| Byk™-025 | 0.27 | 0.27 | 0.27 | 0.27 | 0.26 | 0.30 | 0.29 |
| Neorez™ CX-100 | 0.70 | 0.70 | 0.00 | 0.00 | 0.96 | 1.07 | 1.07 |
| De-Ionized Water | 0.00 | 0.00 | 0.00 | 0.90 | 0.00 | 8.78 | 2.19 |
| Total | 100.00 | 100.00 | 100.00 | 100.00 | 100.00 | 100.00 | 100.00 |

* in grams

Table 5

| Preparation of Water-Based Polyol Dispersions and Hydroxyl-Terminated Polyurethane Dispersion of the Invention | | | | | |
|---|---|---|---|---|---|
| | Materials* | Ex.6 | Ex.7 | Ex.8 | EX.9 |
| a | Polyol I | 160.00 | 482.00 | 123.12 | 230.88 |
| b | Polyol IV | ---- | ---- | 35.00 | ---- |
| c | Polyol VII | ---- | ---- | ---- | 53.52 |
| d | Joncryl™-800B | 40.00 | ---- | ---- | ---- |
| e | Joncryl™-802 | ---- | 122.50 | ---- | ---- |
| f | TMP | ---- | ---- | 10.72 | 21.45 |
| g | BEPD | ---- | ---- | 60.10 | 72.90 |
| h | Desmodur™-W | ---- | ---- | 93.00 | 150.12 |
| i | MEK | 60.00 | 132.50 | 70.00 | 105.00 |
| j | TEA | 10.35 | 39.40 | 10.83 | 16.23 |
| k | De-Ionized Water | 240.00 | 700.00 | 570.00 | 745.00 |
| l | % Solid | 46.50 | 46.20 | 33.00 | 41.00 |

*a-k in grams

Table 6

| Curing Formulations of Water-Based Reactive Two-Part PURs of the Invention* | | | | | |
|---|---|---|---|---|---|
| | Ex. 6 | Ex. 7 | Ex. 8 | Ex. 9 | Ex. 10 |
| Part A: | | | | | |
| Amount of Dispersion | 75.00 | 75.00 | 75.00 | 75.00 | 75.00 |
| Joncryl™-540 | ---- | ---- | ---- | ---- | 25.00 |
| Ektasolve™ DB-Acetate | 6.00 | 5.50 | 5.00 | 4.50 | 5.50 |
| Fluorad™ FC-430 | 0.24 | 0.24 | 0.20 | 020 | 0.26 |
| Texanol™ | 0.80 | ---- | ---- | ---- | ---- |
| De-Ionized Water | 0.76 | 0.76 | 15.80 | 0.80 | 6.04 |
| Part B: | | | | | |
| Bayhydrol™ XP-7043 | 9.00 | 11.34 | 8.91 | 10.80 | 13.50 |
| Exxate™-600 | 1.00 | 1.26 | 0.99 | 1.20 | 1.50 |

*in grams

Table 7

| Syntheses of Hydroxyl Terminated and Polydimethyl Siloxane-Containing Polyurethane Dispersions of the Invention* | | | |
|---|---|---|---|
| Materials | Ex. 11 | Ex. 12 | Ex. 13 |
| Polyol I | 138.52 | 250.10 | ---- |
| Polyol III | ---- | ---- | 272.16 |
| Polyol IV | 17.16 | 42.95 | 22.88 |
| CHDM | ---- | 151.00 | ---- |
| Polyol V | 206.40 | 160.00 | 185.60 |
| COTIN™-200 | 0.08 | 0.10 | 0.10 |
| TMP | 13.41 | 13.41 | 22.88 |
| Desmodur™-W | 139.52 | 139.52 | 186.04 |
| MEK | 120.00 | 200.00 | 120.00 |
| TEA | 10.35 | 18.70 | 12.00 |
| De-Ionized Water | 775.00 | 1050.00 | 1000.00 |
| % Solid | 39.00 | 42.50 | 37.00 |

* in grams unless indicated otherwise

Table 8

| Curing Formulations of Water-Based Reactive Two-Part PURs of the Invention* | | | | |
|---|---|---|---|---|
| Materials | Ex. 11 | Ex. 12 | Ex. 13 | Ex. 14 |
| Part A: | | | | |
| Amount of Dispersion | 90.40 | 93.30 | 94.00 | 90.40 |
| Ektasolve™ DB-Acetate | 7.20 | 6.70 | 6.00 | 7.20 |
| Fluorad™ FC-430 | ---- | ---- | ---- | ---- |
| PM-Acetate | ---- | ---- | ---- | ---- |
| Tinuvin™-123 | ---- | ---- | ---- | ---- |

*in grams

Table 8 (continued)

| Curing Formulations of Water-Based Reactive Two-Part PURs of the Invention* | | | | |
|---|---|---|---|---|
| Materials | Ex. 11 | Ex. 12 | Ex. 13 | Ex. 14 |
| Part A: | | | | |
| Tinuvin™-1130 | ---- | ---- | ---- | ---- |
| Formrez™ UL-30 | ---- | ---- | ---- | 0.002 |
| De-Ionized Water | 7.10 | ---- | ---- | 7.10 |
| Part B: | | | | |
| Bayhydrol™ XP-7043 | 14.40 | 26.40 | 13.60 | 14.40 |
| Exxate™-600 | 1.60 | 2.90 | 1.50 | 1.60 |

*in grams

<u>Table 9</u>

FTIR Results of Polyurethanes and Polyurethane-Urea

| Sample | Ex. 11 | Ex. 12 | Ex. 13 | Comp. Ex. 15 | Comp. Ex. 16 | Comp. Ex. 20 | Comp. Ex. 21 |
|---|---|---|---|---|---|---|---|
| Location of Carbonyl (C=O) Absorption Band of Urethane Linkage<br>1. Free C=O<br>2. H-Bonded C=O | <br><br>$1720\ cm^{-1}$<br>$1685\ cm^{-1}$ | <br><br>$1720\ cm^{-1}$<br>$1680\ cm^{-1}$ | <br><br>$1720\ cm^{-1}$<br>$1685\ cm^{-1}$ | <br><br>$1740\ cm^{-1}$<br>$1708\ cm^{-1}$ | <br><br>$1724\ cm^{-1}$<br>$1695\ cm^{-1}$ | <br><br>$1724\ cm^{-1}$<br>$1682\ cm^{-1}$ | <br><br>$1722\ cm^{-1}$<br>$1685\ cm^{-1}$ |
| Location of Carbonyl (C=O) Absorption Band of Urea Linkage (Exhibiting as a Shoulder)<br>1. H-Bonded C=O | None | None | None | $1655\ cm^{-1}$ | $1650\ cm^{-1}$ | None | $1646\ cm^{-1}$ |

<u>Table 10</u>

Results of Differential Scanning Calorimeter of Polyurethanes and Polyurethane-Ureas Measured by using DSC

| Sample | Ex. 11 | Ex. 12 | Ex. 13 | Comp. Ex. 4 | Comp. Ex. 5 | Comp. Ex. 20 | Comp. Ex. 21 |
|---|---|---|---|---|---|---|---|
| DSC<br>Tg (°C)<br>Melting Temp. (°C) | <br>28.2<br>None | <br>12.8<br>None | <br>25.5<br>None | <br>None<br>71.4 | <br>None<br>69.4 | <br>29.2<br>None | <br>70.3<br>None |

## Table 11

Thermomechanical Properties of Polyurethanes and Polyurethane-Ureas Measured by using TMA

| | Ex. 1 | Ex. 2 | Ex. 3 | Ex. 11 | Ex. 12 | Ex. 13 | Comp. Ex. 4 | Comp. Ex. 5 | Comp. Ex. 15 | Comp. Ex. 16 | Comp. Ex. 17 | Comp. Ex. 18 | Comp. Ex. 19 | Comp. Ex. 20 |
|---|---|---|---|---|---|---|---|---|---|---|---|---|---|---|
| TMA | | | | | | | | | | | | | | |
| Tg (°C) | 12.0 | 5.0 | -8.0 | 22.4 | 8.0 | 16.8 | None | None | None | None | None | None | None | 22.5 |
| Penetration Depth at Tg (micron) | 16.0 | 14.0 | 9.5 | 4.5 | 9.5 | 6.0 | ---- | ---- | ---- | ---- | ---- | ---- | ---- | 1.0 |
| Softening Temp. (°C) | None | None | None | None | None | None | 224.0 | 221.0 | 214.4 | 199.3 | 204.6 | 201.6 | 220.6 | None |
| Penetration Depth at Softening Temp. (micron) | ---- | ---- | ---- | ---- | ---- | ---- | 67.0 | 45.0 | 50.0 | 50.0 | 55.0 | 55.0 | 40.0 | ---- |

Table 12

Dynamic Mechanical Properties of Polyurethanes and Polyurethane-Ureas Measured by using DMTA

| Sample | Ex. 11 | Ex. 12 | Ex. 13 | Comp. Ex. 4 Bayhydrol™ 121+Neorez™ CX-100 | Comp. Ex. 5 Bayhydrol™ 110+Neorez™ CX-100 | Comp. Ex. 15 Bayhydrol™ 121 | Comp. Ex. 16 Bayhydrol™-110 | Comp. Ex. 20 Convent. Solvent-Based Reactive 2-Part | Comp. Ex. 21 Miles' Water-Based Reactive 2-Part |
|---|---|---|---|---|---|---|---|---|---|
| DMTA | | | | | | | | | |
| Tg(°C) | 51.3 | 41.5 | 40.0 | None | None | None | None | 36.7 | 96.6 |
| Tan(δ) peak Height at Tg | 1.29 | 1.15 | 1.14 | None | None | None | None | 0.77 | 0.55 |
| Storage Modulus (Pa)<br>at 0°C (Pa)<br>at 25°C (Pa)<br>at 70°C (Pa) | <br><br>$1.4 \times 10^9$<br>$9.0 \times 10^8$<br>$4.1 \times 10^6$ | <br><br>$1.4 \times 10^9$<br>$5.5 \times 10^8$<br>$4.5 \times 10^6$ | <br><br>$1.9 \times 10^9$<br>$6.8 \times 10^8$<br>$3.2 \times 10^6$ | <br><br>$6.9 \times 10^9$<br>$5.1 \times 10^8$<br>$2.1 \times 10^8$ | <br><br>$1.3 \times 10^9$<br>$7.7 \times 10^8$<br>$1.0 \times 10^8$ | <br><br>$1.0 \times 10^9$<br>$7.4 \times 10^8$<br>$1.3 \times 10^8$ | <br><br>$8.7 \times 10^8$<br>$4.7 \times 10^8$<br>$3.5 \times 10^7$ | <br><br>$1.6 \times 10^9$<br>$3.5 \times 10^8$<br>$9.8 \times 10^6$ | <br><br>$1.4 \times 10^9$<br>$9.7 \times 10^8$<br>$2.2 \times 10^8$ |
| Rubbery Plateau Region (Pa) | $2.3 \times 10^6$ | $4.2 \times 10^6$ | $3.7 \times 10^6$ | ---------- | ---------- | ---------- | ---------- | $8.0 \times 10^6$ | $6.0 \times 10^6$ |
| Tm (°C) | None | None | None | 103.0 | 84.9 | 106.8 | 85.0 | None | None |
| Tan (δ) peak height at Tm | None | None | None | 0.58 | 0.54 | 0.63 | 0.56 | None | None |

Table 13

| Scratch Resistance and Self-Healability of Polyurethanes and Polyurethane-ureas Tested Under Different Temperatures | | | |
|---|---|---|---|
| Graphic Films | Tested at 0°C | Tested at 25°C | Tested at 70°C |
| Example 9 (Dispersion H-30A) | Permanent(1) Scratch W/O(3) Self-Healing | Scratched at(1)_≥200 grams and Self-Healed in 14 days | No Scratch |
| Example 11 (Dispersion H-37A) | Permanent(1) Scratch W/O Self-Healing | Scratched at(1)_≥300 grams and Self-Healed in 6 Hours | No Scratch |
| Example 12 (Dispersion H-38A) | Permanent(1) Scratch W/O Self-Healing | No Scratch, Self-Healed within 10 minutes | No Scratch |
| Example 13 (Dispersion H-39A) | Permanent(1) Scratch W/O Self-Healing | No Scratch, Self-Healed within 2 minutes | No Scratch |
| Comp. Ex. 4 (Bayhydrol™-121 +Neocryl™ CX-100) | Permanent(2) Scratch W/O Self-Healing | Scratched at(2)_≥50 Grams W/O Self-Healing | Permanent(2) Scratch W/O Self-Healing |
| Comp. Ex. 5 (Bayhydrol™-110 +Neocryl™ CX-100) | Permanent(2) Scratch W/O Self-Healing | Scratched at(2)_≥50 Grams W/O Self-Healing | Permanent(2) Scratch W/O Self-Healing |
| Comp. Ex. 15 (Bayhydrol™-121) | Permanent(2) Scratch W/O Self-Healing | Scratched at(2)_≥50 Grams W/O Self-Healing | Permanent(2) Scratch W/O Self-Healing |
| Comp. Ex. 16 (Bayhydrol™-110) | Permanent(2) Scratch W/O Self-Healing | Scratched at(2)_≥50 Grams W/O Self-Healing | Permanent(2) Scratch W/O Self-Healing |
| Comp. Ex. 17 (Neorez™-9699 +Neorez™ CX-100) | Permanent(2) Scratch W/O Self-Healing | Scratched at(2)_≥50 Grams W/O Self-Healing | Permanent(2) Scratch W/O Self-Healing |
| Comp. Ex. 18 (Neorez™-9679 +Neorez™ CX-100) | Permanent(2) Scratch W/O Self-Healing | Scratched at(2)_≥50 Grams W/O Self-Healing | Permanent(2) Scratch W/O Self-Healing |
| Comp. Ex. 19 (Neorez™-9679 +Neorez™-A601 +Neorez™ CX-100) | Permanent(2) Scratch W/O Self-Healing | Scratched at(2)_≥50 Grams W/O Self-Healing | Permanent(2) Scratch W/O Self-Healing |
| Comp. Ex. 20 Conventional Solvent-Based Reactive 2-Part PUR | Permanent(1) Scratch W/O Self-Healing | Scratched at(1)_≥100 Grams and Self-Healed in 10 days | No Scratch |
| Comp. Ex. 21 Miles Water-Based Reactive 2-Part Polyurethane-Urea | Permanent(2) Scratch W/O Self-Healing | Scratched at(2)_≥ 50 Grams W/O Self-Healing Healing | Permanent(2) Scratch W/O Self-Healing |

(1) Samples were scratched permanently without self-healing character at 0°C. However, they all self-healed when put them back in 25°C, 70°C or 120°C.
(2) Samples were scratched permanently without self-healing character in tested temperatures. No self-healing of the scratched surface was observed even when put in higher temperatures, e.g. 25°C, 70°C or 120°C.
(3) W/O means "without".

Examples of scratch resistant and self-healable solvent-based 2-part PUR clear coats that contain segmented polydimethylsiloxane diol or perfluoropolyether diol in the resulting cross-linked PUR backbones are provided in Tables 15 and 16. The scratch resistance and self-healing characteristics are summarized in Table 17. The materials used

and their suppliers are summarized in Table 14.

Table 14

| Materials and Suppliers | | |
|---|---|---|
| Materials | Functions and Characteristics | Suppliers |
| Carbinol Terminated Polydimethyl Siloxane Diol (PMS-556) | Polydimethyl Siloxane Diol -OH EqWt=472.45 | Huls America, Inc |
| Dynamar™ L-9939 | Perfluoroether Diol -OH EqWt=565.20 | 3M |
| Lexorez™-1400-120 | Polyester Diol -OH EqWt=470.00 | Inolex Chemical |
| Joncryl™-510 | Acrylic Polyol -OH EqWt=400.00 | S.C. Johnson Polymer |
| Joncryl™ SCX-802 | Acrylic Polyol -OH EqWt=660.00 | S.C. Johnson Polymer |
| Joncryl™-587 | Acrylic Polyol -OH EqWt=600.00 | S.C. Johnson Polymer |
| Tone™-305 | Polyester Triol -OH EqWt=180.00 | Union Carbide |
| Tone™-201 | Polyester diol -OH EqWt=264.62 | Union Carbide |
| Butyl Acetate | Organic Solvent | Eastman Chemical |
| PM-Acetate | Organic Solvent | Eastman Chemical |
| Methylethyl Ketone | Organic Solvent | Eastman Chemical |
| Fluorad™ FC-430 | Surfactant | 3M |
| Cellulose Acetate Butyrate (CAB 381-0.1) | Flow Modifier | Eastman Chemical |
| Dibutyl Tin Dilaurate | Catalyst | CasChem, Inc |
| Diisobutyl Ketone | Organic Solvent | Eastman Chemical |
| Tinuvin™-123 | Hindered Amine | Ciba Geigy |
| 2,4-Pentanedione | Pot Life Extender | Eastman Chemical |
| Methyl n-Amylketone | Solvent | Eastman Chemical |
| Multiflow™ | Flow Modifier | Monsanto |
| COROC® A-2201-M | Flow Modifier | Cook Composites and Polymers |
| COROC® A-620-A2 | Flow Modifier | Cook Composites and Polymers |
| Luxate™ HT-2000 | Polyisocyanate -NCO EqWt=190.00 | Olin Chemicals |
| Desmodur™ N-3300 | Polyisocyanate -NCO EqWt=194.00 | Bayer |
| Desmodur™ N-3390 | Polyisocyanate -NCO EqWt=215.00 | Bayer |

Example 22, Segmented Polydimethyl Siloxane PUR

The coating solution mixture summarized in Example 22 in Table 15 was thoroughly mixed for 3 minutes and coated 50 micron wet thickness to obtain 37.5 micron dry thickness. The clear coat was cured 2 minutes at 73 °C, 2 minutes at 95 °C and 6 minutes at 135 °C. It was further forced by cured 1 hour at 100 °C. The scratch resistance and self-healing character were then tested according to Test E. The cross-linked PUR prepared in this Example 22 contains about 15% polydimethyl siloxane segment in the backbones.

Example 23, Segmented Polydimethyl Siloxane PUR

The coating mixture shown in Example 23 in Table 15 was coated and cured in the same ways as described in Example 22. The scratch resistant and self-healing character were then tested according to Test E. The resulting cross-linked PUR prepared in this Example 23 contains 6.6% polydimethyl siloxane segment in the backbones.

Example 24, Segmented Perfluoroether PUR

The coating mixture shown in Example 24 in Table 15 was coated and cured in the same ways as described in Example 22. The scratch resistant and self-healing character were then tested according to Test E. The resulting cross-linked PUR prepared in this Example contains about 15% perfluoroether segment in the backbones.

Example 25, Segmented Perfluoroether PUR

The coating mixture shown in Example 25 in Table 15 was coated and cured in the same ways as described in Example 22. The scratch resistant and self-healing character were then tested according to Test E. The resulting cross-linked PUR prepared in this Example contains 6.6% perfluoroether segment in the backbones.

Comparative Example 26.

The coating solution mixture shown in Comp. Example 26 in Table 15 was coated and cured in the same ways as shown in Example 22. The scratch resistance and self-healing character were tested according to Test E.

Example 27, Segmented Perfluoropolyether PUR

The coating solution mixture shown in Example 27 in Table 16 was screened by using a 110 mesh screen. It was cured in a same manner as described in Example 22. The scratch resistant and self-healing character were tested according to Test E. The resulting cross-linked PUR prepared in this Example contains 16.4% perfluoroether segment in the backbones.

Example 28, Segmented Polydimethyl Siloxane PUR

The coating solution mixture shown in Example 28 in Table 16 was coated and cured in the same ways as described in Example 22. The scratch resistance and self-healing character were tested according to Test E. The resulting cross-linked PUR contains 18.8% polydimethyl siloxane segment in the backbones.

Example 29, Segmented Polydimethyl Siloxane PUR

The coating solution mixture shown in Example 29 in Table 16 was coated and cured in the same ways as described in Example 1. The scratch resistance and self-healing character were tested according to Test E. The resulting cross-linked PUR contains 9.2% polydimethyl siloxane segment in the backbones.

Comparative Example 30.

The coating solution mixture shown in Comp. Example 30 in Table 16 was screened and cured in the same manner as described in Example 27. The scratch resistance and self-healing character were tested according to Test E.

Table 15

| Formulations of Solvent-Based 2-Part Reactive Polyurethanes* | | | | | |
|---|---|---|---|---|---|
| | Example 22 | Example 23 | Example 24 | Example 25 | Comp. Example 26 |
| Carbinol Terminated Polydimethyl Siloxane PS-556 | 16.25 | 8.13 | 0.00 | 0.00 | 0.00 |
| Dynamar™ L-9939 | 0.00 | 0.00 | 16.25 | 8.13 | 0.00 |
| Lexorez™-1400-120 | 10.45 | 5.22 | 10.45 | 5.22 | 16.81 |
| Joncryl™-510 (80% in Xylene) | 35.47 | 57.74 | 35.47 | 57.74 | 0.00 |
| Joncryl™ SCX-802 | 0.00 | 0.00 | 0.00 | 0.00 | 33.61 |
| Tone™-305 | 11.92 | 15.95 | 11.92 | 15.95 | 8.40 |
| Butyl Acetate | 11.82 | 5.91 | 11.82 | 5.91 | 6.64 |

*weights in grams unless indicated otherwise

Table 15 (continued)

| Formulations of Solvent-Based 2-Part Reactive Polyurethanes* | | | | | |
|---|---|---|---|---|---|
| | Example 22 | Example 23 | Example 24 | Example 25 | Comp. Example 26 |
| PM-Acetate | 7.09 | 3.50 | 7.09 | 3.50 | 12.60 |
| Methylethyl Ketone | 0.00 | 12.00 | 0.00 | 5.00 | 14.37 |
| Fluorad™ FC-430 (20% in PM-Acetate) | 4.73 | 2.37 | 4.73 | 2.37 | 3.38 |
| Dibutyl Tin Dilaurate (1% in Butyl Acetate) | 2.36 | 1.18 | 2.36 | 1.18 | 1.68 |
| Diisobutyl Ketone | 0.00 | 0.00 | 0.00 | 0.00 | 2.51 |
| Tinuvin™-123 | 1.50 | 1.50 | 1.50 | 1.50 | 100.00 |
| Tinuvin™-1130 | 1.60 | 1.60 | 1.60 | 1.60 | 0.00 |
| COROC® A-2201-M | 1.00 | 1.00 | 0.00 | 0.00 | 0.00 |
| COROC® A-620-A2 | 0.00 | 0.00 | 0.00 | 1.00 | 0.00 |
| Luxate™ HT-2000 | 38.20 | 46.64 | 38.22 | 46.72 | 0.00 |
| Desmodur™N-3300 | 0.00 | 0.00 | 0.00 | 0.00 | 28.40 |
| Solid% | 77.2% | 77.8% | 77.3% | 81.1% | 68.5% |
| Viscosity (cps) | 150 | 150 | 200 | 150 | 200 |
| Wt% Segmented Polydimethylsiloxane | 15.00 | 6.60 | 0.00 | 0.00 | 0.00 |
| Wt% Segmented Perfluoropolyether | 0.00 | 0.00 | 15.00 | 6.60 | 0.00 |

*weights in grams unless indicated otherwise

Table 16

| Formulations of Solvent-Based 2-Part Reactive Polyurethanes.* | | | | |
|---|---|---|---|---|
| Ingredients | Example 27 | Example 28 | Example 29 | Comp. Example 30 |
| Butyl Cellosolve Acetate | 12.0 | 12.0 | 12.0 | 24.0 |
| Methyl n-Amylketone | 6.0 | 6.0 | 6.0 | 12.0 |
| Joncryl™-587 | 16.1 | 16.1 | 16.1 | 37.2 |
| Tone™ PCP-201 | 9.3 | 9.3 | 9.3 | 18.6 |
| CAB 381-0.1 | 1.7 | 1.7 | 1.7 | 3.4 |
| Multiflow™ | 0.8 | 0.8 | 0.8 | 1.6 |
| Cosorb OSG | 1.5 | 1.5 | 1.5 | 2.4 |
| Tinuvin™-292 | 0.7 | 0.7 | 0.7 | 0.8 |
| DBTDL (10% in Butyl Cellosolve) | 0.4 | 0.4 | 0.4 | 0.8 |
| 2,4-Pentanedione | 5.0 | 5.0 | 5.0 | 10.0 |
| Butyl Cellosolve | 15.0 | 15.0 | 15.0 | 30.0 |
| Dynamar™ L-9939 | 10.0 | 0.0 | 0.0 | 0.0 |

*weights in grams unless indicated otherwise

Table 16 (continued)

| Formulations of Solvent-Based 2-Part Reactive Polyurethanes.* | | | | |
|---|---|---|---|---|
| Ingredients | Example 27 | Example 28 | Example 29 | Comp. Example 30 |
| Carbinol Terminated polydimethyl Siloxane (PS-556) | 0.0 | 12.0 | 5.0 | 0.00 |
| Desmodur™-3390 | 20.6 | 21.3 | 18.5 | 33.0 |
| Wt% of Perfluoroether Segment | 16.4% | 0.0 | 0.0 | 0.0 |
| Wt% of Polydimethyl Siloxane Segment | 0.0 | 18.8% | 9.2% | 0.0 |
| Wt% Solid | 60.4% | 61.4% | 61.0% | 54.0% |

*weights in grams unless indicated otherwise

Table 17

| Scratch Resistance and Self-Healability of Solvent-Based 2-Part Polyurethanes. | | | |
|---|---|---|---|
| | Tested at 0 °C | Tested at 25 °C | Tested at 70 °C |
| Example 22 (15% Si) | (1)Permanent scratch W/O self-healing | No scratch | No Scratch |
| Example 23 (6.6% Si) | (1)Permanent Scratch W/O Self-Healing | Slight scratch but self-heal within 2 minutes | No Scratch |
| Example 24 (15% F) | (1)Permanent scratch W/O self-healing | No scratch | No Scratch |
| Example 25 (6.6% F) | (1)Permanent scratch W/O self-healing | Slight scratch but self-heal within 2 minutes | No Scratch |
| Comparative Example 26 | (1)Permanent Scratch W/O Self-Healing | Scratch at ≥100 grams and self-healed in 10 days | No Scratch |
| Example 27 (16.4% F) | (1)Permanent scratch W/O self-healing | Scratch at ≥50 grams and no self-healing | No Scratch |
| Example 28 (18.8% Si) | (1)Permanent scratch W/O self-healing | Slight scratch but self-healed within 5 minutes | No Scratch |
| Example 29(9.2% Si) | (1)Permanent scratch W/O self-healing | Slight scratch and self-healed within 5 minutes | No Scratch |
| Comparative Example 30 | (1)Permanent scratch W/O self-healing | Scratch at ≥50 grams and no self-healing | Slight scratch |

(1) Samples were scratched permanently without self-healing character at 0 °C. However, they all self-healed when put them back in 25 °C or 70 °C.

Comparative Examples 26 and 30, which do not have polydimethyl siloxane or perfluoropolyether segments in the polymer backbones, showed very poor scratch resistance at 25 °C. The scratch in Comparative Example 26 self-healed at 25 °C in 10 days, where the scratch in Comparative Example 30 did not show any self-healing at 25 °C. No scratch was obtained in Comparative Example 26 when tested at 70 °C, where Comparative Example 30 scratched slightly at 70 °C due to its high acrylic content. Both Comparative Examples 26 and 30 scratched permanently at 0 °C without self-healing. The scratch in Comparative Example 26 self-healed in 10 days when it was put in 25 °C environment, where the scratch in Comparative Example 30 did not self-heal when it was put in 25 °C.

Examples 22 and 24, which contain 15 wt% of polydimethyl siloxane segment and perfluoropolyether segment individually, show excellent scratch resistance at 25 °C and 70 °C. When these two samples were put at 0 °C, they scratched permanently with no distinct self-healing characteristic observed at 0 °C. However, when the scratched samples were put separately at 25 °C and 70 °C environment, they self-healed from several minutes to 30 seconds, respectively.

Examples 23 and 25, which contain 6.6 wt% of polydimethyl siloxane segment and perfluoropolyether segment

individually, showed excellent scratch resistance at 70 °C where, at 25 °C, they were scratched slightly when the weight load of the Hoffinan scratch tester is heavier than 600 grams. The scratches in both samples self-healed in 2 minutes. Examples 23 and 25 were also scratched permanently at 0 °C. The scratches in both samples again self-healed in several minutes after the samples were put in 25 °C and 70 °C environment

Examples 28 and 29, which contain 18.8 wt% and 9.2 wt% of polydimethylsiloxane segment individually, showed good scratch resistance and self-healing characteristics like Examples 23 and 25. However, Example 27, which contains 16.4 wt% of perfluoropolyether segment, showed poor scratch resistance like Comparative Example 30 which did not exhibit self-healing characteristic. Accordingly, perfluoropolyether segment does not provide as good self-healing characteristic as polydimethyl siloxane segment does.

## Claims

**1.** A two-part curable composition having a Part A and a Part B wherein Part A is an aqueous composition comprising:

(a) optionally a methane prepolymer, wherein said prepolymer has:

(i) a sufficient number of carboxylic acid functional groups such that the acid number of the prepolymer ranges from 10 to 100;
(ii) optionally a segment(s) selected from polyalkyl siloxane diol segment(s), fluorinated-polyether diol segment(s), fluorinated-polyester diol segment(s), and combinations thereof;
(iii) an average hydroxyl functionality of the prepolymer of 1.85 to 2.7;
(iv) a hydroxyl equivalent-weight of the prepolymer in the range of 500 to 5000;

(b) optionally a first acrylic polymer having at least one hydroxyl functional group and optionally 1 or more carboxyl functional groups such that said first acrylic polymer has an acid number in the range of 0 to 150;
(c) optionally a second acrylic polymer free of hydroxyl functionality and optionally having 1 or more carboxyl functional groups, wherein said second acrylic polymer has an acid number in the range of 0 to 150;
(d) optionally a first compound selected from polyalkylsiloxane diols, fluorinated-polyether diols, fluorinated polyester diols, and mixtures thereof, said first compound having a hydroxyl equivalent weight in the range of 200 to 2000;
(e) optionally a second compound selected from diols and polyols wherein said second compound optionally has one or more pendant carboxyl functional groups;
(f) water;
(g) optionally a surfactant; and
(h) optionally an organic coalescing solvent in an amount of up to 10% by weight based upon the total weight of Part A;

wherein at least one of (a) or (d) is present, provided that when (d) is absent then (a) must contain segment(s) (ii);
wherein (a) to (e) are water soluble and/or water emulsifiable and/or water-dispersible;
and, wherein not greater than 35 weight percent total of segment(s) of element (a)(ii) plus compound(s) of element (d) are present based upon the total solids content of Part A; and wherein Part B is a water-soluble and/or water emulsifiable and/or water-dispersible composition which comprises:

(1) a crosslinker selected from polyisocyanates, blocked polyisocyanates, and mixtures thereof; and
(2) optionally a coalescing solvent in an amount of up to 25% by weight based upon the total weight of Part B;

wherein the NCO:OH ratio of Part B to Part A ranges from 1:1 to 1.15:1.

**2.** The two-part curable composition of claim 1 wherein Part A is a composition comprising:

(a) optionally 0 to 60 weight percent urethane prepolymer based on the total weight of Part A;
(b) optionally 0 to 65 weight percent of the first acrylic polymer based on the total weight of Part A;
(c) optionally 0 to 45 weight percent of the second acrylic polymer based on the total weight of Part A;
(d) optionally 0 to 35 weight percent of the first compound based upon the total weight of Part A;
(e) optionally 0 to 45 weight percent of the second compound based on;
(f) sufficient water such that the percent solids for Part A is from 15 to 65%;
(g) optionally 0 to 3 weight percent of the surfactant based upon the total weight of Part A; and

(h) optionally 0 to 10 weight percent of the organic coalescing solvent based on the total weight of Part A; and Part B is a composition which comprises:

(1) 75 to 100 weight percent of a crosslinker based upon the total weight of Part B; and
(2) optionally 0 to 25 weight percent of a coalescing solvent based upon the total weight of Part B.

**3.** A crosslinked polyurethane having pendant carboxylic acid functional groups having a crosslink density of 10 to 80%, a storage modulus of $8.0 \times 10^7$ to $5.0 \times 10^9$ Pascals at 25°C, a glass transition temperature of-20°C to 100°C, and a damping factor at glass transition region of greater than 0.4, obtainable by curing of a two-part curable composition of claim 1 or 2, wherein said damping factor being measured by a Dynamic Mechanical Thermal Analyzer based on 25-50 microns of film thickness and 1 Hz of frequency, said crosslink density being calculated according to the following formula

$$\text{Crosslink Density} = \frac{\text{weight of materials with functionalities of} \geq 3 \text{ from which the polyurethane is formed}}{\text{weight of the final cured polyurethane}} \times 100 ,$$

said storage modulus being measured by a dynamic mechanical thermal analyzer based on 20-50 microns thickness of film and 1.0 Hz frequency.

**4.** A polyurethane prepolymer useful in Part A of the composition according to claim 1 comprising the reaction product of:

(a) a diisocyanate;
(b) a carboxyl-functional diol having a hydroxyl equivalent weight in the range of up to 2000 and a sufficient number of carboxyl groups such that said diol has an acid number in the range of 20 to 420;
(c) a first compound selected from polyalkyl siloxane diols, fluorinated-polyether diols, fluorinated-polyester diols, and mixtures thereof, said first compound having a hydroxyl equivalent weight in the range of 200 to 2000; and
(d) optionally a polymeric diol having an equivalent weight of from 400 to 4000;
(e) optionally a chain extender selected from diol chain extenders, triol chain extenders, and mixtures thereof;

wherein 0 to 15 weight percent of triol chain extender is present based upon the total weight of the prepolymer; and wherein the NCO:OH ratio of components from which the prepolymer is made ranges from 1:1.3 to 1:1.9.

**5.** A urethane prepolymer having

(a) a sufficient number of carboxylic acid functional groups such that the acid number of the prepolymer ranges from 10 to 100;
(b) a segment(s) selected from polyalkyl siloxane diol segment(s), fluorinated-polyether diol segment(s), fluorinated-polyester diol segment(s), and combinations thereof;
(c) an average hydroxyl functionality of the prepolymer of 1.85 to 2.7; and
(d) a hydroxyl equivalent weight of the prepolymer in the range of 500 to 5000.

**6.** A method of making a cured polyurethane comprising the steps of:

(I) combining a Part A and a Part B according to claim 1 to form a mixture wherein the crosslinker in Part B is selected from polyisocyanates and mixtures thereof;
(II) coating the mixture on a substrate;
(III) exposing the coated substrate to a temperature high enough to evaporate at least 90% by weight of the water present in the mixture but low enough so as not to initiate reaction between water and isocyanate groups present on the polyisocyanate;
(IV) curing the coating by a step selected from:

(1) exposing the coated substrate to a temperature high enough to cure the coating but not so high as to degrade the substrate until the coating is cured;
(2) exposing the coated substrate to a temperature sufficient to partially cure the coating to a tack-free

state without degrading the substrate, followed by exposure to a lower temperature at which it is still capable of being cured until the coating is cured.

**7.** The method of claim 6 wherein the polyisocyanate crosslinker is aliphatic.

**8.** A method of making a cured polyurethane comprising the steps of:

(I) combining a Part A and a Part B according to claim 1 to form a mixture wherein the crosslinker in Part B is selected from blocked polyisocyanates and mixtures thereof;
(II) coating the mixture on a substrate;
(III) exposing the coated substrate to a temperature sufficient to deblock the blocked polyisocyanate without degrading the substrate; and
(IV) exposing the coated substrate to a temperature sufficient to cause curing of the coating without degrading the substrate until the coating is cured.

**9.** A method of making a cured polyurethane comprising the steps of:

(I) combining a Part A and a Part B to form a mixture according to claim 1 wherein the crosslinker in Part B is selected from blocked polyisocyanates and mixtures thereof;
(II) coating the mixture on a substrate;
(III) exposing the coated substrate to a temperature sufficient to evaporate at least 90% of the water present in the mixture but too low to deblock the blocked polyisocyanate crosslinker; and
(IV) exposing the coated substrate to a temperature sufficient to deblock the blocked polyisocyanate crosslinker and cure the coating without degrading the substrate, until the coating is cured.

**10.** The method of any one of claims 6 to 9, wherein the NCO:OH ratio is 1:1 to 1.1:1.

**11.** A component for a curable composition comprising:

(a) optionally a urethane prepolymer, wherein the said prepolymer has:

(i) a sufficient number of carboxylic acid functional groups such that the acid number of the prepolymer ranges from 10 to 100;
(ii) optionally a segment(s) selected from polyalkyl siloxane diol segment(s), fluorinated-polyether diol segment(s), fluorinated-polyester diol segment(s), and combinations thereof;
(iii) an average hydroxyl functionality of the prepolymer of 1.85 to 2.7;
(iv) a hydroxyl equivalent-weight of the prepolymer in the range of 500 to 5000;

(b) optionally a first acrylic polymer having at least one hydroxyl functional group and optionally 1 or more carboxyl functional groups such that said first acrylic polymer has an acid number in the range of 0 to 150;
(c) optionally a second acrylic polymer free of hydroxyl functionality and optionally having 1 or more carboxyl functional groups, wherein said second acrylic polymer has an acid number in the range of 0 to 150;
(d) optionally a first compound selected from polyalkylsiloxane diols, fluorinated-polyether diols, fluorinated polyester diols, and mixtures thereof, said first compound having a hydroxyl equivalent weight in the range of 200 to 2000;
(e) optionally a second compound selected from diols and polyols wherein said second compound optionally has one or more pendant carboxyl functional groups;
(f) water;
(g) optionally a surfactant;
(h) optionally an organic coalescing solvent in an amount of up to 10% by weight based upon the total weight of the component;

wherein at least one of (a) or (d) is present, provided that when (d) is absent then (a) must contain segment(s) (ii);
wherein (a) to (e) are water soluble and/or water emulsifiable and/or water-dispersible; and
wherein not greater than 35 weight percent total of segment(s) of element (a) (ii) plus compound(s) of element (d) are present based upon the total solids content of the component.

**12.** A two-part curable composition having a Part A and a Part B wherein Part A is a non-aqueous composition comprising:

(a) optionally a urethane prepolymer, wherein said prepolymer has:

(i) optionally carboxylic acid functional groups such that the acid number of the prepolymer ranges from 0 to 100;
(ii) optionally a segment(s) selected from polyalkyl siloxane diol segment(s), fluorinated-polyether diol segment(s), fluorinated-polyester diol segment(s), and combinations thereof;
(iii) an average hydroxyl functionality of the prepolymer of 1.85 to 2.7;
(iv) a hydroxyl equivalent-weight of the prepolymer in the range of 500 to 5000;

(b) optionally a first acrylic polymer having at least one hydroxyl functional group and optionally 1 or more carboxyl functional groups such that said first acrylic polymer has an acid number in the range of 0 to 150;
(c) optionally a second acrylic polymer free of hydroxyl functionality and optionally having 1 or more carboxyl functional groups, wherein said second acrylic polymer has an acid number in the range of 0 to 150;
(d) optionally a first compound selected from polyalkylsiloxane diols, fluorinated-polyether diols, fluorinated polyester diols, and mixtures thereof, said first compound having a hydroxyl equivalent weight in the range of 200 to 2000;
(e) optionally a second compound selected from diols and polyols wherein said second compound optionally has one or more pendant carboxyl functional groups;
(f) optionally a nonionic surfactant;
(g) an organic solvent; and wherein at least one of the following elements is present: element (a) having a segment (ii); element (d);

wherein (a) to (e) are organic solvent soluble and/or organic solvent dispersible; and
wherein 2 to 35 weight percent total of segment(s) of element (a) (ii) plus compound(s) of element (d) are present based upon the total solids content of Part A; and wherein Part B is a non-aqueous organic solvent soluble and/or organic solvent dispersible composition which comprises:

(1) a crosslinker selected from polyisocyanates, blocked polyisocyanates and mixtures thereof; and
(2) optionally an organic solvent;

wherein the NCO:OH ratio of Part B to Part A ranges from 0.95:1 to 1.07:1.

**13.** The two-part curable composition of claim 12 wherein Part A is a non-aqueous composition comprising:

(a) optionally 0 to 60 weight percent urethane prepolymer based on the total weight of Part A;
(b) optionally 0 to 65 weight percent of the first acrylic polymer based on the total weight of Part A;
(c) optionally 0 to 45 weight percent of the second acrylic polymer based on the total weight of Part A;
(d) optionally 0 to 35 weight percent of the first compound based upon the total weight of Part A;
(e) optionally 0 to 45 weight percent of the second compound based on the total weight of Part A;
(f) optionally 0 to 3 weight percent of the nonionic surfactant based upon the total weight of Part A; and
(g) up to 70 weight percent of the organic solvent based on the total weight of Part A; and

Part B is a composition which comprises;

(1) 30 to 100 weight percent of a crosslinker based upon the total weight of Part B; and
(2) optionally 0 to 70 weight percent of an organic solvent based upon the total weight of Part B.

**14.** The crosslinked polyurethane prepared by the curing of the two-part curable composition of any one of claims 12 or 13.

**15.** The crosslinked polyurethane of claim 14 which is self-healing, i.e. a specimen scratched or marred according to ASTM 2197-86 can return to its original appearance when exposed to a temperature of above 10°C.

**16.** A crosslinked polyurethane having a crosslink density of 10 to 80%, a storage modulus of $8.0 \times 10^7$ to $5.0 \times 10^9$ Pascals at 25°C, a glass transition temperature of-20°C to 100°C, and a damping factor at glass transition region of greater than 0.4, obtainable by curing of a two-part curable composition of claim 12, wherein said damping factor

being measured by a Dynamic Mechanical Thermal Analyzer based on 25-50 microns of film thickness and 1 Hz of frequency, said crosslink density being calculated according to the following formula

$$\text{Crosslink Density} = \frac{\text{weight of materials with functionalities of } \geq 3 \text{ from which the polyurethane is formed}}{\text{weight of the final cured polyurethane}} \times 100 ,$$

said storage modulus being measured by a dynamic mechanical thermal analyzer based on 20-50 microns thickness of film and 1.0 Hz frequency.

**17.** A substrate coated with the crosslinked polyurethane of claim 14 or 15.

**18.** The coated substrate of claim 17 wherein the substrate is selected from wood, metal, glass, cloth, paint, leather, paper, rubber, concrete, and plastic.

## Patentansprüche

**1.** Zweiteilige härtbare Zusammensetzung mit einem Teil A und einem Teil B, wobei Teil A eine wässrige Zusammensetzung ist, umfassend:

(a) gegebenenfalls ein Urethanpräpolymer, wobei das Präpolymer aufweist:

(i) eine ausreichende Anzahl an carbonsäure-funktionellen Gruppen, so dass die Säurezahl des Präpolymers im Bereich von 10 bis 100 liegt;
(ii) gegebenenfalls (ein) Segment(e), ausgewählt aus Polyalkylsiloxandiolsegment(en), Segment(en) von fluoriertem Polyetherdiol, Segment(en) von fluoriertem Polyesterdiol und Kombinationen davon;
(iii) eine durchschnittliche Hydroxylfunktionalität des Präpolymers von 1,85 bis 2,7;
(iv) ein Hydroxyläquivalentgewicht des Präpolymers im Bereich von 500 bis 5000;

(b) gegebenenfalls ein erstes Acrylpolymer mit wenigstens einer hydroxyl-funktionellen Gruppe und gegebenenfalls 1 oder mehr carboxyl-funktionellen Gruppen, so dass das erste Acrylpolymer eine Säurezahl im Bereich von 0 bis 150 aufweist;
(c) gegebenenfalls ein zweites Acrylpolymer ohne Hydroxylfunktionalität und gegebenenfalls mit 1. oder mehr carboxyl-funktionellen Gruppen, wobei das zweite Acrylpolymer eine Säurezahl im Bereich von 0 bis 150 aufweist;
(d) gegebenenfalls eine erste Verbindung, ausgewählt aus Polyalkylsiloxandiolen, fluorierten Polyetherdiolen, fluorierten Polyesterdiolen und Gemischen davon, wobei die erste Verbindung ein Hydroxyläquivalentgewicht im Bereich von 200 bis 2000 aufweist;
(e) gegebenenfalls eine zweite Verbindung, ausgewählt aus Diolen und Polyolen, wobei die zweite Verbindung gegebenenfalls eine oder mehr carboxyl-funktionelle Seitengruppen aufweist;
(f) Wasser;
(g) gegebenenfalls einen Surfactanten; und
(h) gegebenenfalls ein organisches Koaleszenzlösungsmittel in einer Menge von bis zu 10 Gew.%, bezogen auf das Gesamtgewicht von Teil A;

wobei wenigstens eines von (a) oder (d) vorhanden ist, mit der Maßgabe dass, wenn (d) fehlt, dann (a) Segment (e) (ii) enthalten muss,
wobei (a) bis (e) wasserlöslich und/oder in Wasser emulgierbar und/oder in Wasser dispergierbar sind; und,
wobei nicht mehr als 35 Gew.% insgesamt an Segment(en) von Element (a)(ii) plus Verbindung(en) von Element (d) vorhanden sind, bezogen auf den Gesamtfeststoffgehalt von Teil A; und
wobei Teil B eine wasserlösliche und/oder in Wasser emulgierbare und/oder in Wasser dispergierbare Zusammensetzung ist, die umfasst:

(1) ein Vernetzungsmittel, ausgewählt aus Polyisocyanaten, inaktivierten Polyisocyanaten und Gemischen davon; und
(2) gegebenenfalls ein Koaleszenzlösungsmittel in einer Menge von bis zu 25 Gew.%, bezogen auf das Gesamtgewicht von Teil B;

wobei das Verhältnis NCO:OH von Teil B zu Teil A im Bereich von 1:1 bis 1,15:1 liegt.

2. Zweiteilige härtbare Zusammensetzung nach Anspruch 1, wobei Teil A eine Zusammensetzung ist, umfassend:

(a) gegebenenfalls 0 bis 60 Gew.% Urethanpräpolymer, bezogen auf das Gesamtgewicht von Teil A;
(b) gegebenenfalls 0 bis 65 Gew.% des ersten Acrylpolymers, bezogen auf das Gesamtgewicht von Teil A;
(c) gegebenenfalls 0 bis 45 Gew.% des zweiten Acrylpolymers, bezogen auf das Gesamtgewicht von Teil A;
(d) gegebenenfalls 0 bis 35 Gew.% der ersten Verbindung, bezogen auf das Gesamtgewicht von Teil A;
(e) gegebenenfalls 0 bis 45 Gew.% der zweiten Verbindung, bezogen auf das Gesamtgewicht von Teil A;
(f) ausreichend Wasser, so dass der prozentuale Feststoffgehalt für Teil A von 15 bis 65% beträgt;
(g) gegebenenfalls 0 bis 3 Gew.% Surfactant, bezogen auf das Gesamtgewicht von Teil A; und
(h) gegebenenfalls 0 bis 10 Gew.% organisches Koaleszenzlösungsmittel, bezogen auf das Gesamtgewicht von Teil A;

und Teil B eine Zusammensetzung ist, umfassend:

(1) 75 bis 100 Gew.% Vernetzungsmittel, bezogen auf das Gesamtgewicht von Teil B; und
(2) gegebenenfalls 0 bis 25 Gew.% Koaleszenzlösungsmittel, bezogen auf das Gesamtgewicht von Teil B.

3. Vernetztes Polyurethan mit carbonsäure-funktionellen Seitengruppen und einer Vernetzungsdichte von 10 bis 80%, einem Speichermodul von $8{,}0 \times 10^7$ bis $5{,}0 \times 10^9$ Pascal bei 25 °C, einer Glasumwandlungstemperatur von -20 °C bis 100 °C und einem Dämpfungsfaktor im Bereich der Glasumwandlung von mehr als 0,4, erhältlich durch Härten einer zweiteiligen härtbaren Zusammensetzung nach Anspruch 1 oder 2, wobei der Dämpfungsfaktor bei 25 bis 50 µm Filmdicke und einer Frequenz von 1 Hz mit einem dynamisch-mechanisch-thermischen Analysator gemessen wird und die Vernetzungsdichte gemäß der folgenden Formel berechnet wird

$$\text{Vernetzungsdichte} = \frac{\text{Gewicht der Materialien mit Funktionalitäten} \geq 3\text{, aus denen das Polyurethan erzeugt wird}}{\text{Gewicht des fertig gehärteten Polyurethans}} \times 100$$

wobei der Speichermodul bei 20 bis 50 µm Filmdicke und einer Frequenz von 1,0 Hz mit einem dynamisch-mechanisch-thermischen Analysator gemessen wird.

4. Polyurethanpräpolymer, das in Teil A der Zusammensetzung nach Anspruch 1 verwendbar ist, umfassend das Reaktionsprodukt aus:

(a) einem Diisocyanat;
(b) einem carboxyl-funktionellen Diol mit einem Hydroxyläquivalentgewicht im Bereich von bis zu 2000 und einer ausreichenden Anzahl an Carboxylgruppen, so dass das Diol eine Säurezahl im Bereich von 20 bis 420 aufweist;
(c) einer ersten Verbindung, ausgewählt aus Polyalkylsiloxandiolen, fluorierten Polyetherdiolen, fluorierten Polyesterdiolen und Gemischen davon, wobei die erste Verbindung ein Hydroxyläquivalentgewicht im Bereich von 200 bis 2000 aufweist;
(d) gegebenenfalls einem polymeren Diol mit einem Äquivalentgewicht von 400 bis 4000; und
(e) gegebenenfalls einem Kettenverlängerer, ausgewählt aus Diolkettenverlängerern, Triolkettenverlängerern und Gemischen davon;

wobei 0 bis 15 Gew.% an Triolkettenverlängerer vorhanden ist, bezogen auf das Gesamtgewicht des Präpolymers; und wobei das Verhältnis NCO:OH der Komponenten, aus denen das Präpolymer hergestellt wird, im Bereich von 1:1,3 bis 1:1,9 liegt.

5. Urethanpräpolymer mit

(a) einer ausreichenden Anzahl an carbonsäure-funktionellen Gruppen, so dass die Säurezahl des Präpolymers im Bereich von 10 bis 100 liegt;

(b) (einem) Segment(en), ausgewählt aus Polyalkylsiloxandiolsegment(en), Segment(en) von fluoriertem Polyetherdiol, Segment(en) von fluoriertem Polyesterdiol und Kombinationen davon;
(c) einer durchschnittlichen Hydroxylfunktionalität des Präpolymers von 1,85 bis 2,7; und
(d) einem Hydroxyläquivalentgewicht des Präpolymers im Bereich von 500 bis 5000.

**6.** Verfahren zur Herstellung von gehärtetem Polyurethan, umfassend die Schritte:

(I) Vereinigen eines Teils A und eines Teils B nach Anspruch 1 zu einem Gemisch, wobei das Vernetzungsmittel in Teil B ausgewählt wird aus Polyisocyanaten und Gemischen davon;
(II) Beschichten eines Substrats mit dem Gemisch;
(III) Erhitzen des beschichteten Substrats auf eine Temperatur, die ausreichend hoch ist, so dass wenigstens 90 Gew.% des im Gemisch vorhandenen Wassers verdampfen, aber ausreichend niedrig, so dass die Reaktion zwischen Wasser und den am Polyisocyanat vorhandenen Isocyanatgruppen nicht gestartet wird; und
(IV) Härten der Beschichtung durch einen Schritt, ausgewählt aus:

(1) Erhitzen des beschichteten Substrats auf eine Temperatur, die ausreichend hoch ist, so dass die Beschichtung gehärtet wird, aber nicht so hoch, dass sich das Substrat zersetzt, bis die Beschichtung ausgehärtet ist;
(2) Erhitzen des beschichteten Substrats auf eine Temperatur, die ausreicht, um die Beschichtung zu einem nicht klebrigen Zustand teilweise zu härten, ohne dass sich das Substrat zersetzt, gefolgt von Erhitzen auf eine niedrigere Temperatur, bei der sie immer noch ausgehärtet werden kann, bis die Beschichtung ausgehärtet ist.

**7.** Verfahren nach Anspruch 6, wobei das Polyisocyanatvemetzungsmittel aliphatisch ist.

**8.** Verfahren zur Herstellung von gehärtetem Polyurethan, umfassend die Schritte:

(I) Vereinigen eines Teils A und eines Teils B nach Anspruch 1 zu einem Gemisch, wobei das Vernetzungsmittel in Teil B ausgewählt wird aus inaktivierten Polyisocyanaten und Gemischen davon;
(II) Beschichten eines Substrats mit dem Gemisch;
(III) Erhitzen des beschichteten Substrats auf eine Temperatur, die ausreicht, um das inaktivierte Polyisocyanat zu aktivieren, ohne dass sich das Substrat zersetzt; und
(IV) Erhitzen des beschichteten Substrats auf eine Temperatur, die zum Bewirken des Härtens der Beschichtung ausreicht, ohne dass sich das Substrat zersetzt, bis die Beschichtung ausgehärtet ist.

**9.** Verfahren zur Herstellung von gehärtetem Polyurethan, umfassend die Schritte:

(I) Vereinigen eines Teils A und eines Teils B nach Anspruch 1 zu einem Gemisch, wobei das Vemetzungsmittel in Teil B ausgewählt wird aus inaktivierten Polyisocyanaten und Gemischen davon;
(II) Beschichten eines Substrats mit dem Gemisch;
(III) Erhitzen des beschichteten Substrats auf eine Temperatur, die ausreicht, so dass wenigstens 90 Gew.% des im Gemisch vorhandenen Wassers verdampfen, aber zu niedrig ist, um das inaktivierte Polyisocyanatvernetzungsmittel zu aktivieren; und
(IV) Erhitzen des beschichteten Substrats auf eine Temperatur, die ausreicht, um das inaktivierte Polyisocyanatvernetzungsmittel zu aktivieren und die Beschichtung zu härten, ohne dass sich das Substrat zersetzt, bis die Beschichtung ausgehärtet ist.

**10.** Verfahren nach einem der Ansprüche 6 bis 9, wobei das Verhältnis NCO:OH 1:1 bis 1,1:1 beträgt.

**11.** Komponente für eine härtbare Zusammensetzung, umfassend:

(a) gegebenenfalls ein Urethanpräpolymer, wobei das Präpolymer aufweist:

(i) eine ausreichende Anzahl an carbonsäure-funktionellen Gruppen, so dass die Säurezahl des Präpolymers im Bereich von 10 bis 100 liegt;
(ii) gegebenenfalls (ein) Segment(e), ausgewählt aus Polyalkylsiloxandiolsegment(en), Segment(en) von fluoriertem Polyetherdiol, Segment(en) von fluoriertem Polyesterdiol und Kombinationen davon;
(iii) eine durchschnittliche Hydroxylfunktionalität des Präpolymers von 1,85 bis 2,7;

(iv) ein Hydroxyläquivalentgewicht des Präpolymers im Bereich von 500 bis 5000;

(b) gegebenenfalls ein erstes Acrylpolymer mit wenigstens einer hydroxyl-funktionellen Gruppe und gegebenenfalls 1 oder mehr carboxyl-funktionellen Gruppen, so dass das erste Acrylpolymer eine Säurezahl im Bereich von 0 bis 150 aufweist;
(c) gegebenenfalls ein zweites Acrylpolymer ohne Hydroxylfunktionalität und gegebenenfalls mit 1 oder mehr carboxyl-funktionellen Gruppen, wobei das zweite Acrylpolymer eine Säurezahl im Bereich von 0 bis 150 aufweist;
(d) gegebenenfalls eine erste Verbindung, ausgewählt aus Polyalkylsiloxandiolen, fluorierten Polyetherdiolen, fluorierten Polyesterdiolen und Gemischen davon, wobei die erste Verbindung ein Hydroxyläquivalentgewicht im Bereich von 200 bis 2000 aufweist;
(e) gegebenenfalls eine zweite Verbindung, ausgewählt aus Diolen und Polyolen, wobei die zweite Verbindung gegebenenfalls eine oder mehr carboxyl-funktionelle Seitengruppen aufweist;
(f) Wasser;
(g) gegebenenfalls einen Surfactanten; und
(h) gegebenenfalls ein organisches Koaleszenzlösungsmittel in einer Menge von bis zu 10 Gew.%, bezogen auf das Gesamtgewicht der Komponente;

wobei wenigstens eines von (a) oder (d) vorhanden ist, mit der Maßgabe dass, wenn (d) fehlt, dann (a) Segment (e) (ii) enthalten muss,
wobei (a) bis (e) wasserlöslich und/oder in Wasser emulgierbar und/oder in Wasser dispergierbar sind; und,
wobei nicht mehr als 35 Gew.% insgesamt an Segment(en) von Element (a)(ii) plus Verbindung(en) von Element (d) vorhanden sind, bezogen auf den Gesamtfeststoffgehalt der Komponente.

**12.** Zweiteilige härtbare Zusammensetzung mit einem Teil A und einem Teil B, wobei Teil A eine nicht wässrige Zusammensetzung ist, umfassend:

(a) gegebenenfalls ein Urethanpräpolymer, wobei das Präpolymer aufweist:

(i) gegebenenfalls carbonsäure-funktionellen Gruppen, so dass die Säurezahl des Präpolymers im Bereich von 0 bis 100 liegt;
(ii) gegebenenfalls (ein) Segment(e), ausgewählt aus Polyalkylsiloxandiolsegment(en), Segment(en) von fluoriertem Polyetherdiol, Segment(en) von fluoriertem Polyesterdiol und Kombinationen davon;
(iii) eine durchschnittliche Hydroxylfunktionalität des Präpolymers von 1,85 bis 2,7;
(iv) ein Hydroxyläquivalentgewicht des Präpolymers im Bereich von 500 bis 5000;

(b) gegebenenfalls ein erstes Acrylpolymer mit wenigstens einer hydroxyl-funktionellen Gruppe und gegebenenfalls 1 oder mehr carboxyl-funktionellen Gruppen, so dass das erste Acrylpolymer eine Säurezahl im Bereich von 0 bis 150 aufweist;
(c) gegebenenfalls ein zweites Acrylpolymer ohne Hydroxylfunktionalität und gegebenenfalls mit 1 oder mehr carboxyl-fünktionellen Gruppen, wobei das zweite Acrylpolymer eine Säurezahl im Bereich von 0 bis 150 aufweist;
(d) gegebenenfalls eine erste Verbindung, ausgewählt aus Polyalkylsiloxandiolen, fluorierten Polyetherdiolen, fluorierten Polyesterdiolen und Gemischen davon, wobei die erste Verbindung ein Hydroxyläquivalentgewicht im Bereich von 200 bis 2000 aufweist;
(e) gegebenenfalls eine zweite Verbindung, ausgewählt aus Diolen und Polyolen, wobei die zweite Verbindung gegebenenfalls eine oder mehr carboxyl-funktionelle Seitengruppen aufweist;
(f) gegebenenfalls einen nicht ionischen Surfactanten; und
(g) ein organisches Lösungsmittel;

und wobei wenigstens eines der folgenden Elemente vorhanden ist: Element (a) mit Segment (ii); Element (d);
wobei (a) bis (e) in organischen Lösungsmitteln löslich und/oder in organischen Lösungsmitteln dispergierbar sind; und,
wobei 2 bis 35 Gew.% insgesamt an Segment(en) von Element (a)(ii) plus Verbindung(en) von Element (d) vorhanden sind, bezogen auf den Gesamtfeststoffgehalt von Teil A; und
wobei Teil B eine nicht wässrige, in organischen Lösungsmitteln lösliche und/oder in organischen Lösungsmitteln dispergierbare Zusammensetzung ist, umfassend:

(1) ein Vemetzungsmittel, ausgewählt aus Polyisocyanaten, inaktivierten Polyisocyanaten und Gemischen davon; und
(2) gegebenenfalls ein organisches Lösungsmittel;

wobei das Verhältnis NCO:OH von Teil B zu Teil A im Bereich von 0,95:1 bis 1,07:1 liegt.

**13.** Zweiteilige härtbare Zusammensetzung nach Anspruch 12, wobei Teil A eine nicht wässrige Zusammensetzung ist, umfassend:

(a) gegebenenfalls 0 bis 60 Gew.% Urethanpräpolymer, bezogen auf das Gesamtgewicht von Teil A;
(b) gegebenenfalls 0 bis 65 Gew.% des ersten Acrylpolymers, bezogen auf das Gesamtgewicht von Teil A;
(c) gegebenenfalls 0 bis 45 Gew.% des zweiten Acrylpolymers, bezogen auf das Gesamtgewicht von Teil A;
(d) gegebenenfalls 0 bis 35 Gew.% der ersten Verbindung, bezogen auf das Gesamtgewicht von Teil A;
(e) gegebenenfalls 0 bis 45 Gew.% der zweiten Verbindung, bezogen auf das Gesamtgewicht von Teil A;
(f) gegebenenfalls 0 bis 3 Gew.% des nicht ionischen Surfactanten, bezogen auf das Gesamtgewicht von Teil A; und
(g) bis zu 70 Gew.% organisches Lösungsmittel, bezogen auf das Gesamtgewicht von Teil A;

und Teil B eine Zusammensetzung ist, umfassend:

(1) 30 bis 100 Gew.% Vemetzungsmittel, bezogen auf das Gesamtgewicht von Teil B; und
(2) gegebenenfalls 0 bis 70 Gew.% eines organischen Lösungsmittels, bezogen auf das Gesamtgewicht von Teil B.

**14.** Vernetztes Polyurethan, das durch Härten der zweiteiligen härtbaren Zusammensetzung nach einem der Ansprüche 12 oder 13 hergestellt wurde.

**15.** Vernetztes Polyurethan nach Anspruch 14, das selbstheilend ist, d. h. eine Probe, die gemäß ASTM 2197-86 geritzt oder verkratzt wurde, kann ihr ursprüngliches Erscheinungsbild wieder annehmen, wenn sie einer Temperatur über 10 °C ausgesetzt wird.

**16.** Vemetztes Polyurethan mit einer Vemetzungsdichte von 10 bis 80%, einem Speichermodul von $8{,}0 \times 10^7$ bis $5{,}0 \times 10^9$ Pascal bei 25 °C, einer Glasumwandlungstemperatur von -20°C bis 100 °C und einem Dämpfungsfaktor im Bereich der Glasumwandlung von mehr als 0,4, erhältlich durch Härten einer zweiteiligen härtbaren Zusammensetzung nach Anspruch 12, wobei der Dämpfungsfaktor bei 25 bis 50 µm Filmdicke und einer Frequenz von 1 Hz mit einem dynamisch-mechanisch-thermischen Analysator gemessen wird und die Vernetzungsdichte gemäß der folgenden Formel berechnet wird.

$$\text{Vernetzungsdichte} = \frac{\text{Gewicht der Materialien mit Funktionalitäten} \geq 3\text{, aus denen das Polyurethan erzeugt wird}}{\text{Gewicht des fertig gehärteten Polyurethans}} \times 100$$

wobei der Speichermodul bei 25 bis 50 um Filmdicke und einer Frequenz von 1,0 Hz mit einem dynamisch-mechanisch-thermischen Analysator gemessen wird.

**17.** Substrat, das mit dem vemetzten Polyurethan nach Anspruch 14 oder 15 beschichtet ist.

**18.** Beschichtetes Substrat nach Anspruch 17, wobei das Substrat aus Holz, Metall, Glas, Stoff, Lack, Leder, Papier, Kautschuk, Beton und Kunststoff ausgewählt wird.

## Revendications

**1.** Composition durcissable à deux composants ayant une partie A et une partie B, dans laquelle la partie A est une composition aqueuse comprenant :

(a) éventuellement un prépolymère d'uréthane, dans lequel ledit prépolymère a :

(i) un nombre suffisant de groupes fonctionnels acide carboxylique tel que l'indice d'acide du prépolymère soit situé dans la gamme comprise entre 10 et 100 ;
(ii) éventuellement un ou des segments choisis parmi le ou les segments polyalkylsiloxane-diol, le ou les segments polyéther-diol fluorés, le ou les segments polyester-diol fluorés, et les combinaisons de ceux-ci ;
(iii) une fonctionnalité hydroxyle moyenne du prépolymère comprise entre 1,85 et 2,7
(iv) une masse équivalente d'hydroxyle du prépolymère dans la gamme comprise entre 500 et 5000 ;

(b) éventuellement un premier polymère acrylique ayant au moins un groupe fonctionnel hydroxyle et éventuellement 1 ou plusieurs groupes fonctionnels carboxyle tels que ledit premier polymère acrylique ait un indice d'acide dans la gamme comprise entre 0 et 150 ;
(c) éventuellement un second polymère acrylique sans fonctionnalité hydroxyle et ayant éventuellement 1 ou plusieurs groupes fonctionnels carboxyle, dans lequel ledit second polymère acrylique a un indice d'acide dans la gamme comprise entre 0 et 150 ;
(d) éventuellement un premier composé choisi parmi les polyalkylsiloxane-diols, les polyéther-diols fluorés, les polyester-diols fluorés, et les mélanges de ceux-ci, ledit premier composé ayant une masse équivalente d'hydroxyle dans la gamme comprise entre 200 et 2000 ;
(e) éventuellement un second composé choisi entre les diols et les polyols dans lequel ledit second composé a éventuellement un ou plusieurs groupes fonctionnels carboxyl pendants ;
(f) de l'eau ;
(g) éventuellement, un agent tensioactif ; et
(h) éventuellement un solvant organique de coalescence en une quantité de 10% en poids au maximum sur la base du poids total de A ; dans lequel au moins un de (a) ou (d) est présent, à condition que lorsque (d) est absent, alors (a) doit contenir un ou des segments (ii) ;

dans laquelle (a) à (e) sont solubles à l'eau et/ou émulsionnables à l'eau et/ou dispersibles à l'eau ;
et dans laquelle au maximum 35 pour cent en poids au total de segment(s) de l'élément (a) (ii) plus le ou les composés de l'élément (d) sont présents sur la base de la concentration totale en matières solides de la partie A ;
et dans laquelle la partie B est une composition soluble à l'eau et/ou émulsionnable à l'eau et/ou dispersible à l'eau qui comprend :

(1) un agent de réticulation choisi parmi les polyisocyanates, les polyisocyanates bloqués, et les mélanges de ceux-ci ; et
(2) éventuellement un solvant de coalescence en une quantité variant jusqu'à 25% en poids sur la base du poids total de la partie B ;

dans laquelle le rapport NCO : OH de la partie B sur la partie A est situé dans la gamme comprise entre 1 : 1 et 1,15 : 1.

**2.** Composition durcissable à deux composants selon la revendication 1 dans laquelle la partie A est une composition comprenant :

(a) éventuellement de 0 à 60 pour cent en poids de prépolymère d'uréthane sur la base du poids total de la partie A ;
(b) éventuellement de 0 à 65 pour cent en poids du premier polymère acrylique sur la base du poids total de la partie A ;
(c) éventuellement de 0 à 45 pour cent en poids du second polymère acrylique sur la base du poids total de la partie A ;
(d) éventuellement de 0 à 35 pour cent en poids du premier composé sur la base du poids total de la partie A ;
(e) éventuellement de 0 à 45 pour cent en poids du second composé sur la base du poids total de la partie A ;
(f) suffisamment d'eau pour que le pourcentage de matières solides de la partie A soit compris entre 15 et 65 % ;
(g) éventuellement de 0 à 3 pour cent en poids de l'agent tensioactif sur la base du poids total de la partie A ; et
(h) éventuellement de 0 à 10 pour cent en poids du solvant organique de coalescence sur la base du poids total de la partie A ; et la partie B est une composition qui comprend :

(1) de 75 à 100 pour cent en poids d'un agent de réticulation sur la base du poids total de la partie B ; et
(2) éventuellement de 0 à 25 pour cent en poids d'un solvant de coalescence sur la base du poids total de la partie B.

**3.** Polyuréthane réticulé ayant des groupes fonctionnels acide carboxylique pendants ayant une densité de réticulation comprise entre 10 et 80 %, un module de conservation de $8,0 \times 10^7$ à $5,0 \times 10^9$ Pascal à 25°C, une température de transition vitreuse de -20°C à 100°C, et un facteur d'amortissement dans la région de transition vitreuse supérieur à 0,4, qu'on peut obtenir en durcissant une composition durcissable à deux composants selon la revendication 1 ou 2, dans lequel ledit facteur d'amortissement est mesuré par un analyseur thermomécanique dynamique sur la base d'une épaisseur de film de 25-50 micromètres et d'une fréquence de 1 Hz, ladite densité de réticulation étant calculée selon la formule suivante

$$\text{Densité de réticulation} = \frac{\text{masse de matière à partir de laquelle le polyuréthane est formé ayant une fonctionnalité} \geq 3}{\text{masse du polyuréthane durci final}} \times 100,$$

ledit module de conservation étant mesuré par un analyseur thermomécanique dynamique sur la base d'une épaisseur de film de 20-50 micromètres et d'une fréquence de 1,0 Hz.

**4.** Prépolymère de polyuréthane utile dans la partie A de la composition selon la revendication 1, comprenant le produit de réaction de :

(a) un diisocyanate ;
(b) un diol à fonctionnalité carboxyle ayant une masse équivalente d'hydroxyle dans la gamme variant jusqu'à 2000 et un nombre suffisant de groupes carboxyle tel que ledit diol ait un indice d'acide dans la gamme comprise entre 20 et 420 ;
(c) un premier composé choisi parmi les polyalkylsiloxane-diols, les polyéther-diols fluorés, les polyester-diols fluorés, et les mélanges de ceux-ci, ledit premier composé ayant une masse équivalente d'hydroxyle dans la gamme située entre 200 et 2000 ; et
(d) éventuellement un diol polymérique ayant une masse équivalente comprise entre 400 et 4000 ;
(e) éventuellement un extenseur de chaîne choisi parmi les extenseurs de chaîne diol, les extenseurs de chaînes triol, et leurs mélanges ;

dans lequel de 0 à 15 pour cent en poids d'extenseur de chaîne triol est présent sur la base du poids total du prépolymère ;
et dans lequel le rapport NCO : OH des composants a partir desquels le prépolymère est fabriqué est situé dans la gamme comprise entre 1 : 1,3 et 1 : 1,9.

**5.** Un prépolymère d'uréthane ayant

(a) un nombre suffisant de groupes fonctionnels acide carboxylique tel que l'indice d'acide du prépolymère soit situé dans la gamme comprise entre 10 et 100 ;
(b) un ou des segments choisis parmi le ou les segments polyalkylsiloxane-diol, le ou les segments polyéther-diol fluorés, le ou les segments polyester-diol fluorés, et leurs combinaisons ;
(c) une fonctionnalité hydroxyle moyenne du prépolymère de 1,85 à 2,7 ; et
(d) une masse équivalente d'hydroxyle du prépolymère dans la gamme comprise entre 500 et 5000.

**6.** Procédé de fabrication d'un polyuréthane durci comprenant les étapes consistant:

(I) à combiner une partie A et une partie B selon la revendication 1 pour former un mélange dans lequel l'agent de réticulation dans la partie B est choisi parmi les polyisocyanates et leurs mélanges ;
(II) à déposer le mélange sur un substrat ;
(III) à exposer le substrat revêtu à une température suffisamment élevée pour évaporer au moins 90 % en poids de l'eau présente dans le mélange mais suffisamment basse de manière à ne pas initier de réaction entre l'eau et les groupes isocyanate présents dans le polyisocyanate ;
(IV) à durcir le revêtement par une étape choisie entre

(1) exposer le substrat revêtu à une température suffisamment élevée pour durcir le revêtement mais pas trop élevée pour de pas dégrader le substrat pendant le durcissement du revêtement;
(2) exposer le substrat revêtu à une température suffisante pour durcir partiellement le revêtement à l'état non collant mais sans dégrader le substrat, suivi par une exposition à une température plus basse à

laquelle le revêtement peut encore être durci jusqu'à la fin du durcissement.

**7.** Procédé selon la revendication 6 dans lequel l'agent de réticulation polyisocyanate est aliphatique.

**8.** Procédé de fabrication d'un polyuréthane durci comprenant les étapes consistant :

(I) à combiner une partie A et une partie B selon la revendication 1 pour former un mélange dans lequel l'agent de réticulation dans la partie B est choisi parmi les polyisocyanates bloqués et leurs mélanges ;
(II) à déposer le mélange sur un substrat ;
(III) à exposer le substrat revêtu à une température suffisante pour débloquer le polyisocyanate bloqué sans dégrader le substrat ; et
(IV) à exposer le substrat revêtu à une température suffisante pour provoquer le durcissement du revêtement sans dégrader le substrat jusqu'à ce que le revêtement soit durci.

**9.** Procédé de fabrication d'un polyuréthane durci comprenant les étapes consistant :

(I) à combiner une partie A et une partie B selon la revendication 1 pour former un mélange dans lequel l'agent de réticulation dans la partie B est choisi parmi les polyisocyanates bloqués et leurs mélanges ;
(II) à déposer le mélange sur un substrat
(III) à exposer le substrat revêtu à une température suffisamment élevée pour évaporer au moins 90 % en poids de l'eau présente dans le mélange mais trop basse pour débloquer l'agent de réticulation polyisocyanate bloqué ; et
(IV) à exposer le substrat revêtu à une température suffisante pour débloquer l'agent de réticulation polyisocyanate bloqué et durcir le revêtement sans dégrader le substrat jusqu'à ce que le revêtement soit durci.

**10.** Procédé selon l'une quelconque des revendications 6 à 9, dans lequel le rapport NCO : OH est compris entre 1 : 1 et 1,1 : 1.

**11.** Composant pour une composition durcissable comprenant :

(a) éventuellement un prépolymère d'uréthane, dans lequel ledit prépolymère a :

(i) un nombre suffisant de groupes fonctionnels acide carboxylique tel que l'indice d'acide du prépolymère soit situé dans la gamme comprise entre 10 et 100 ;
(ii) éventuellement un ou des segments choisis parmi le ou les segments de polyalkylsiloxane-diol, le ou les segments de polyéther-diol fluorés, le ou les segments de polyester-diol fluorés, et leurs combinaisons ;
(iii) une fonctionnalité hydroxyle moyenne du prépolymère de 1,85 à 2,7 ;
(iv) une masse équivalente d'hydroxyle du prépolymère dans la gamme comprise entre 500 et 5000 ;

(b) éventuellement un premier polymère acrylique ayant au moins un groupe fonctionnel hydroxyle et éventuellement 1 ou plusieurs groupes fonctionnels carboxyle tels que ledit premier polymère acrylique ait un indice d'acide dans la gamme comprise entre 0 et 150 ;
(c) éventuellement un second polymère acrylique sans fonctionnalité hydroxyle et ayant éventuellement 1 ou plusieurs groupes fonctionnels carboxyle, dans lequel ledit second polymère acrylique a un indice d'acide dans la gamme comprise entre 0 et 150 ;
(d) éventuellement un premier composé choisi parmi les polyalkylsiloxane-diols, les polyéther-diols fluorés, les polyester-diols fluorés, et leurs mélanges, ledit premier composé ayant une masse équivalente d'hydroxyle dans la gamme comprise entre 200 et 2000 ;
(e) éventuellement un second composé choisi parmi les diols et polyols dans lesquels ledit second composé a éventuellement un ou plusieurs groupes fonctionnels carboxyle pendants ;
(f) de l'eau ;
(g) éventuellement un agent tensioactif ;
(h) éventuellement un solvant organique de coalescence en une quantité variant jusqu'à 10 % en poids sur la base du poids total du composant ;

dans lequel au moins un de (a) ou (d) est présent, à condition que lorsque (d) est absent, alors il faut que (a) contienne un ou des segments (ii) ;

dans lequel (a) à (e) sont solubles à l'eau et/ou émulsionnables à l'eau et/ou dispersibles à l'eau ; et
dans lequel pas plus de 35 pour cent en poids du ou des segments de l'élément (a) (ii) plus un ou des composés de l'élément (d) sont présents sur la base de la teneur totale en matières solides du composant.

**12.** Composition durcissable à deux composants ayant une partie A et une partie B dans laquelle la partie A est une composition non aqueuse comprenant :

(a) éventuellement un prépolymère d'uréthane dans lequel ledit prépolymère a :

(i) éventuellement des groupes fonctionnels acide carboxylique tels que l'indice d'acide du prépolymère soit situé dans la gamme comprise entre 0 et 100 ;
(ii) éventuellement un ou des segments choisis parmi le ou les segments de polyalkylsiloxane-diol, le ou les segments de polyéther-diol fluorés, le ou les segments de polyester-diol fluorés, et leurs combinaisons ;
(iii) une fonctionnalité hydroxyle moyenne du prépolymère de 1,85 à 2,7 ;
(iv) une masse équivalente d'hydroxyle du prépolymère dans la gamme comprise entre 500 et 5000 ;

(b) éventuellement un premier polymère acrylique ayant au moins un groupe fonctionnel hydroxyle et éventuellement 1 ou plusieurs groupes fonctionnels carboxyle tels que ledit premier polymère acrylique ait un indice d'acide dans la gamme comprise entre 0 et 150
(c) éventuellement un second polymère acrylique sans fonctionnalité hydroxyle et ayant éventuellement 1 ou plusieurs groupes fonctionnels carboxyle, dans lequel ledit second polymère acrylique a un indice d'acide dans la gamme comprise entre 0 et 150
(d) éventuellement un premier composé choisi parmi les polyalkylsiloxane-diols, les polyéther-diols fluorés, les polyester-diols fluorés, et leurs mélanges, ledit premier composé ayant une masse équivalente d'hydroxyle dans la gamme comprise entre 200 et 2000 ;
(e) éventuellement un second composé choisi parmi les diols et polyols dans lesquels ledit second composé a éventuellement un ou plusieurs groupes fonctionnels carboxyle pendants ;
(f) éventuellement un agent tensioactif non ionique ;
(g) un solvant organique ; et dans lequel au moins un des éléments suivants est présent : un élément (a) ayant un segment (ii) ; un élément (d) ;

dans lequel (a) à (e) sont solubles dans les solvants organiques et/ou dispersibles dans les solvants organiques ; et dans laquelle de 2 à 35 pour cent en poids au total du ou des segments de l'élément (a) (ii) plus un ou des composés de l'élément (d) sont présents sur la base de la teneur totale en matières solides de la partie A ; et dans laquelle le partie B est une composition non aqueuse soluble dans les solvants organiques et/ou dispersible dans les solvants organiques qui comprend :

(1) un agent de réticulation choisi parmi les polyisocyanates, les polyisocyanates bloqués, et les mélanges de ceux-ci ; et
(2) éventuellement un solvant organique ;

dans laquelle le rapport NCO : OH de la partie B sur la partie A est situé dans la gamme comprise entre 0,95 : 1 et 1,07 : 1.

**13.** Composition durcissable à deux composants selon la revendication 12 dans laquelle la partie A est une composition non aqueuse comprenant :

a) éventuellement de 0 à 60 pour cent en poids de prépolymère d'uréthane sur la base du poids total de la partie A ;
(b) éventuellement de 0 à 65 pour cent en poids du premier polymère acrylique sur la base du poids total de la partie A ;
(c) éventuellement de 0 à 45 pour cent en poids du second polymère acrylique sur la base du poids total de la partie A ;
(d) éventuellement de 0 à 35 pour cent en poids du premier composé sur la base du poids total de la partie A ;
(e) éventuellement de 0 à 45 pour cent en poids du second composé sur la base du poids total de la partie A ;
(f) éventuellement de 0 à 3 pour cent en poids de l'agent tensioactif non ionique sur la base du poids total de la partie A ; et

(g) jusqu'à 70 pour cent en poids du solvant organique sur la base du poids total de la partie A ; et la partie B est une composition qui comprend :

(1) de 30 à 100 pour cent en poids d'un agent de réticulation sur la base du poids total de la partie B ; et
(2) éventuellement de 0 à 70 pour cent en poids d'un solvant organique sur la base du poids total de la partie B.

**14.** Polyuréthane réticulé préparé par le durcissement de la composition durcissable à deux composants selon l'une quelconque des revendications 12 ou 13.

**15.** Polyuréthane réticulé selon la revendication 14 qui est autocicatrisant, c'est à dire qu'un spécimen rayé ou abrasé selon la norme ASTM 2197-86 peut retourner à son aspect d'origine lorsqu'il est exposé à une température supérieure à 10°C.

**16.** Polyuréthane réticulé ayant une densité de réticulation comprise entre 10 et 80 %, un module de conservation de $8,0 \times 10^7$ à $5,0 \times 10^9$ Pascal à 25°C, une température de transition vitreuse de -20°C à 100°C, et un facteur d'amortissement dans la région de transition vitreuse supérieur à 0,4, qu'on peut obtenir en durcissant une composition durcissable à deux composants selon la revendication 12, dans lequel ledit facteur d'amortissement est mesuré par un analyseur thermomécanique dynamique sur la base d'une épaisseur de film de 25-50 micromètres et d'une fréquence de 1 Hz, ladite densité de réticulation étant calculée selon la formule suivante

$$\text{Densité de réticulation} = \frac{\text{masse de matière à partir de laquelle le polyuréthane est formé ayant une fonctionnalité} \geq 3}{\text{masse du polyuréthane durci final}} \times 100,$$

ledit module de conservation étant mesuré par un analyseur thermomécanique dynamique sur la base d'une épaisseur de film de 25-50 micromètres et d'une fréquence de 1,0 Hz.

**17.** Substrat revêtu avec le polyuréthane réticulé selon la revendication 14 ou 15.

**18.** Substrat revêtu selon la revendication 17 dans lequel le substrat est choisi parmi le bois, le métal, le verre, le tissu, la peinture, le cuir, le papier, le caoutchouc, le béton, et le plastique.

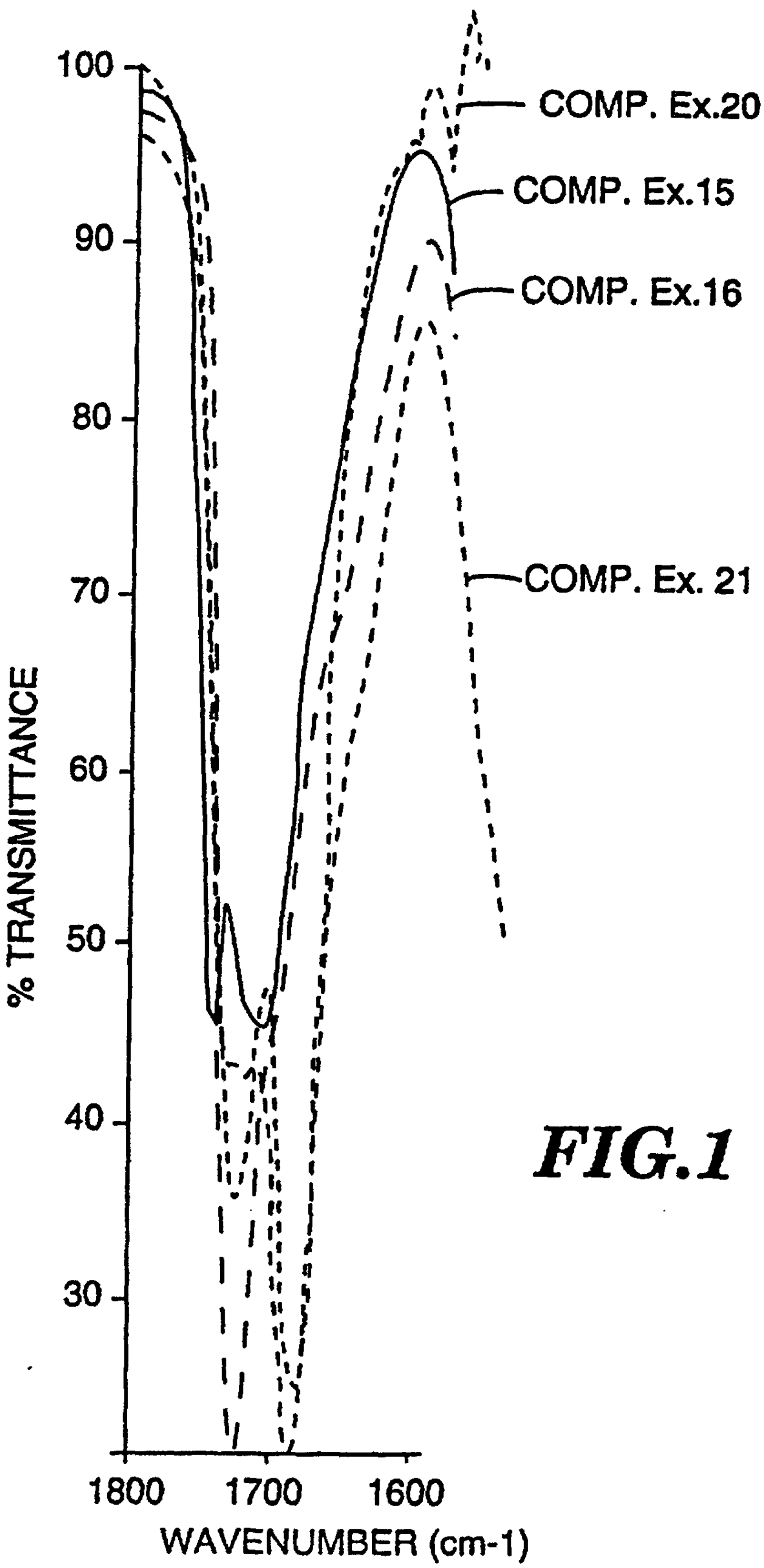
100
90
80
70
60
50
40
30
% TRANSMITTANCE
1800
1700
1600
WAVENUMBER (cm-1)
COMP. Ex.20
COMP. Ex.15
COMP. Ex.16
COMP. Ex. 21

*FIG.1*

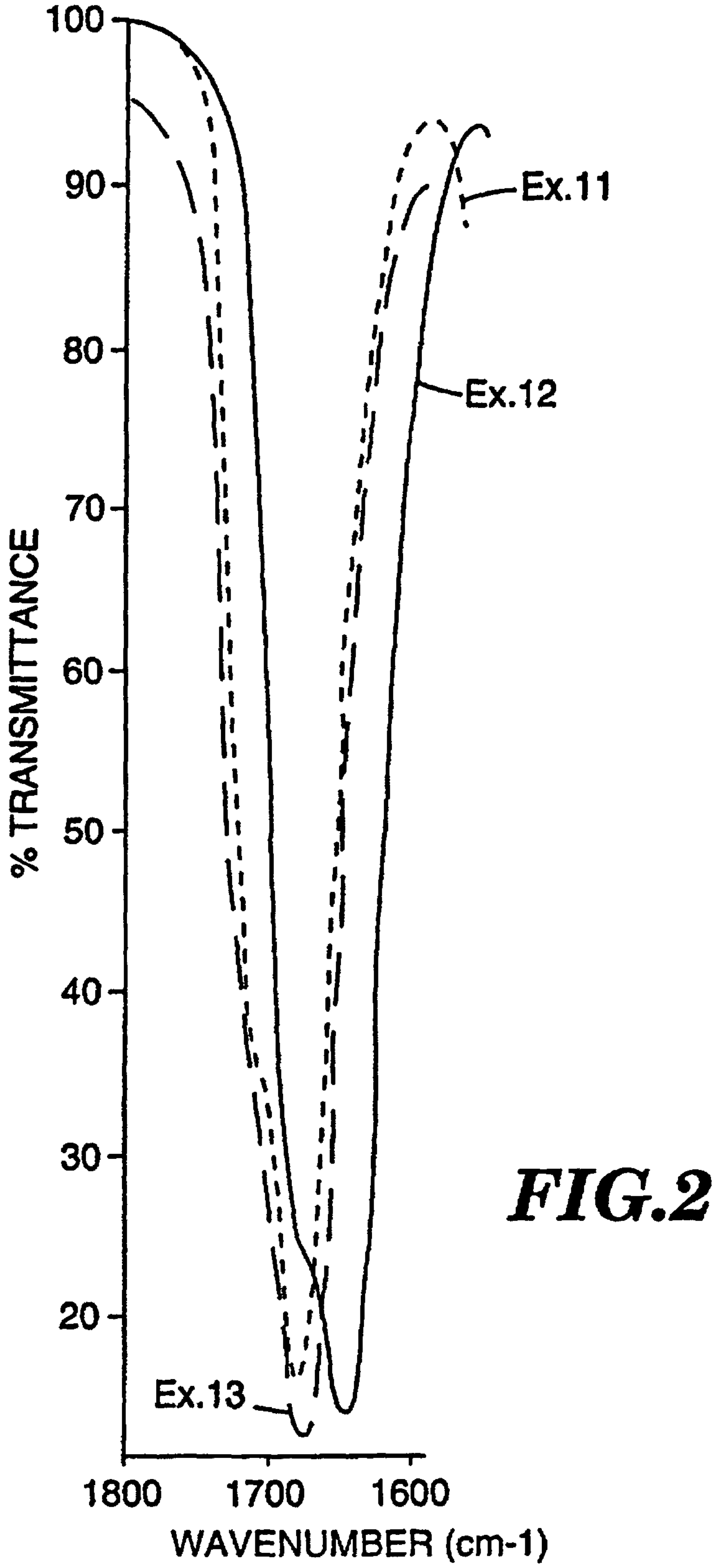
100
90
80
70
60
50
40
30
20
% TRANSMITTANCE
Ex.11
Ex.12
Ex.13
1800
1700
1600
WAVENUMBER (cm-1)

FIG.2

FIG.3

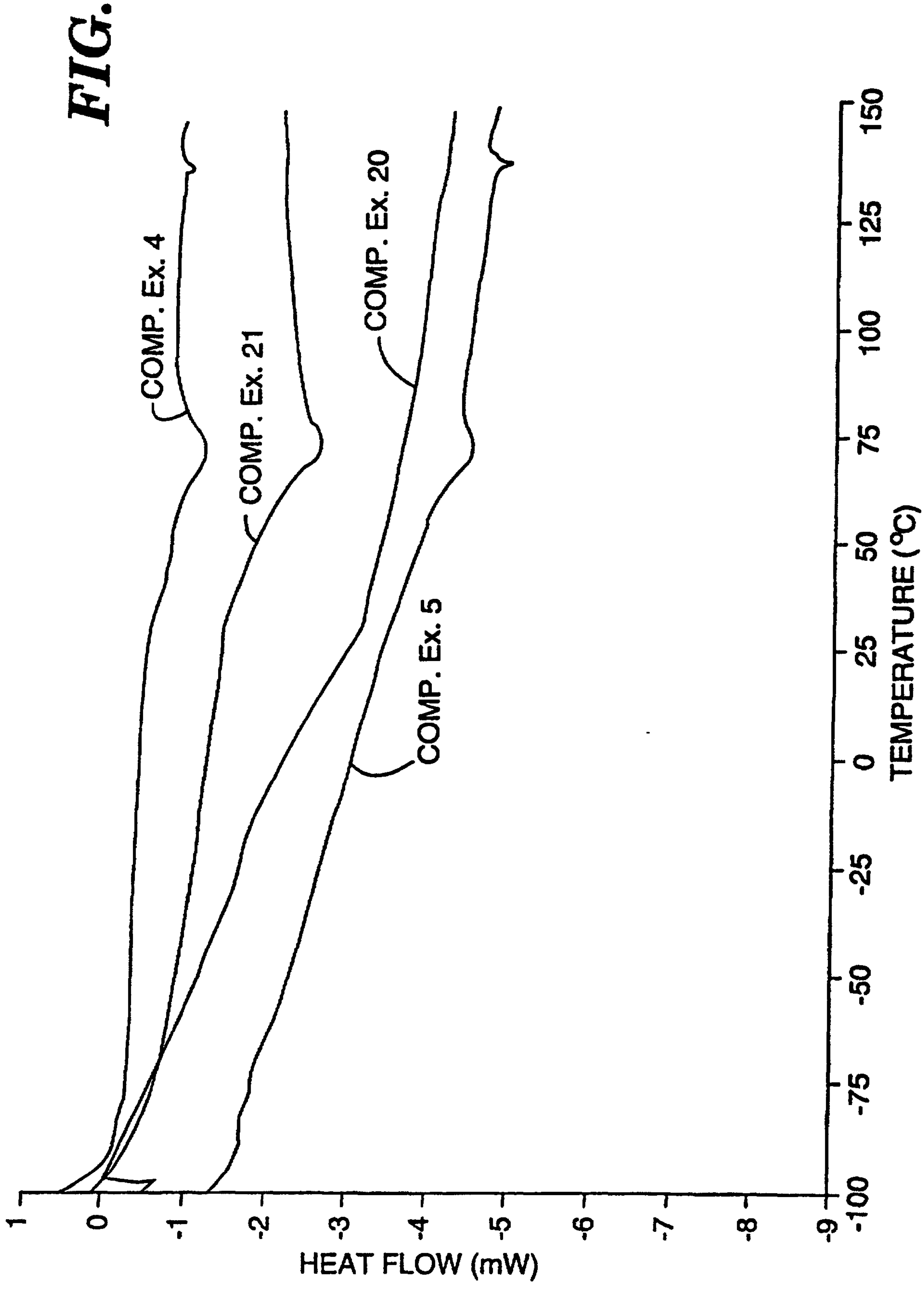
COMP. Ex. 4
COMP. Ex. 21
COMP. Ex. 20
COMP. Ex. 5
HEAT FLOW (mW)
1
0
-1
-2
-3
-4
-5
-6
-7
-8
-9
TEMPERATURE (°C)
-100
-75
-50
-25
0
25
50
75
100
125
150

FIG. 4

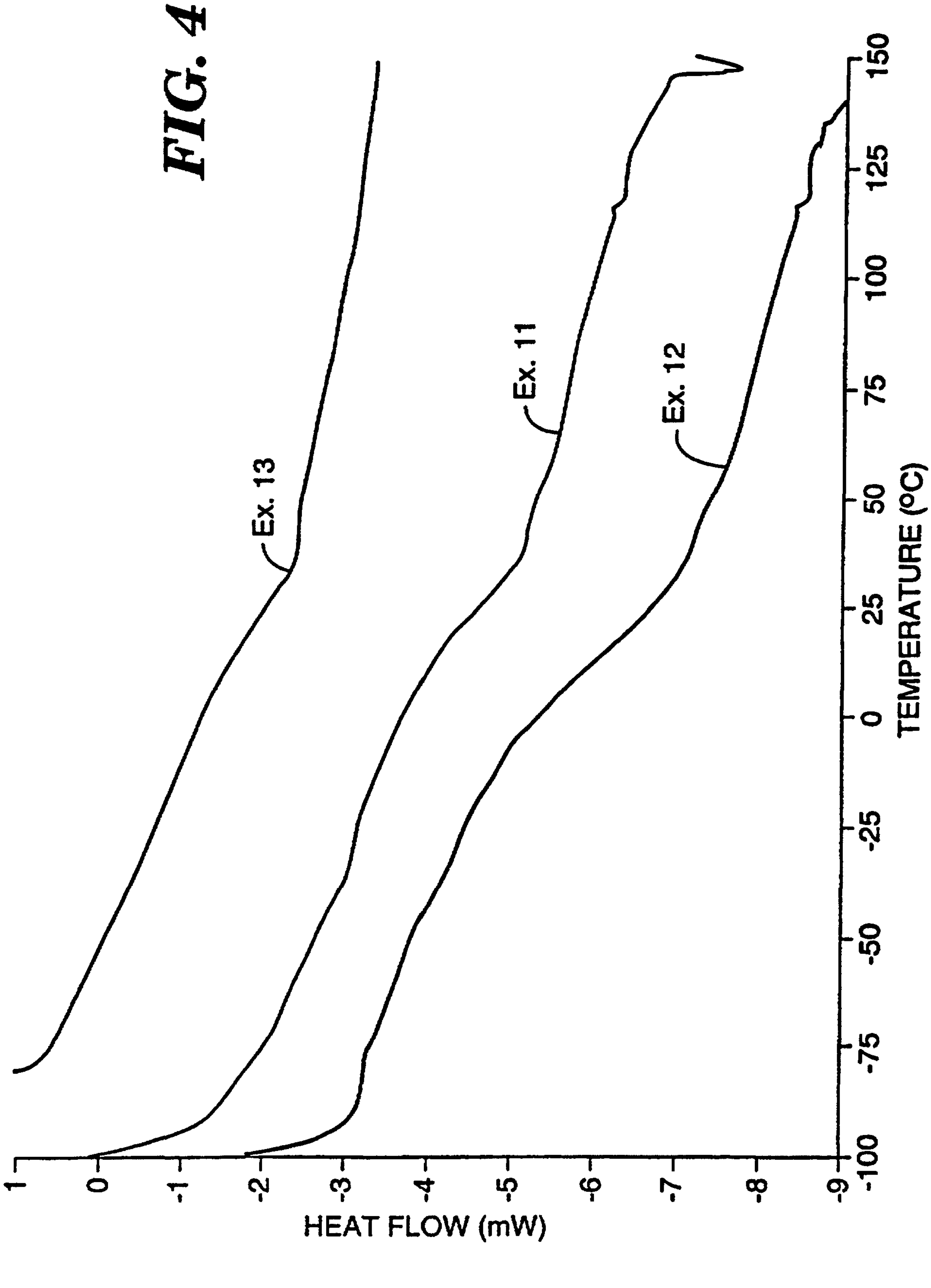
Ex. 13
Ex. 11
Ex. 12
TEMPERATURE (°C)
-100
-75
-50
-25
0
25
50
75
100
125
150
HEAT FLOW (mW)
1
0
-1
-2
-3
-4
-5
-6
-7
-8
-9

FIG.5

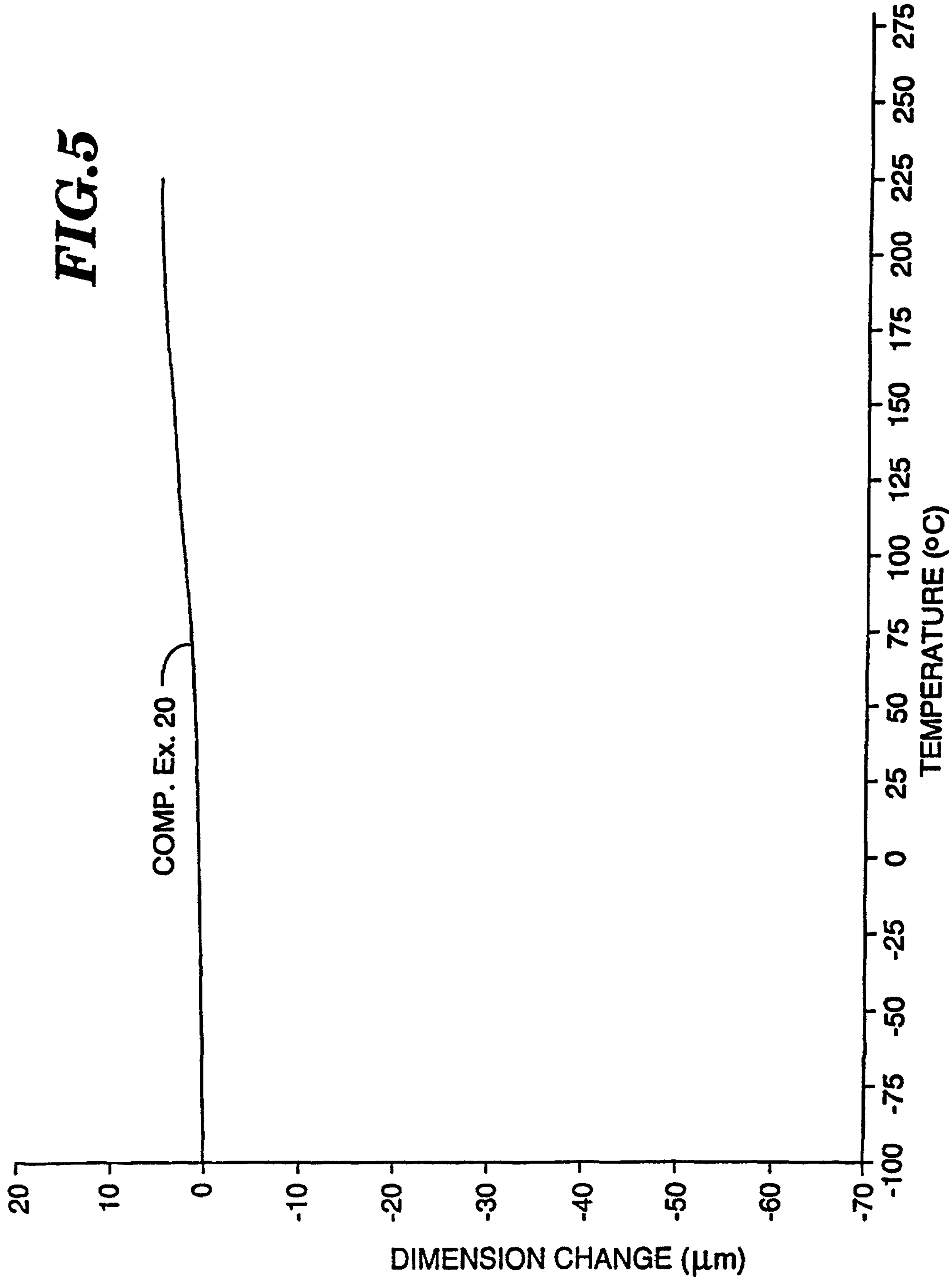
COMP. Ex. 20
TEMPERATURE (°C)
-100
-75
-50
-25
0
25
50
75
100
125
150
175
200
225
250
275
DIMENSION CHANGE (µm)
20
10
0
-10
-20
-30
-40
-50
-60
-70

FIG.6

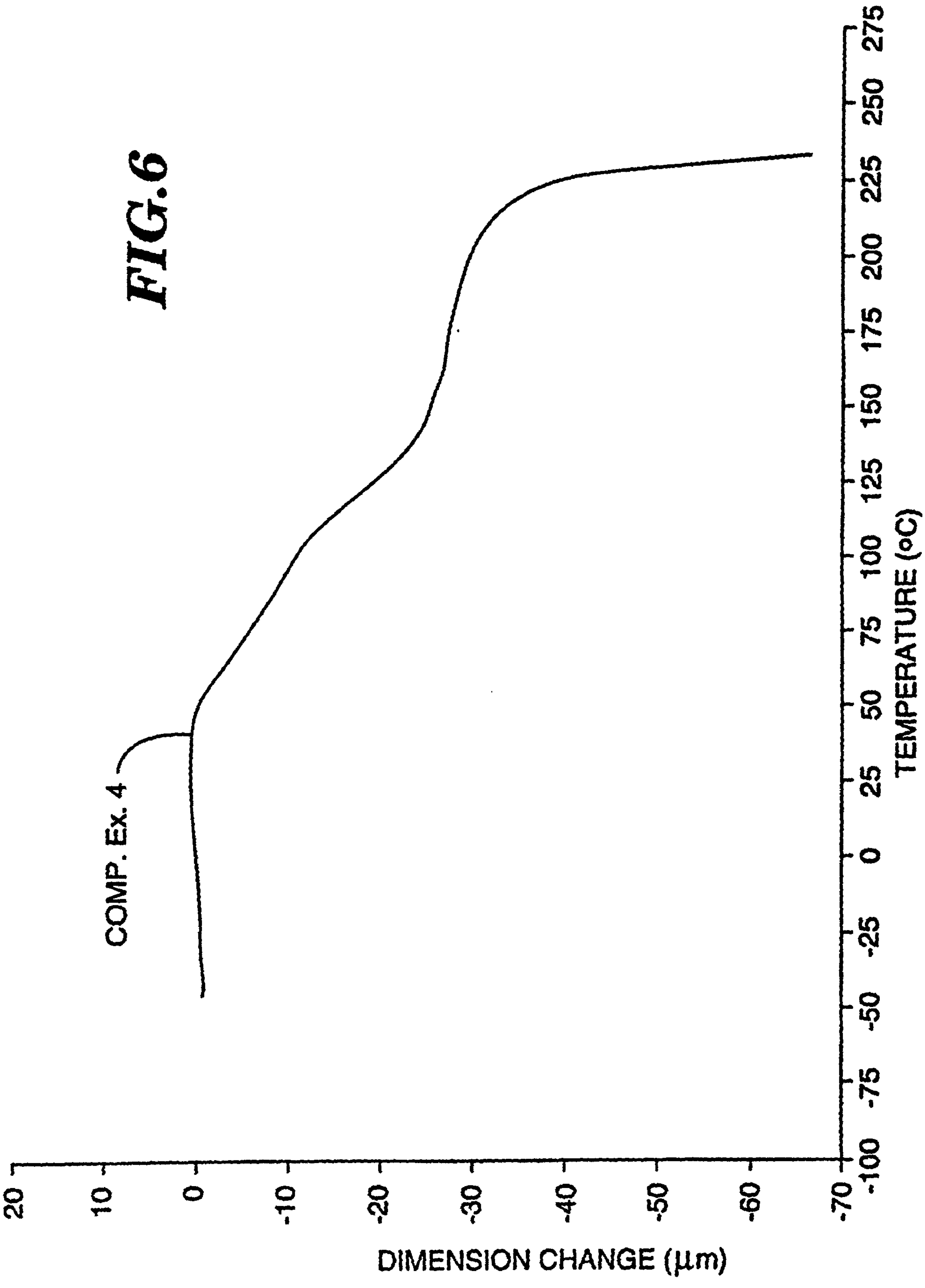
COMP. Ex. 4
TEMPERATURE (°C)
-100
-75
-50
-25
0
25
50
75
100
125
150
175
200
225
250
275
DIMENSION CHANGE (μm)
20
10
0
-10
-20
-30
-40
-50
-60
-70

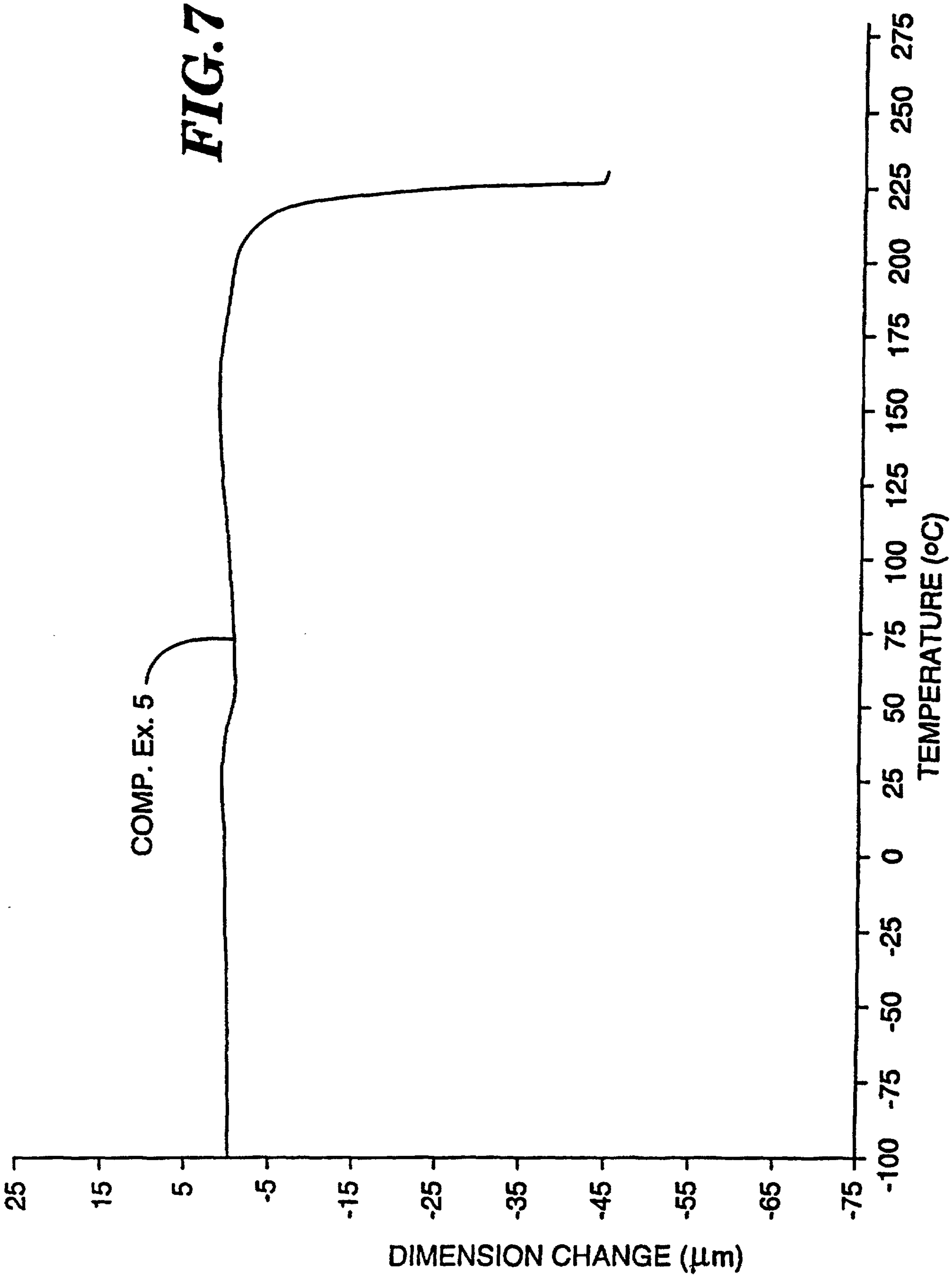
COMP. Ex. 5
TEMPERATURE (°C)
-100
-75
-50
-25
0
25
50
75
100
125
150
175
200
225
250
275
DIMENSION CHANGE (µm)
25
15
5
-5
-15
-25
-35
-45
-55
-65
-75

*FIG.7*

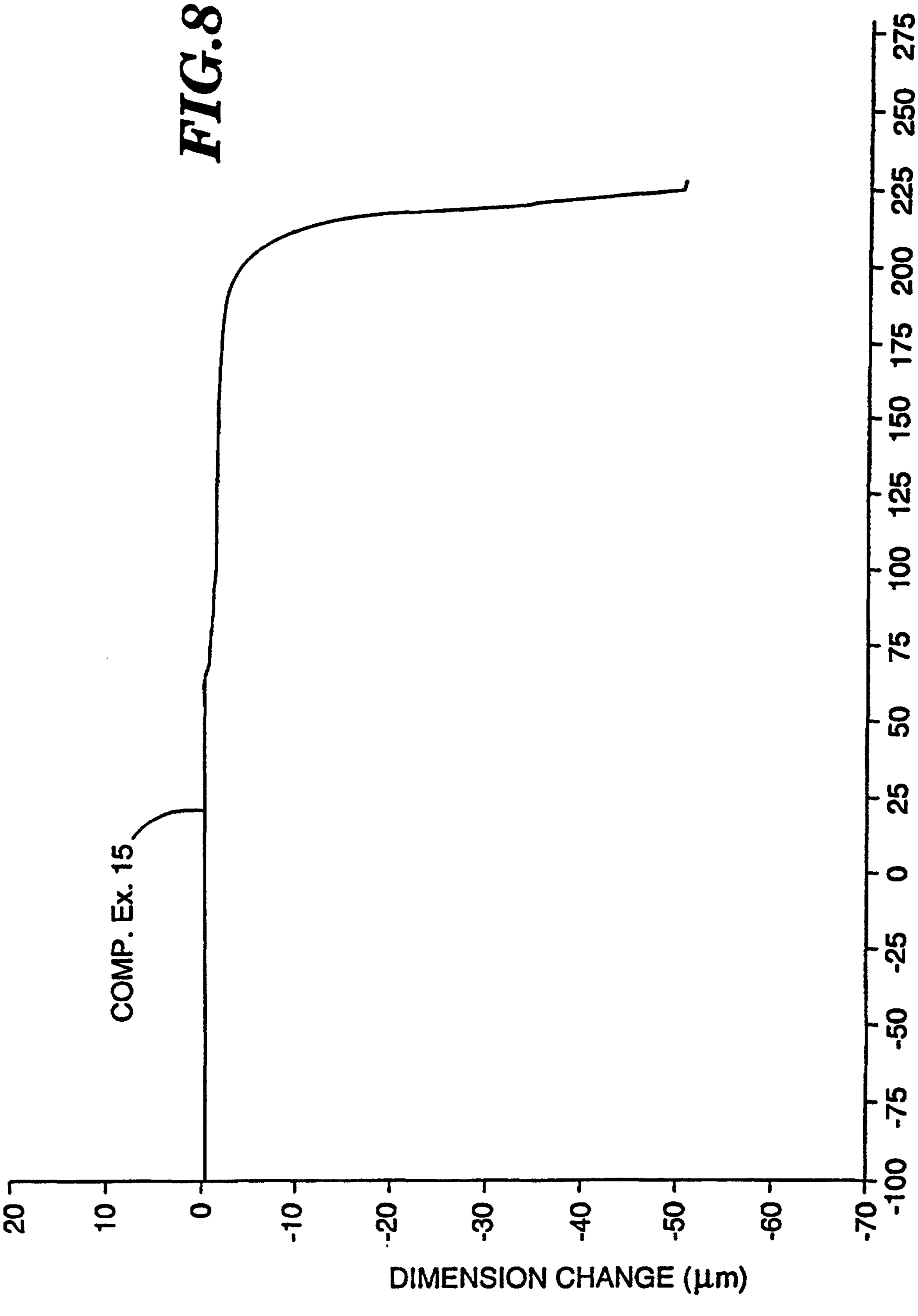
COMP. Ex. 15
TEMPERATURE (°C)
-100
-75
-50
-25
0
25
50
75
100
125
150
175
200
225
250
275
DIMENSION CHANGE (µm)
20
10
0
-10
-20
-30
-40
-50
-60
-70

FIG.8

FIG.9

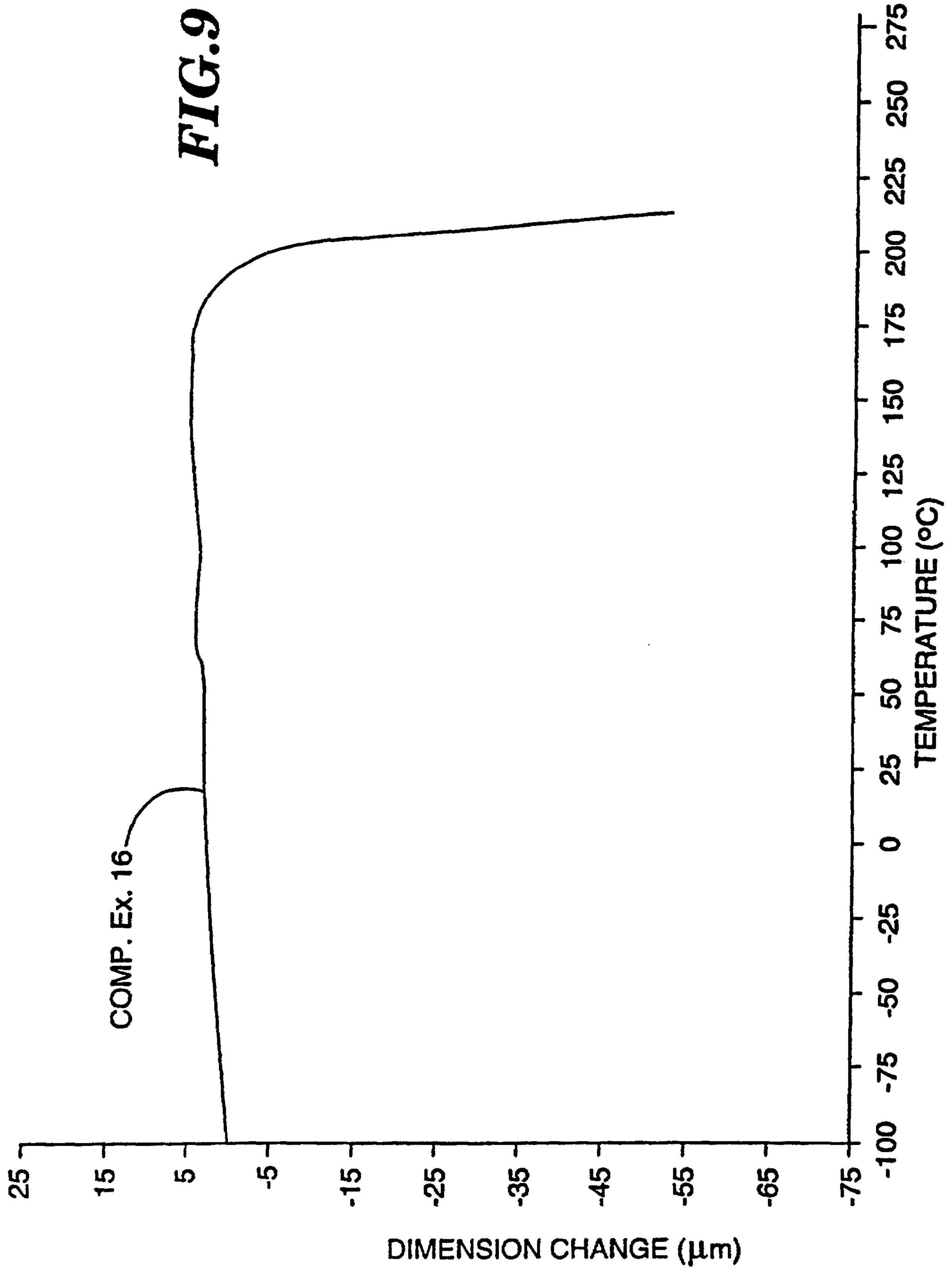
COMP. Ex. 16
DIMENSION CHANGE (µm)
25
15
5
-5
-15
-25
-35
-45
-55
-65
-75
TEMPERATURE (°C)
-100
-75
-50
-25
0
25
50
75
100
125
150
175
200
225
250
275

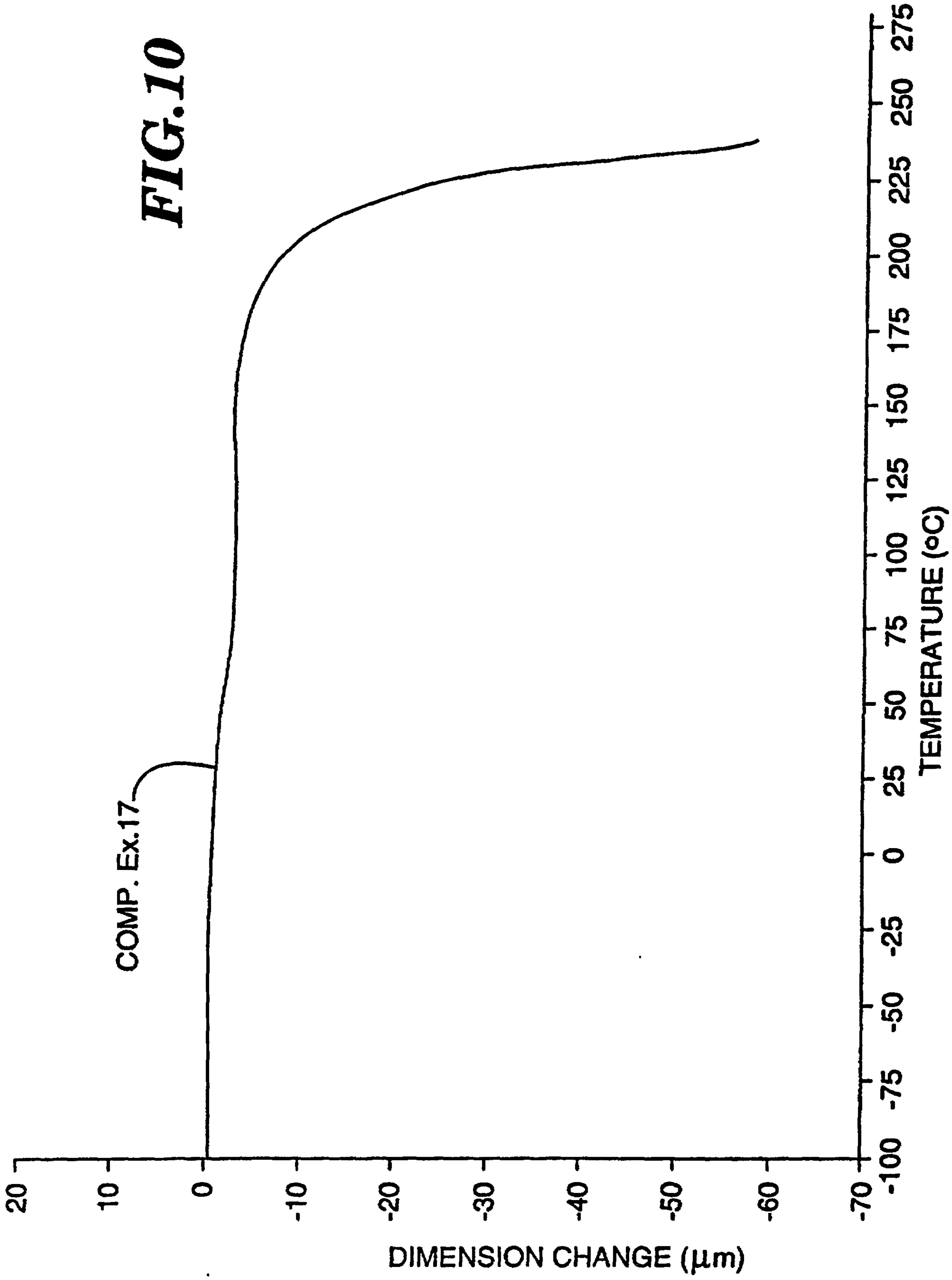
COMP. Ex.17
DIMENSION CHANGE (µm)
20
10
0
-10
-20
-30
-40
-50
-60
-70
TEMPERATURE (°C)
-100
-75
-50
-25
0
25
50
75
100
125
150
175
200
225
250
275

FIG.10

FIG.11

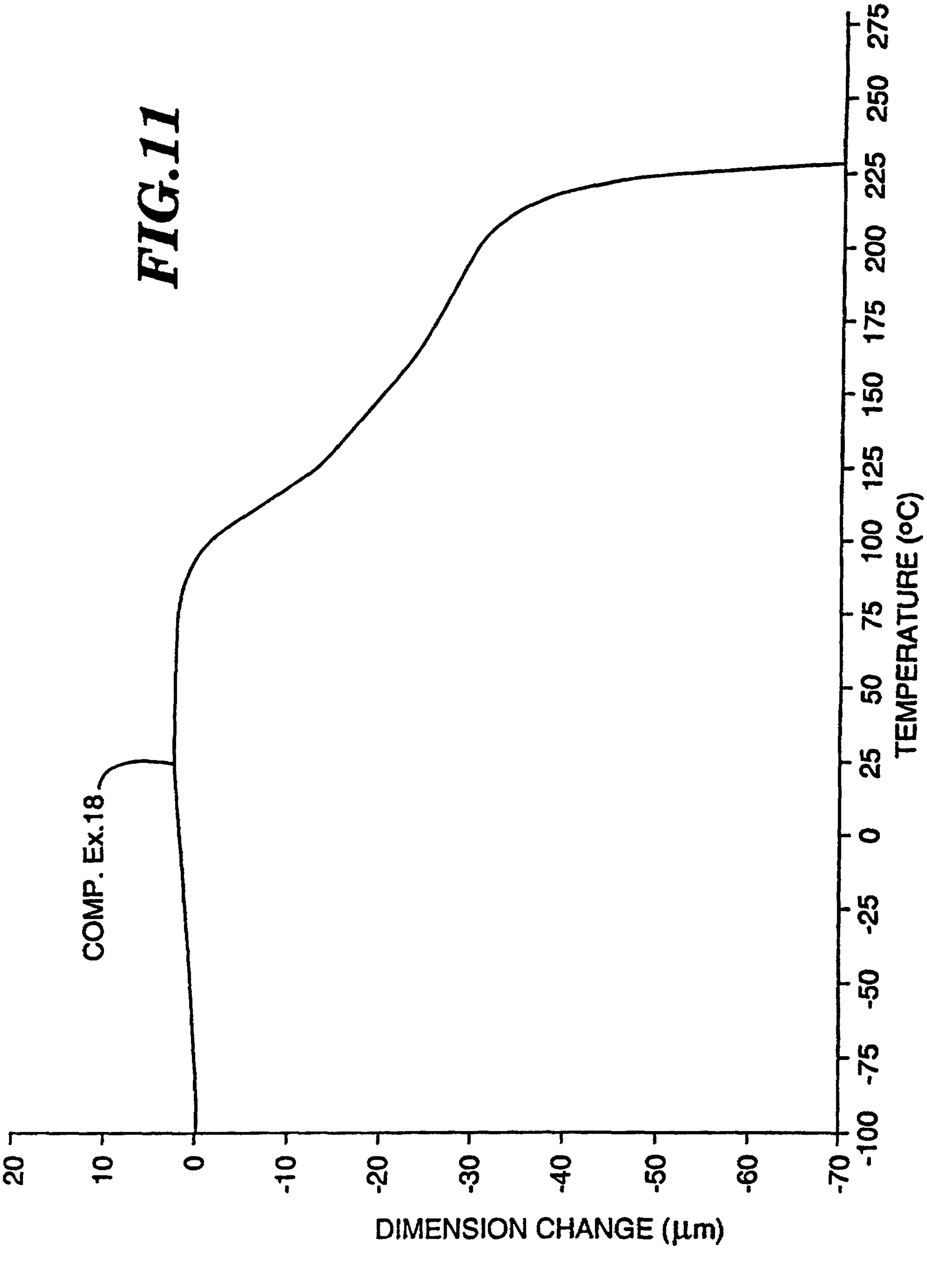
COMP. Ex.18
TEMPERATURE (°C)
-100
-75
-50
-25
0
25
50
75
100
125
150
175
200
225
250
275
DIMENSION CHANGE (µm)
20
10
0
-10
-20
-30
-40
-50
-60
-70

FIG.12

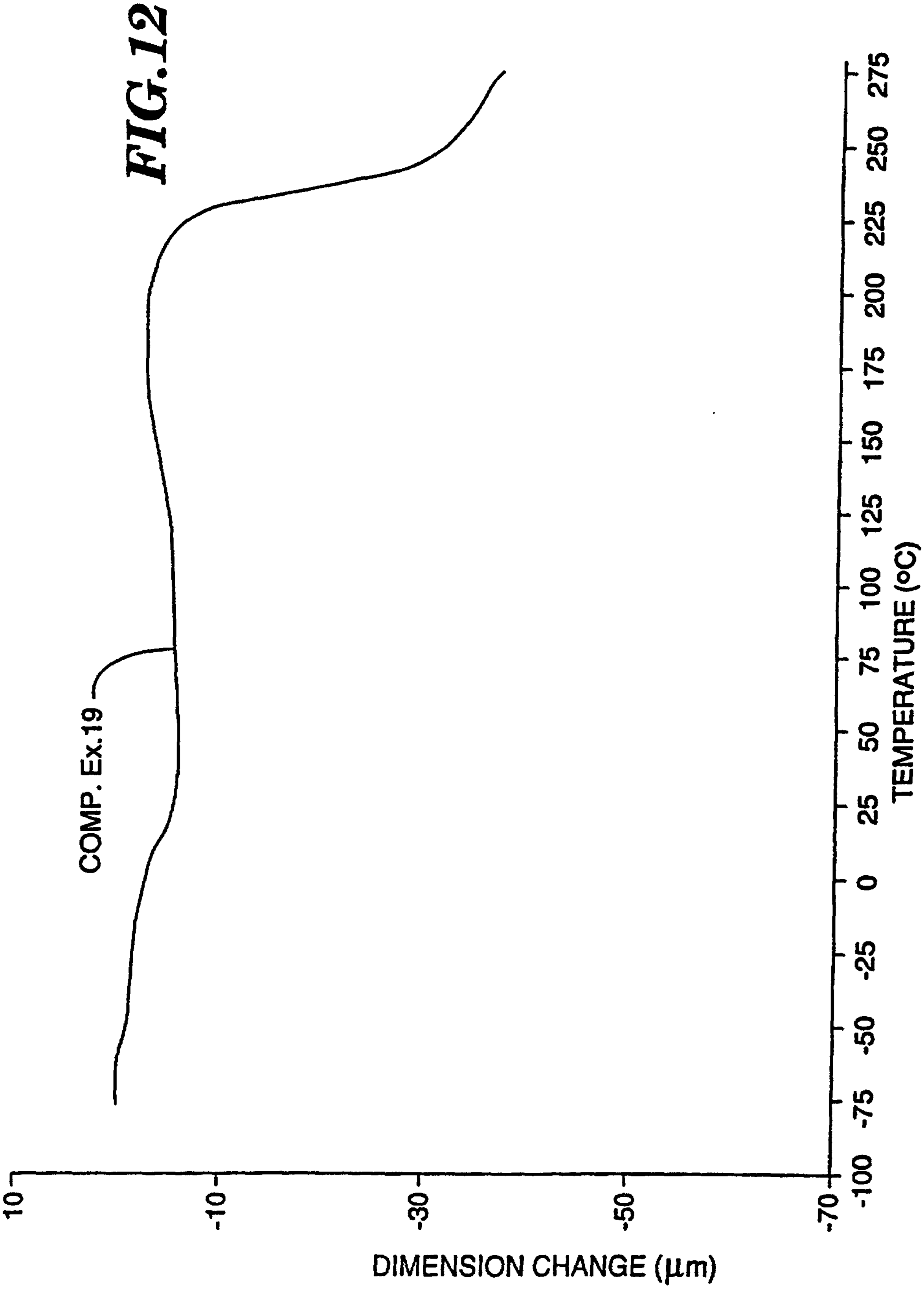
COMP. Ex.19
DIMENSION CHANGE (µm)
10
-10
-30
-50
-70
TEMPERATURE (°C)
-100
-75
-50
-25
0
25
50
75
100
125
150
175
200
225
250
275

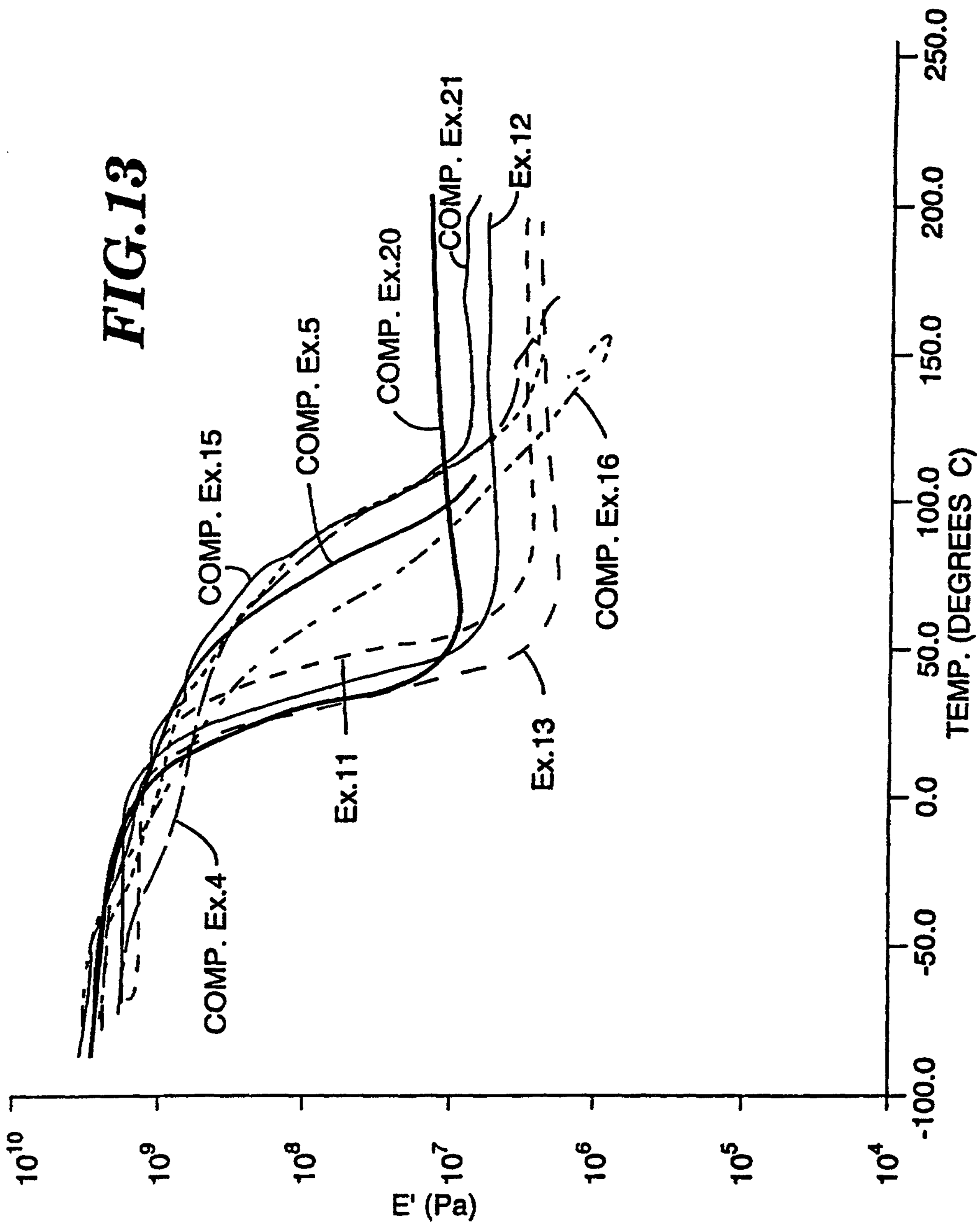
COMP. Ex.15
COMP. Ex.5
COMP. Ex.20
COMP. Ex.21
Ex.12
COMP. Ex.4
Ex.11
Ex.13
COMP. Ex.16
$10^{10}$
$10^{9}$
$10^{8}$
$10^{7}$
$10^{6}$
$10^{5}$
$10^{4}$
E' (Pa)
-100.0
-50.0
0.0
50.0
100.0
150.0
200.0
250.0
TEMP. (DEGREES C)

FIG.13

FIG.14

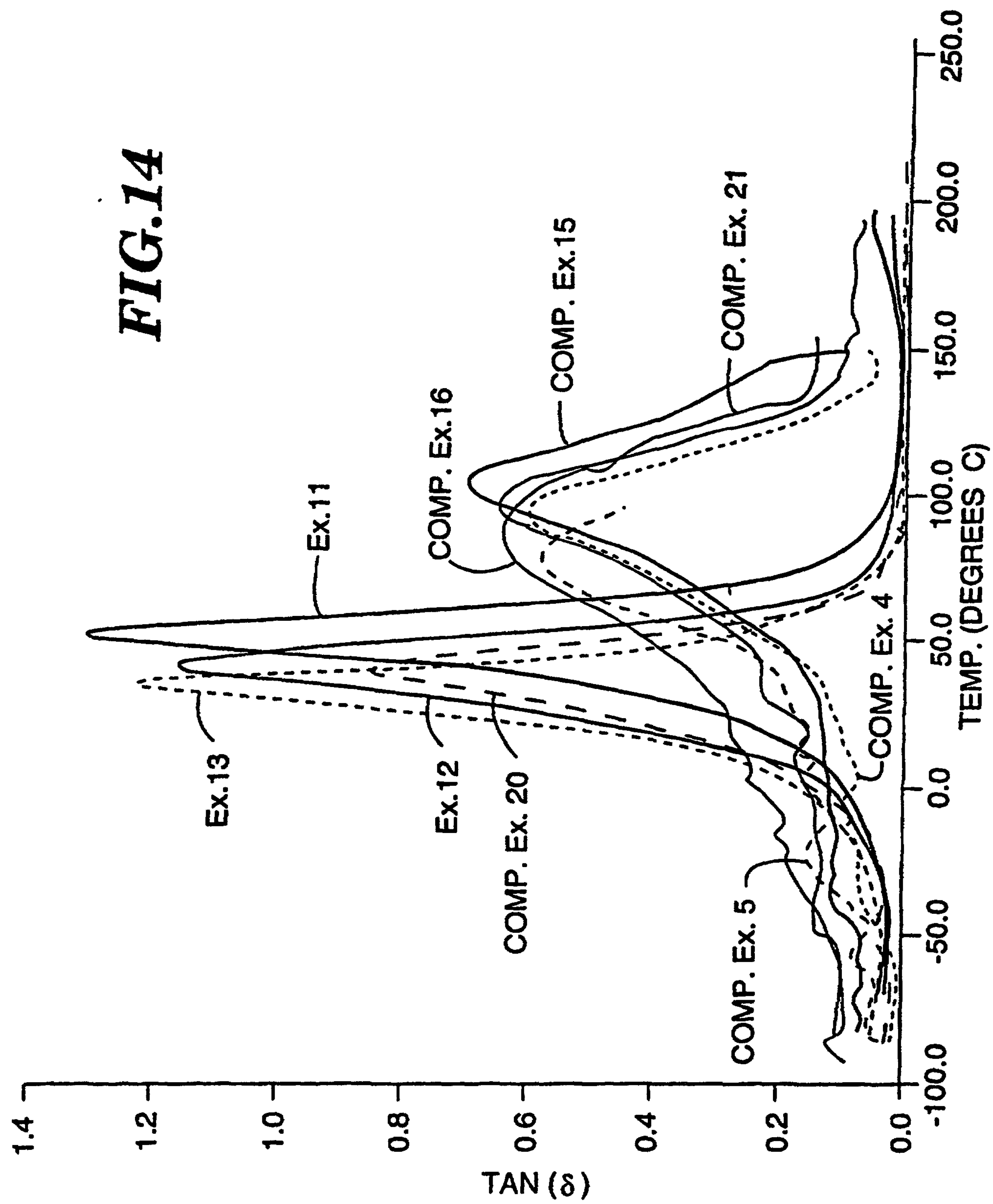
TAN (δ)
1.4
1.2
1.0
0.8
0.6
0.4
0.2
0.0
-100.0
-50.0
0.0
50.0
100.0
150.0
200.0
250.0
TEMP. (DEGREES C)
Ex.11
Ex.12
Ex.13
COMP. Ex.16
COMP. Ex.15
COMP. Ex. 21
COMP. Ex. 20
COMP. Ex. 4
COMP. Ex. 5

FIG.15

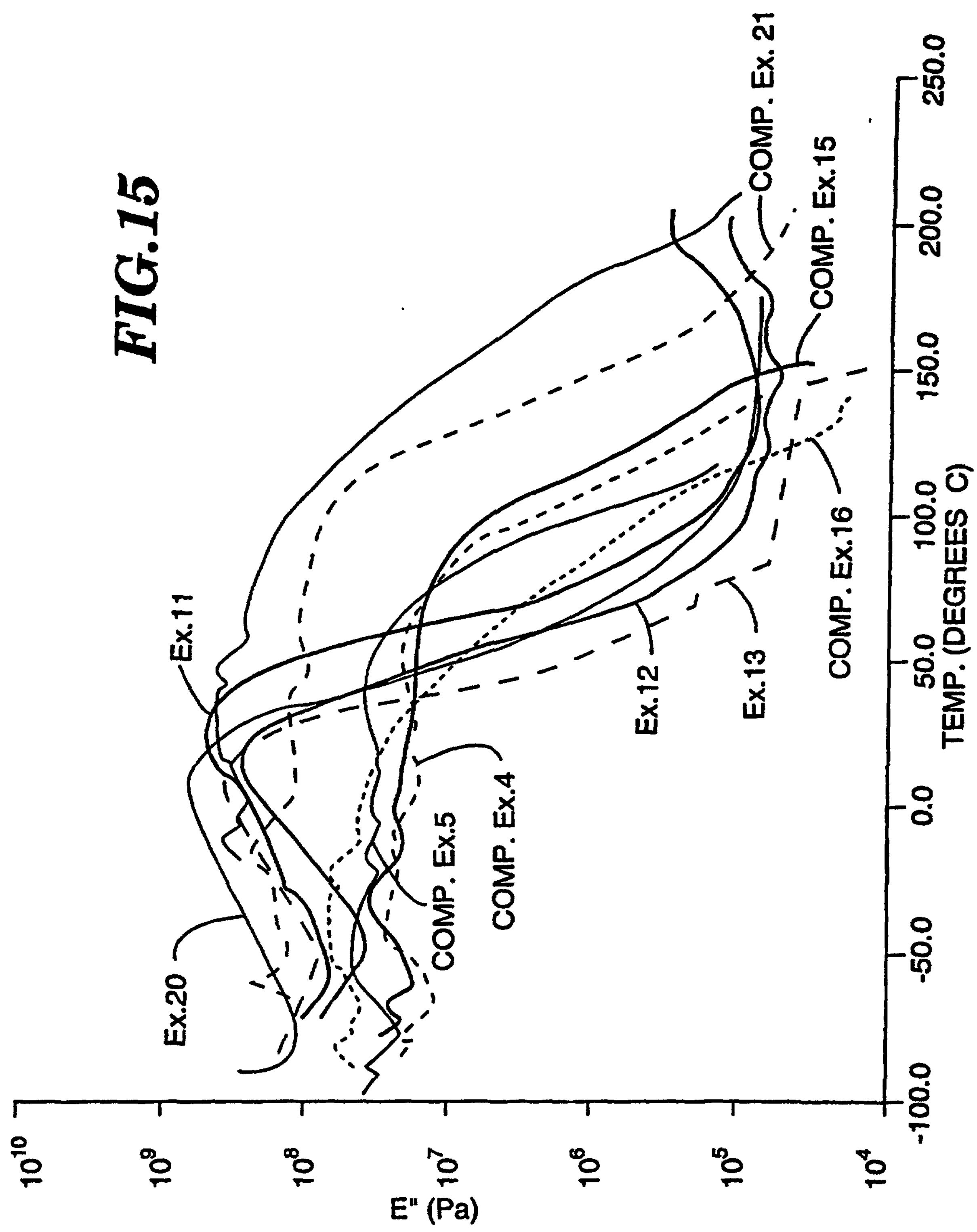
E" (Pa)
$10^{10}$
$10^{9}$
$10^{8}$
$10^{7}$
$10^{6}$
$10^{5}$
$10^{4}$
TEMP. (DEGREES C)
-100.0
-50.0
0.0
50.0
100.0
150.0
200.0
250.0
Ex.11
Ex.20
Ex.12
Ex.13
COMP. Ex.5
COMP. Ex.4
COMP. Ex.16
COMP. Ex.15
COMP. Ex. 21

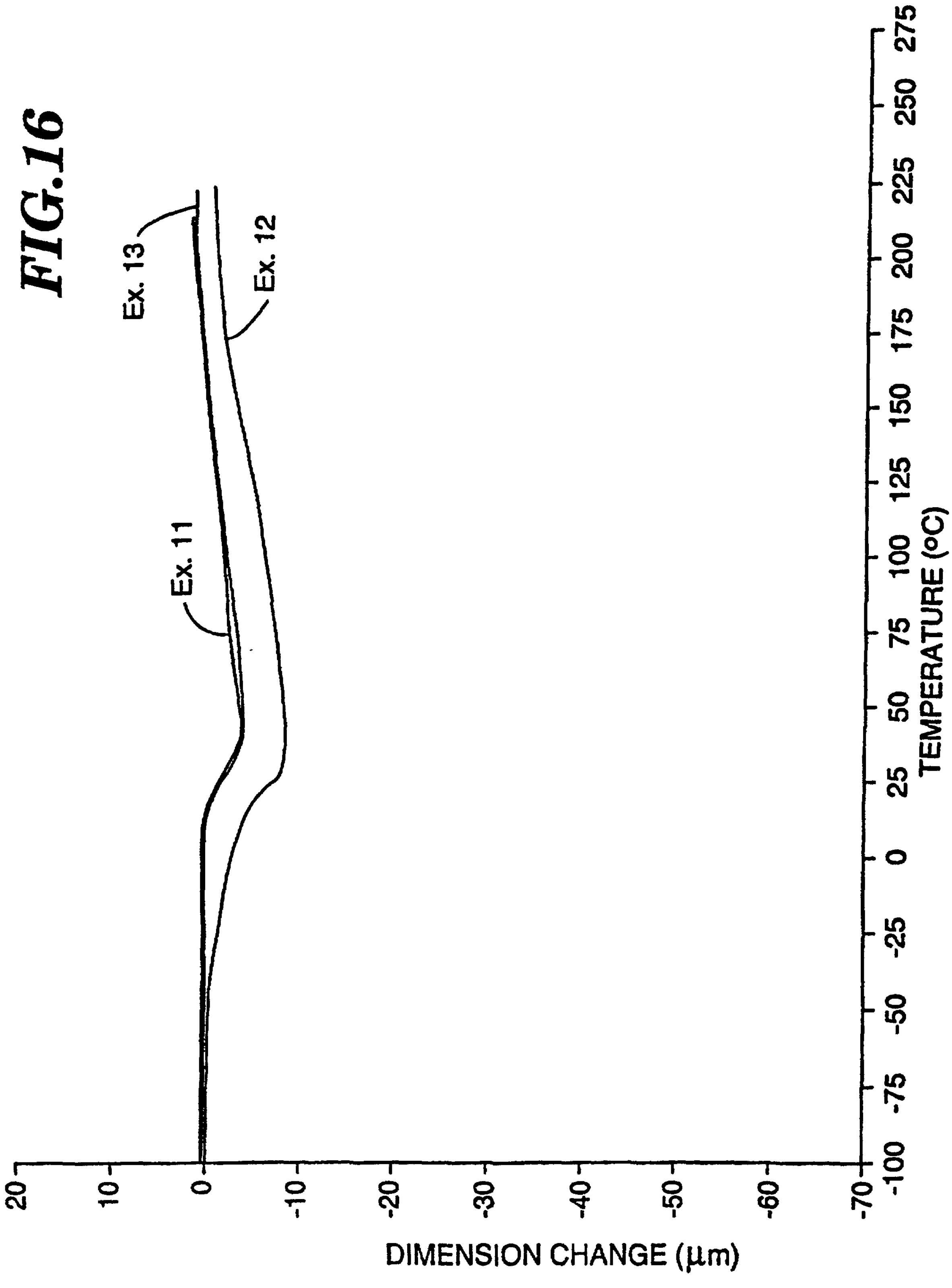
Ex. 13
Ex. 12
Ex. 11
20
10
0
-10
-20
-30
-40
-50
-60
-70
DIMENSION CHANGE (µm)
-100
-75
-50
-25
0
25
50
75
100
125
150
175
200
225
250
275
TEMPERATURE (ºC)

*FIG.16*

FIG.17

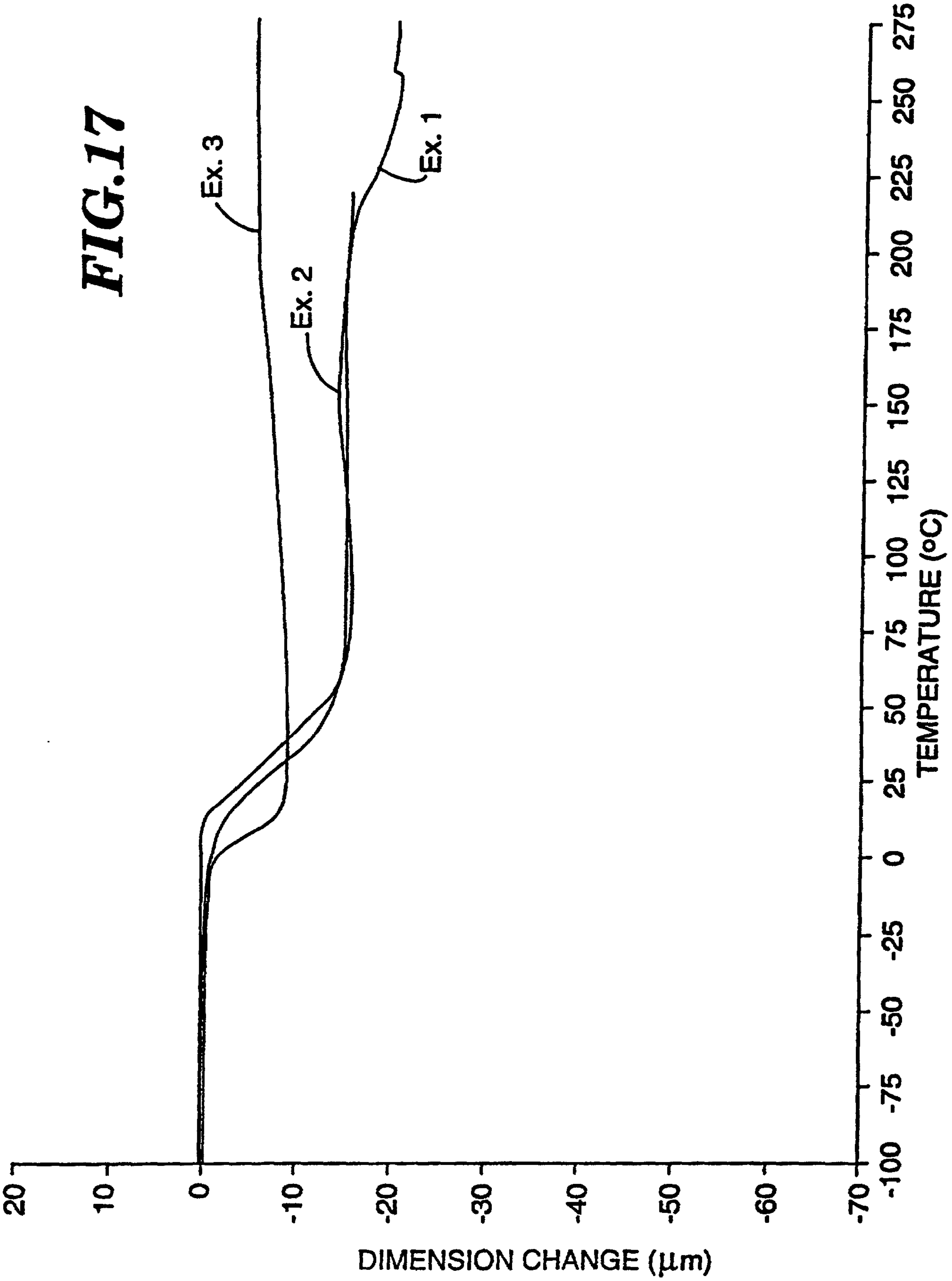
Ex. 1
Ex. 2
Ex. 3
TEMPERATURE (°C)
DIMENSION CHANGE (µm)
-100
-75
-50
-25
0
25
50
75
100
125
150
175
200
225
250
275
20
10
0
-10
-20
-30
-40
-50
-60
-70